# EUROPEAN PATENT APPLICATION

(11) **EP 4 845 135 A1**
(43) Date of publication of application: **25.11.2026**
(21) Application number: 26179524.9
(22) Date of filing: 19.05.2026
(51) Int. Cl.: H04M 1/72469, H04M 1/57, H04M 1/663, H04M 1/72484

(54) **METHODS, SYSTEMS, AND USER INTERFACES FOR MANAGING COMMUNICATION USING A COMPUTER SYSTEM**

(30) Priority: 19.05.2025 US 202563808440 P; 15.12.2025 US 202519420346
(71) Applicant: Apple Inc., Cupertino, CA 95014 (US)
(72) Inventor: CHANG, Jae Woo, Los Altos Hills (US); PAUL, Grant R., San Francisco (US)
(74) Representative: COPA Copenhagen Patents

(57) **Abstract**

The present disclosure describes techniques for managing communications, including techniques for screening calls, filtering communication items, and managing communication requests.

## Description

### FIELD

The present disclosure relates generally to computer user interfaces, and more specifically to techniques for managing communication using a computer system.

### BACKGROUND

Electronic devices such as phones, smartwatches, tablet computers, laptop computers, and desktop computers can provide various modes of communication. Modes of communication include phone calls, video calls, text message, and other forms of communication.

### BRIEF SUMMARY

Some techniques for managing communication using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for managing communication using a computer system. Such methods and interfaces optionally complement or replace other methods for managing communication using a computer system. Such methods and interfaces reduce the cognitive burden on a user and produce a more efficient human-machine interface. For battery-operated computing devices, such methods and interfaces conserve power and increase the time between battery charges.

In accordance with some embodiments, a method is described. The method comprises: at a computer system that is in communication with one or more display generation components and one or more input devices: receiving a call; while the call is incoming: in accordance with a determination that the call is associated with a first type of caller, displaying, via the one or more display generation components, an incoming call user interface, including displaying a first reply element that when selected initiates a process for providing an audio message to the caller in the call without answering the call; and in accordance with a determination that the call is associated with a second type of caller that is different from the first type of caller, displaying, via the one or more display generation components, a call screening notification, wherein the call screening notification is displayed while a digital call assistant is active for the call; while displaying the call screening notification, detecting, via the one or more input devices, an input corresponding to selection of the call screening notification; and in response to detecting the input corresponding to selection of the call screening notification, displaying, via the one or more display generation components, a second reply element that when selected initiates a process for providing an audio message to the caller in the call without answering the call.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: receiving a call; while the call is incoming: in accordance with a determination that the call is associated with a first type of caller, displaying, via the one or more display generation components, an incoming call user interface, including displaying a first reply element that when selected initiates a process for providing an audio message to the caller in the call without answering the call; and in accordance with a determination that the call is associated with a second type of caller that is different from the first type of caller, displaying, via the one or more display generation components, a call screening notification, wherein the call screening notification is displayed while a digital call assistant is active for the call; while displaying the call screening notification, detecting, via the one or more input devices, an input corresponding to selection of the call screening notification; and in response to detecting the input corresponding to selection of the call screening notification, displaying, via the one or more display generation components, a second reply element that when selected initiates a process for providing an audio message to the caller in the call without answering the call.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: receiving a call; while the call is incoming: in accordance with a determination that the call is associated with a first type of caller, displaying, via the one or more display generation components, an incoming call user interface, including displaying a first reply element that when selected initiates a process for providing an audio message to the caller in the call without answering the call; and in accordance with a determination that the call is associated with a second type of caller that is different from the first type of caller, displaying, via the one or more display generation components, a call screening notification, wherein the call screening notification is displayed while a digital call assistant is active for the call; while displaying the call screening notification, detecting, via the one or more input devices, an input corresponding to selection of the call screening notification; and in response to detecting the input corresponding to selection of the call screening notification, displaying, via the one or more display generation components, a second reply element that when selected initiates a process for providing an audio message to the caller in the call without answering the call.

In accordance with some embodiments, a computer system configured to communicate with one or more display generation components and one or more input devices is described. The computer system comprises one or more processors and memory storing one or more programs configured to be executed by the one or more processors. The one or more programs include instructions for: receiving a call; while the call is incoming: in accordance with a determination that the call is associated with a first type of caller, displaying, via the one or more display generation components, an incoming call user interface, including displaying a first reply element that when selected initiates a process for providing an audio message to the caller in the call without answering the call; and in accordance with a determination that the call is associated with a second type of caller that is different from the first type of caller, displaying, via the one or more display generation components, a call screening notification, wherein the call screening notification is displayed while a digital call assistant is active for the call; while displaying the call screening notification, detecting, via the one or more input devices, an input corresponding to selection of the call screening notification; and in response to detecting the input corresponding to selection of the call screening notification, displaying, via the one or more display generation components, a second reply element that when selected initiates a process for providing an audio message to the caller in the call without answering the call.

In accordance with some embodiments, a computer system configured to communicate with one or more display generation components and one or more input devices is described. The computer system comprises: means for receiving a call; means for, while the call is incoming: in accordance with a determination that the call is associated with a first type of caller, displaying, via the one or more display generation components, an incoming call user interface, including displaying a first reply element that when selected initiates a process for providing an audio message to the caller in the call without answering the call; and in accordance with a determination that the call is associated with a second type of caller that is different from the first type of caller, displaying, via the one or more display generation components, a call screening notification, wherein the call screening notification is displayed while a digital call assistant is active for the call; means for, while displaying the call screening notification, detecting, via the one or more input devices, an input corresponding to selection of the call screening notification; and means for, in response to detecting the input corresponding to selection of the call screening notification, displaying, via the one or more display generation components, a second reply element that when selected initiates a process for providing an audio message to the caller in the call without answering the call.

In accordance with some embodiments, a computer program product is described. The computer program product comprises one or more programs configured to be executed by one or more processors of a computer system that is in communication with one or more display generation components and one or more input devices. The one or more programs include instructions for: receiving a call; while the call is incoming: in accordance with a determination that the call is associated with a first type of caller, displaying, via the one or more display generation components, an incoming call user interface, including displaying a first reply element that when selected initiates a process for providing an audio message to the caller in the call without answering the call; and in accordance with a determination that the call is associated with a second type of caller that is different from the first type of caller, displaying, via the one or more display generation components, a call screening notification, wherein the call screening notification is displayed while a digital call assistant is active for the call; while displaying the call screening notification, detecting, via the one or more input devices, an input corresponding to selection of the call screening notification; and in response to detecting the input corresponding to selection of the call screening notification, displaying, via the one or more display generation components, a second reply element that when selected initiates a process for providing an audio message to the caller in the call without answering the call.

In accordance with some embodiments, a method is described. The method comprises: at a computer system that is in communication with one or more display generation components and one or more input devices: detecting, via the one or more input devices, an input corresponding to a request to display a user interface for displaying communication items associated with a first type of entity; and in response to detecting the input corresponding to the request to display the user interface for displaying communication items associated with the first type of entity, displaying, via the one or more display generation components, the user interface for displaying communication items associated with the first type of entity, including: in accordance with a determination that a set of one or more entity criteria is met, displaying, via the one or more display generation components, a first communication item and a first graphical element that when selected initiates a process for designating an entity associated with the first communication item as a known entity; and in accordance with a determination that the set of one or more entity criteria is not met, displaying, via the one or more display generation components, the user interface for displaying communication items associated with the first type of entity without displaying the first communication item.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: detecting, via the one or more input devices, an input corresponding to a request to display a user interface for displaying communication items associated with a first type of entity; and in response to detecting the input corresponding to the request to display the user interface for displaying communication items associated with the first type of entity, displaying, via the one or more display generation components, the user interface for displaying communication items associated with the first type of entity, including: in accordance with a determination that a set of one or more entity criteria is met, displaying, via the one or more display generation components, a first communication item and a first graphical element that when selected initiates a process for designating an entity associated with the first communication item as a known entity; and in accordance with a determination that the set of one or more entity criteria is not met, displaying, via the one or more display generation components, the user interface for displaying communication items associated with the first type of entity without displaying the first communication item.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: detecting, via the one or more input devices, an input corresponding to a request to display a user interface for displaying communication items associated with a first type of entity; and in response to detecting the input corresponding to the request to display the user interface for displaying communication items associated with the first type of entity, displaying, via the one or more display generation components, the user interface for displaying communication items associated with the first type of entity, including: in accordance with a determination that a set of one or more entity criteria is met, displaying, via the one or more display generation components, a first communication item and a first graphical element that when selected initiates a process for designating an entity associated with the first communication item as a known entity; and in accordance with a determination that the set of one or more entity criteria is not met, displaying, via the one or more display generation components, the user interface for displaying communication items associated with the first type of entity without displaying the first communication item.

In accordance with some embodiments, a computer system configured to communicate with one or more display generation components and one or more input devices is described. The computer system comprises one or more processors and memory storing one or more programs configured to be executed by the one or more processors. The one or more programs include instructions for: detecting, via the one or more input devices, an input corresponding to a request to display a user interface for displaying communication items associated with a first type of entity; and in response to detecting the input corresponding to the request to display the user interface for displaying communication items associated with the first type of entity, displaying, via the one or more display generation components, the user interface for displaying communication items associated with the first type of entity, including: in accordance with a determination that a set of one or more entity criteria is met, displaying, via the one or more display generation components, a first communication item and a first graphical element that when selected initiates a process for designating an entity associated with the first communication item as a known entity; and in accordance with a determination that the set of one or more entity criteria is not met, displaying, via the one or more display generation components, the user interface for displaying communication items associated with the first type of entity without displaying the first communication item.

In accordance with some embodiments, a computer system configured to communicate with one or more display generation components and one or more input devices is described. The computer system comprises: means for, via the one or more input devices, an input corresponding to a request to display a user interface for displaying communication items associated with a first type of entity; and means for, in response to detecting the input corresponding to the request to display the user interface for displaying communication items associated with the first type of entity, displaying, via the one or more display generation components, the user interface for displaying communication items associated with the first type of entity, including: in accordance with a determination that a set of one or more entity criteria is met, displaying, via the one or more display generation components, a first communication item and a first graphical element that when selected initiates a process for designating an entity associated with the first communication item as a known entity; and in accordance with a determination that the set of one or more entity criteria is not met, displaying, via the one or more display generation components, the user interface for displaying communication items associated with the first type of entity without displaying the first communication item.

In accordance with some embodiments, a computer program product is described. The computer program product comprises one or more programs configured to be executed by one or more processors of a computer system that is in communication with one or more display generation components and one or more input devices. The one or more programs include instructions for: detecting, via the one or more input devices, an input corresponding to a request to display a user interface for displaying communication items associated with a first type of entity; and in response to detecting the input corresponding to the request to display the user interface for displaying communication items associated with the first type of entity, displaying, via the one or more display generation components, the user interface for displaying communication items associated with the first type of entity, including: in accordance with a determination that a set of one or more entity criteria is met, displaying, via the one or more display generation components, a first communication item and a first graphical element that when selected initiates a process for designating an entity associated with the first communication item as a known entity; and in accordance with a determination that the set of one or more entity criteria is not met, displaying, via the one or more display generation components, the user interface for displaying communication items associated with the first type of entity without displaying the first communication item.

In accordance with some embodiments, a method is described. The method comprises: at a computer system that is in communication with one or more display generation components and one or more input devices: while the computer system is in a restricted mode of operation that limits a communication functionality of the computer system, detecting, via the one or more input devices, an input corresponding to a request to display a respective user interface that includes a communication item; in response to detecting the input corresponding to the request to display the respective user interface, displaying, via the one or more display generation components, the respective user interface, including: in accordance with a determination that the communication item does not correspond to a permitted contact, displaying, via the one or more display generation components, the communication item and a request element; while displaying the request element, detecting, via the one or more input devices, an input corresponding to selection of the request element; and in response to detecting the input corresponding to selection of the request element, initiating a process for sending a request to approve communication with an entity associated with the communication item.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: while the computer system is in a restricted mode of operation that limits a communication functionality of the computer system, detecting, via the one or more input devices, an input corresponding to a request to display a respective user interface that includes a communication item; in response to detecting the input corresponding to the request to display the respective user interface, displaying, via the one or more display generation components, the respective user interface, including: in accordance with a determination that the communication item does not correspond to a permitted contact, displaying, via the one or more display generation components, the communication item and a request element; while displaying the request element, detecting, via the one or more input devices, an input corresponding to selection of the request element; and in response to detecting the input corresponding to selection of the request element, initiating a process for sending a request to approve communication with an entity associated with the communication item.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: while the computer system is in a restricted mode of operation that limits a communication functionality of the computer system, detecting, via the one or more input devices, an input corresponding to a request to display a respective user interface that includes a communication item; in response to detecting the input corresponding to the request to display the respective user interface, displaying, via the one or more display generation components, the respective user interface, including: in accordance with a determination that the communication item does not correspond to a permitted contact, displaying, via the one or more display generation components, the communication item and a request element; while displaying the request element, detecting, via the one or more input devices, an input corresponding to selection of the request element; and in response to detecting the input corresponding to selection of the request element, initiating a process for sending a request to approve communication with an entity associated with the communication item.

In accordance with some embodiments, a computer system configured to communicate with one or more display generation components and one or more input devices is described. The computer system comprises one or more processors and memory storing one or more programs configured to be executed by the one or more processors. The one or more programs include instructions for: while the computer system is in a restricted mode of operation that limits a communication functionality of the computer system, detecting, via the one or more input devices, an input corresponding to a request to display a respective user interface that includes a communication item; in response to detecting the input corresponding to the request to display the respective user interface, displaying, via the one or more display generation components, the respective user interface, including: in accordance with a determination that the communication item does not correspond to a permitted contact, displaying, via the one or more display generation components, the communication item and a request element; while displaying the request element, detecting, via the one or more input devices, an input corresponding to selection of the request element; and in response to detecting the input corresponding to selection of the request element, initiating a process for sending a request to approve communication with an entity associated with the communication item.

In accordance with some embodiments, a computer system configured to communicate with one or more display generation components and one or more input devices is described. The computer system comprises: means for, while the computer system is in a restricted mode of operation that limits a communication functionality of the computer system, detecting, via the one or more input devices, an input corresponding to a request to display a respective user interface that includes a communication item; means for, in response to detecting the input corresponding to the request to display the respective user interface, displaying, via the one or more display generation components, the respective user interface, including: in accordance with a determination that the communication item does not correspond to a permitted contact, displaying, via the one or more display generation components, the communication item and a request element; means for, while displaying the request element, detecting, via the one or more input devices, an input corresponding to selection of the request element; and means for, in response to detecting the input corresponding to selection of the request element, initiating a process for sending a request to approve communication with an entity associated with the communication item.

In accordance with some embodiments, a computer program product is described. The computer program product comprises one or more programs configured to be executed by one or more processors of a computer system that is in communication with one or more display generation components and one or more input devices. The one or more programs include instructions for: while the computer system is in a restricted mode of operation that limits a communication functionality of the computer system, detecting, via the one or more input devices, an input corresponding to a request to display a respective user interface that includes a communication item; in response to detecting the input corresponding to the request to display the respective user interface, displaying, via the one or more display generation components, the respective user interface, including: in accordance with a determination that the communication item does not correspond to a permitted contact, displaying, via the one or more display generation components, the communication item and a request element; while displaying the request element, detecting, via the one or more input devices, an input corresponding to selection of the request element; and in response to detecting the input corresponding to selection of the request element, initiating a process for sending a request to approve communication with an entity associated with the communication item.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for managing communication using a computer system, thereby increasing the effectiveness, efficiency, and user satisfaction with such devices. Such methods and interfaces may complement or replace other methods for managing communication using a computer system.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIG. 5C illustrates an exemplary diagram of a communication session between electronic devices in accordance with some embodiments.
FIGS. 6A-6X illustrate exemplary techniques for screening calls in accordance with some embodiments.
FIG. 7 is a flow diagram illustrating methods of screening calls in accordance with some embodiments.
FIGS. 8A-8BG illustrate exemplary techniques for managing communication items in accordance with some embodiments.
FIG. 9 is a flow diagram illustrating methods of managing communication items in accordance with some embodiments.
FIGS. 10A-10AF illustrate exemplary techniques for managing communication requests in accordance with some embodiments.
FIG. 11 is a flow diagram illustrating methods of managing communication requests in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for managing communications. In one example, when a call from an unknown caller is received, a call screening process is initiated that includes activating a digital call assistant. While the digital call assistant is active, a computer system displays a call screening notification that can be selected to initiate a process for providing an audio message to the caller in the call via the digital call assistant without answering the call. In another example, while displaying a user interface for displaying communication items associated with a first type of entity (e.g., unknown callers, unknown message senders, and/or unknown entities), in accordance with a determination that a set of one or more entity criteria is met, a computer system displays a first communication item and a first graphical element that when selected initiates a process for designating an entity associated with the first communication item as a known entity; in accordance with a determination that the set of one or more entity criteria is not met, the computer system displays the user interface for displaying communication items associated with the first type of entity without displaying the first communication item. In another example, while a computer system is in a restricted mode of operation that limits a communication functionality of the computer system, if a communication item does not correspond to a permitted contact, the computer system displays the communication item and a request element that can be selected to initiate a process for sending a request to approve communication with an entity associated with the communication item. Such techniques can reduce the cognitive burden on a user who manages communication using a computer system, thereby enhancing productivity. Further, such techniques can reduce processor and battery power otherwise wasted on redundant user inputs.

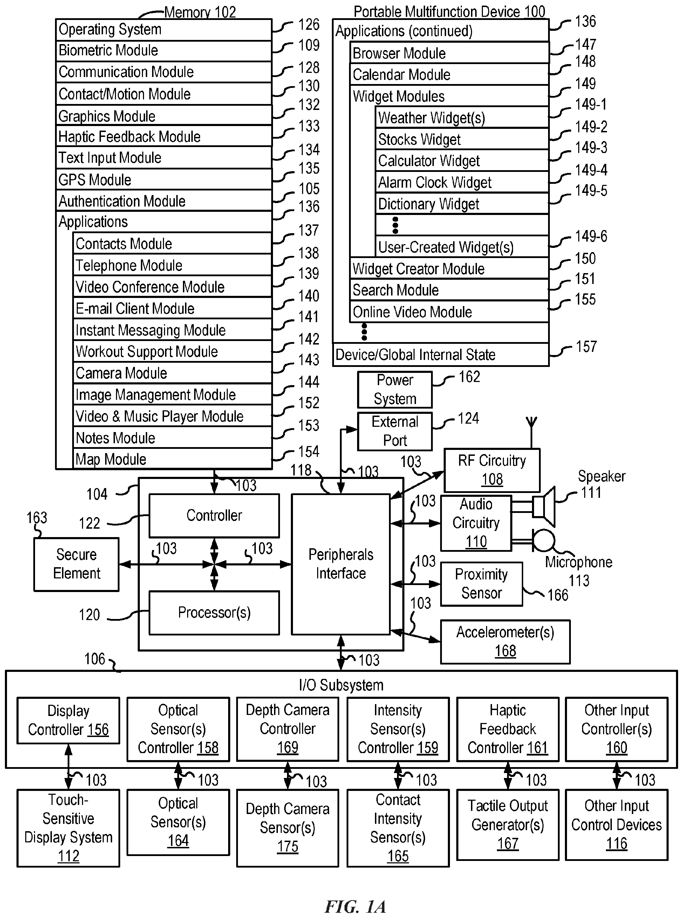

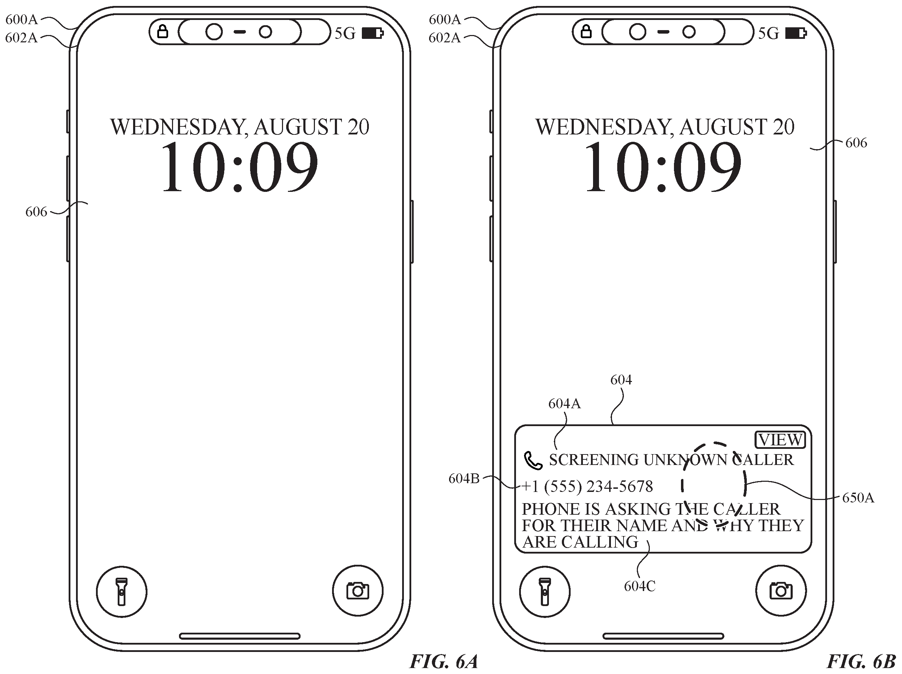

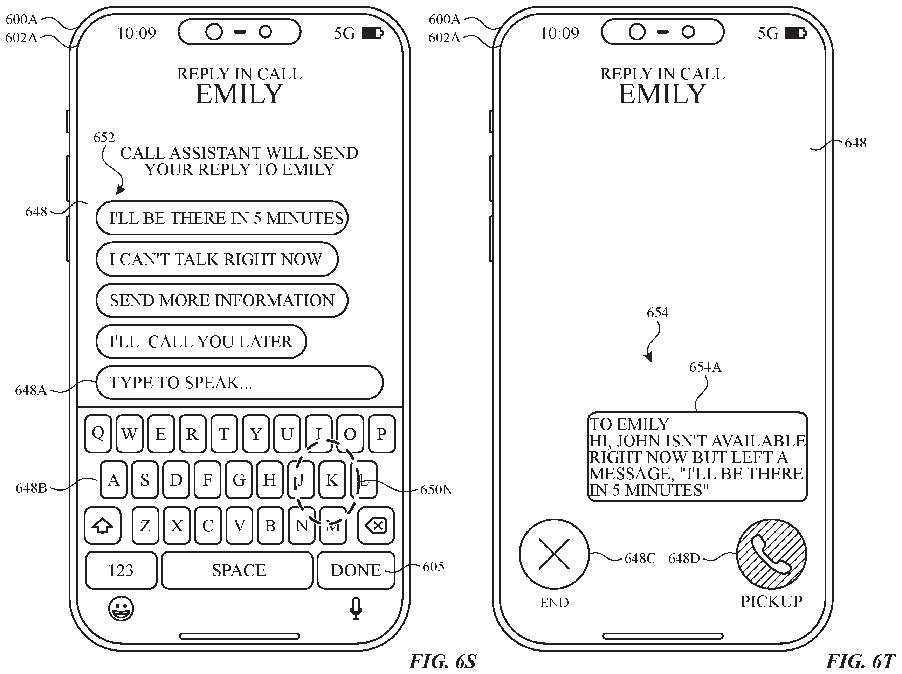

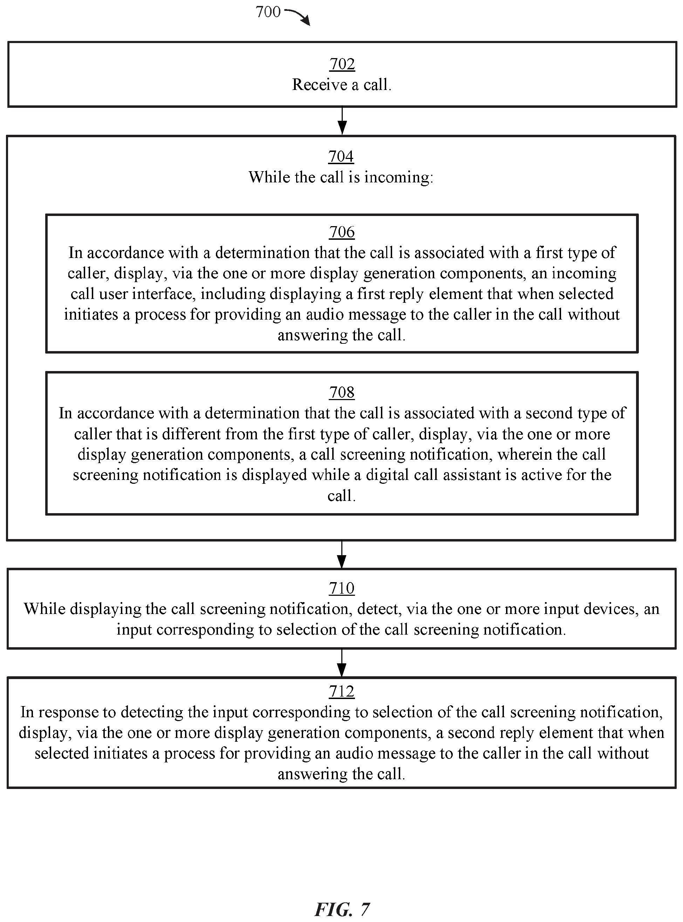

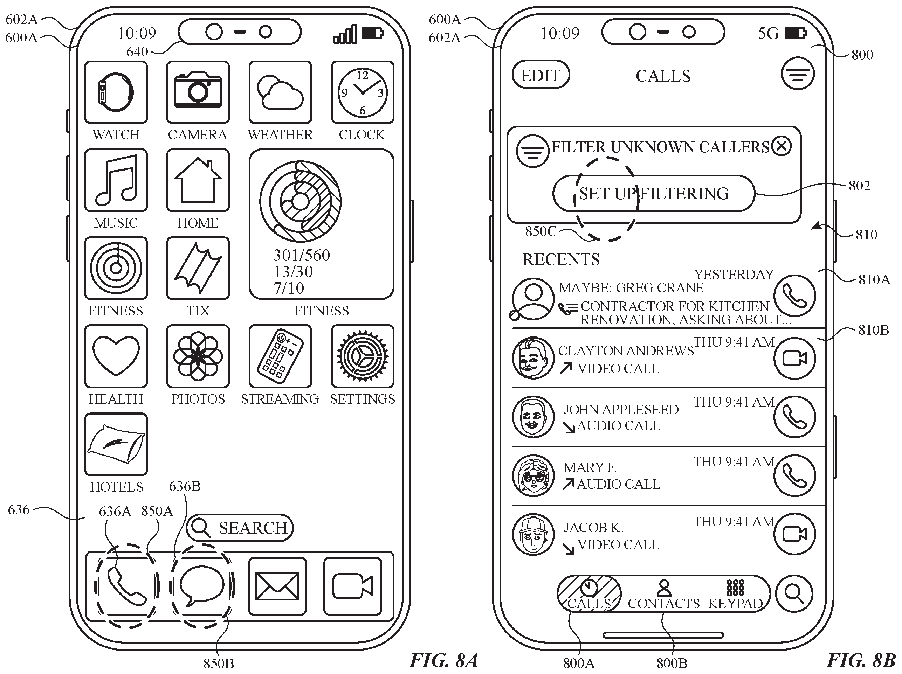

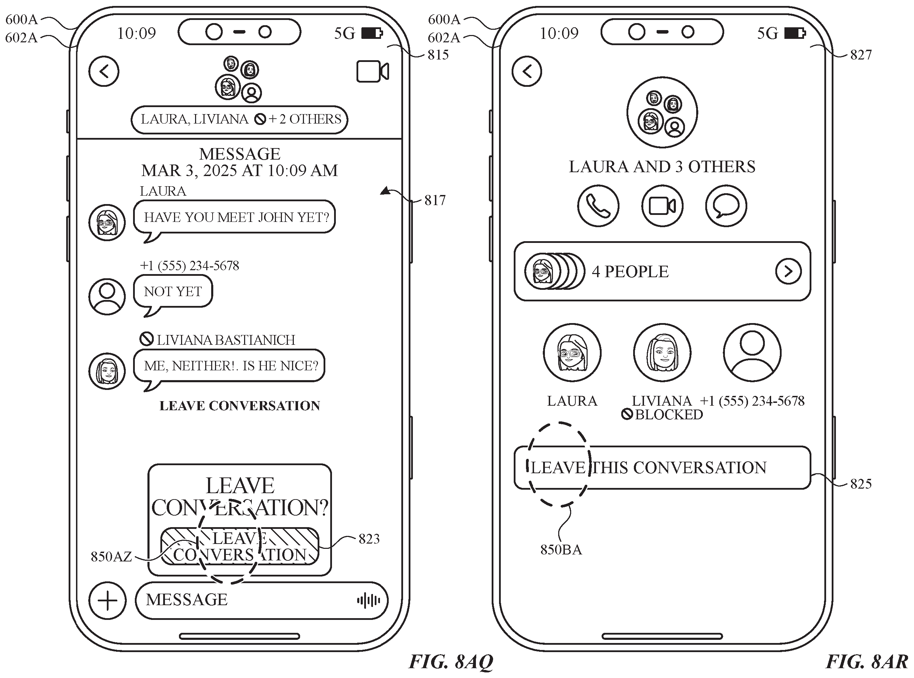

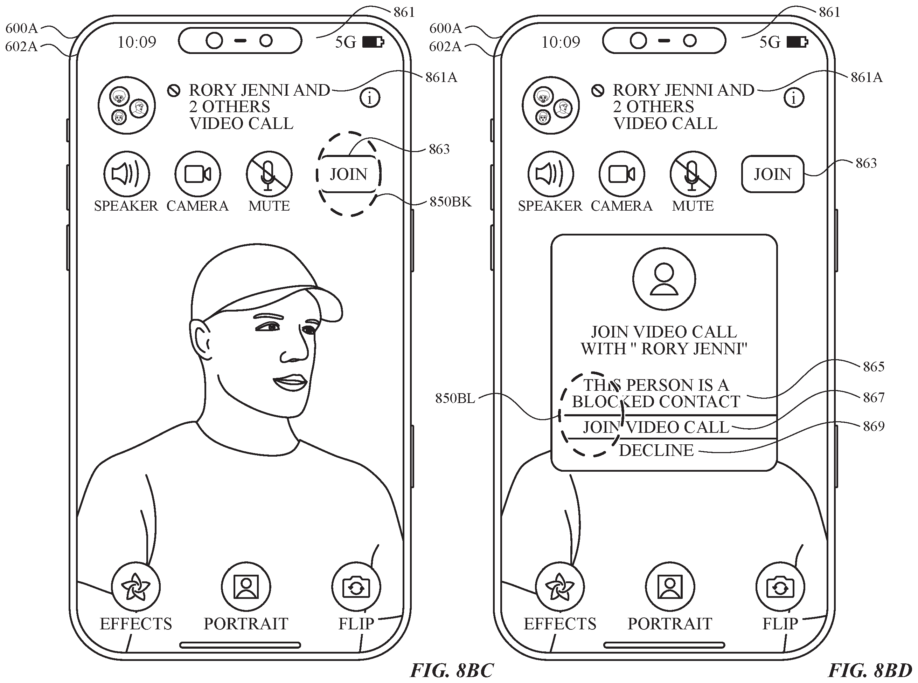

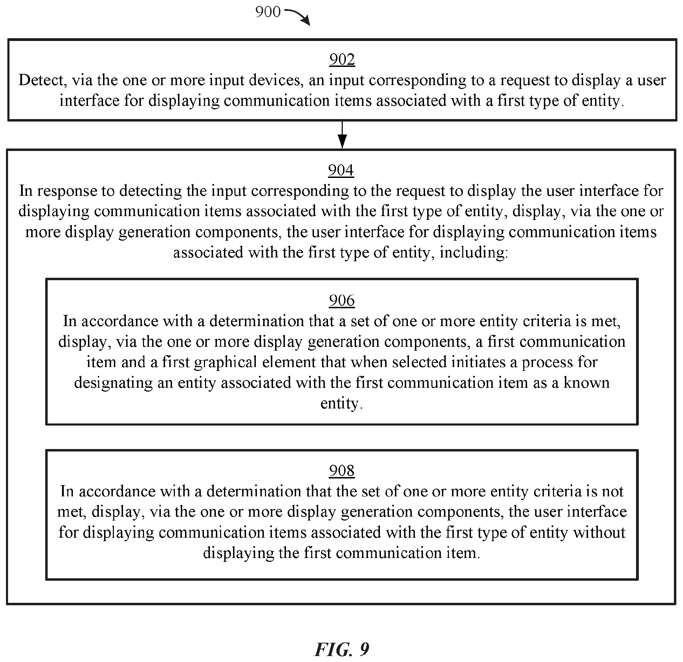

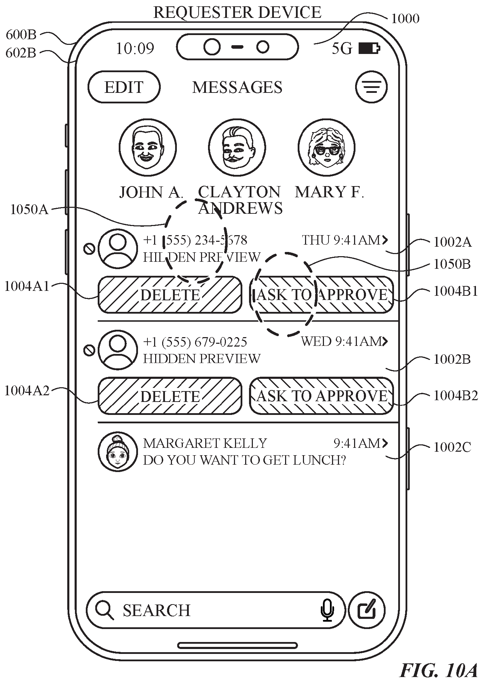

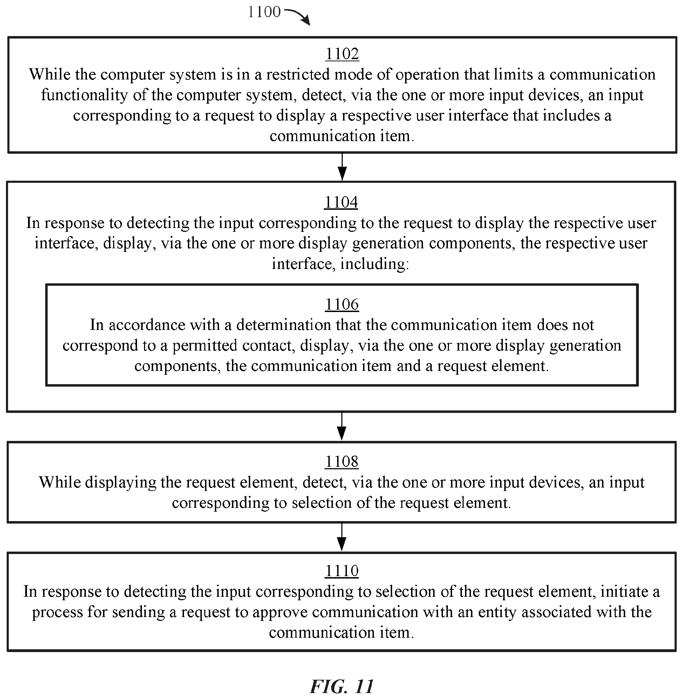

Below, FIGS. 1A-1B, 2, 3A-3G, 4A-4B, and 5A-5C provide a description of exemplary devices for performing the techniques for managing communications. FIGS. 6A-6X illustrate exemplary user interfaces for screening calls. FIG. 7 is a flow diagram illustrating methods of screening calls in accordance with some embodiments. The user interfaces in FIGS. 6A-6X are used to illustrate the processes described below, including the processes in FIG. 7. FIGS. 8A-8BG illustrate exemplary user interfaces for managing communication items. FIG. 9 is a flow diagram illustrating methods of managing communication items in accordance with some embodiments. The user interfaces in FIGS. 8A-8BG are used to illustrate the processes described below, including the processes in FIG. 9. FIGS. 10A-10AF illustrate exemplary user interfaces for managing communication requests. FIG. 11 is a flow diagram illustrating methods of managing communication requests in accordance with some embodiments. The user interfaces in FIGS. 10A-10AF are used to illustrate the processes described below, including the processes in FIG. 11.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

As used herein, the phrase "one or more of A and/or B" is construed to include all combinations of A and B, including, but not limited to: A individually without B; B individually without A; as well as a combination of A and B. The phrase "one or more of A, B, and/or C" is construed to include all combinations of A, B, and C, including, but not limited to: A individually without B and C; B individually without A and C; C individually without A and B; as well as any combinations of A, B, and/or C (e.g., A and B without C; A and C without B; B and C without A; and/or A, B, and C). Additionally, as used herein, the phrase "selected from the group consisting of A, B, C, and a combination thereof" and the phrase "at least one of A, B, and C" shall be construed to have the same meaning as the phrase "one or more of A, B, and/or C" as defined above. As used herein, the phrase "at least one of A, B, or C" and "one or more of A, B, or C" shall be construed to have the same meaning as the phrase "one or more of A, B, and/or C" as defined above. As used herein, the phrase "a combination including all of A, B, and C" is construed to include a combination of all the elements listed (e.g., a combination of A, B, and C).

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device or component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage media), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random-access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

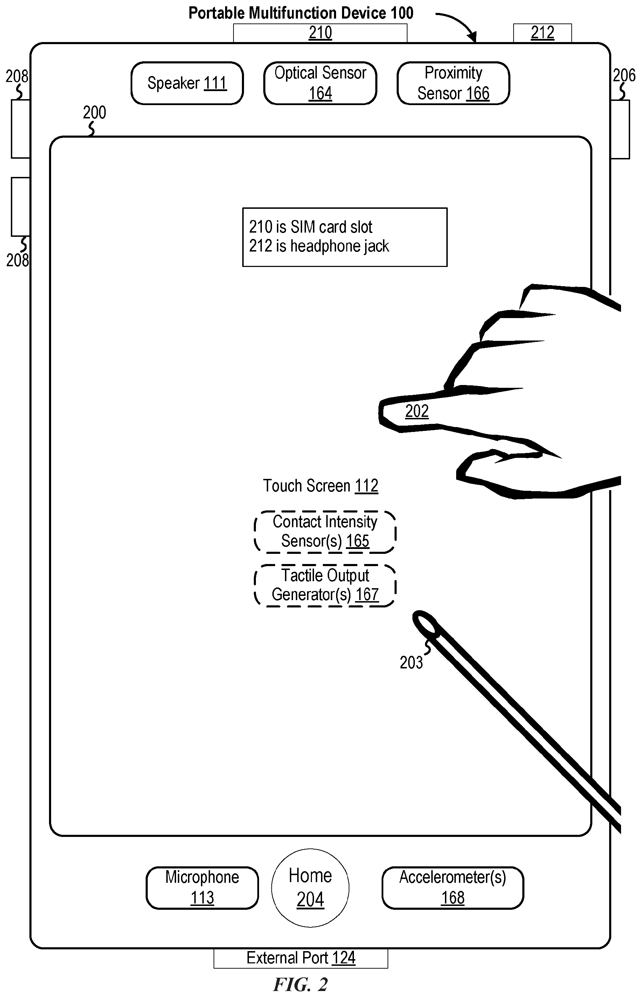

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

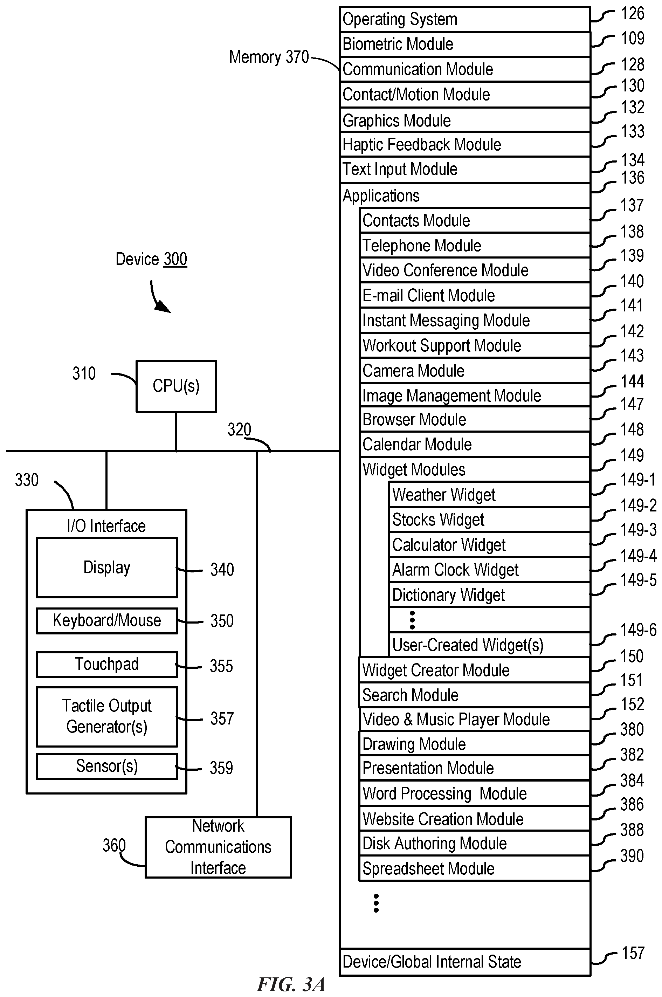

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE^{®}, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript^{®} file. In some embodiments, a widget includes an XML (Extensible Markup Language) file and a JavaScript^{®} file (e.g., Yahoo!^{®} Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

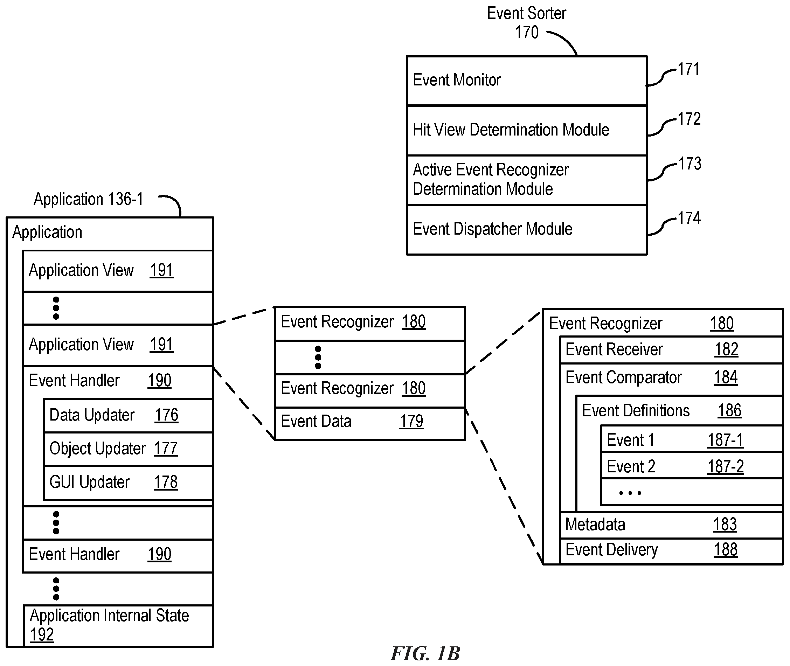

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

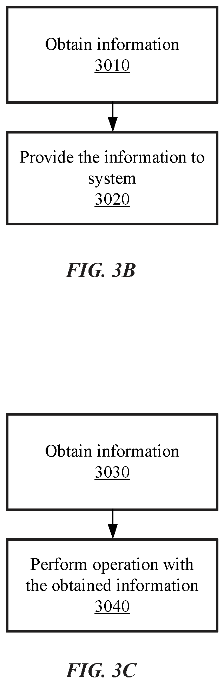

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

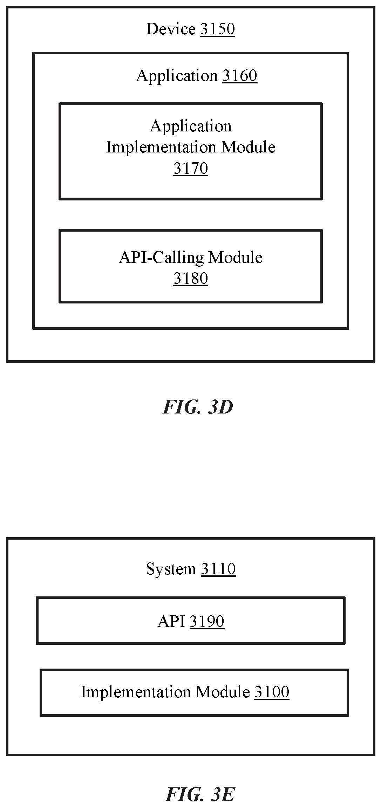

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

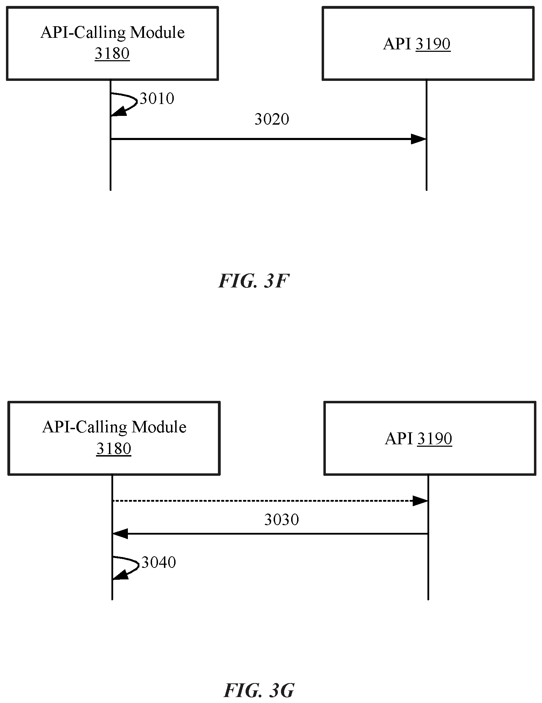

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700, 900, and/or 1100 (FIGS. 7, 9, and/or 11) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

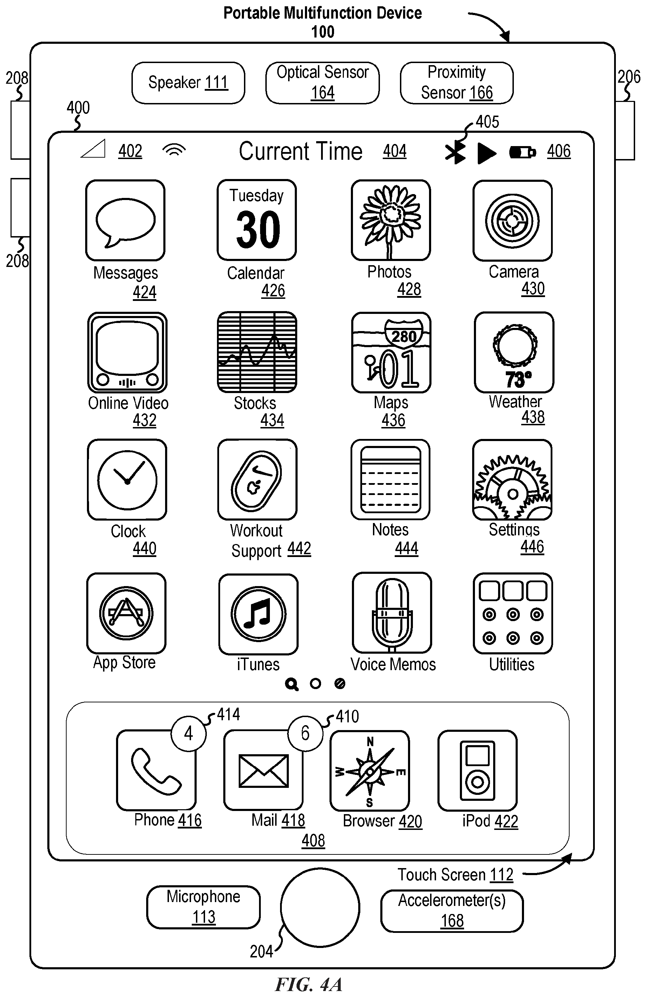

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   o Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

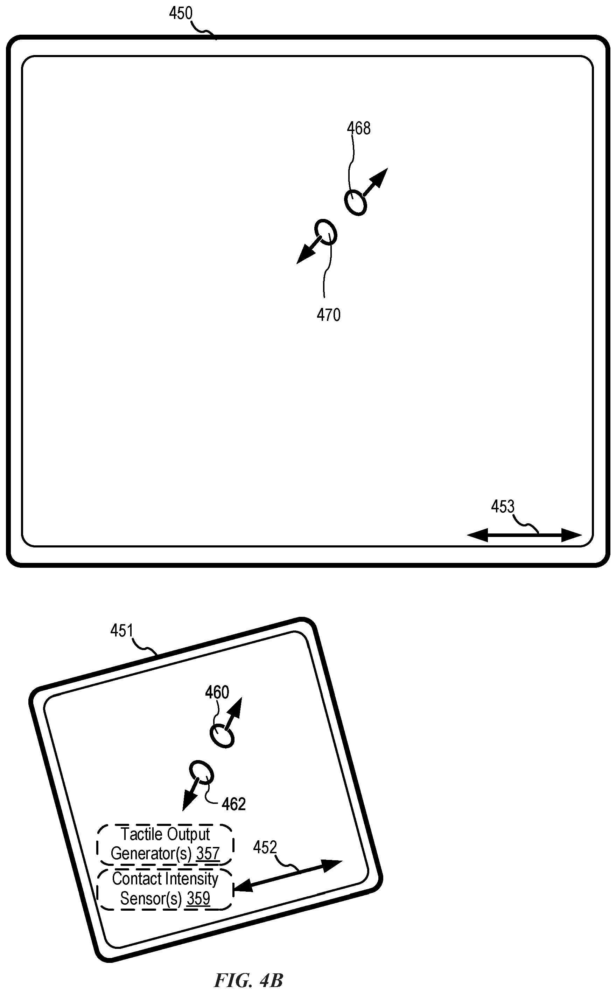

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., touch-sensitive surface 451 in FIG. 4B) has a primary axis (e.g., 452 in FIG. 4B) that corresponds to a primary axis (e.g., 453 in FIG. 4B) on the display (e.g., display 450). In accordance with these embodiments, the device detects contacts (e.g., contact 460 and contact 462 in FIG. 4B) with the touch-sensitive surface 451 at locations that correspond to respective locations on the display (e.g., in FIG. 4B, contact 460 corresponds to 468 and contact 462 corresponds to 470). In this way, user inputs (e.g., contacts 460 and 462, and movements thereof) detected by the device on the touch-sensitive surface (e.g., touch-sensitive surface 451 in FIG. 4B) are used by the device to manipulate the user interface on the display (e.g., display 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

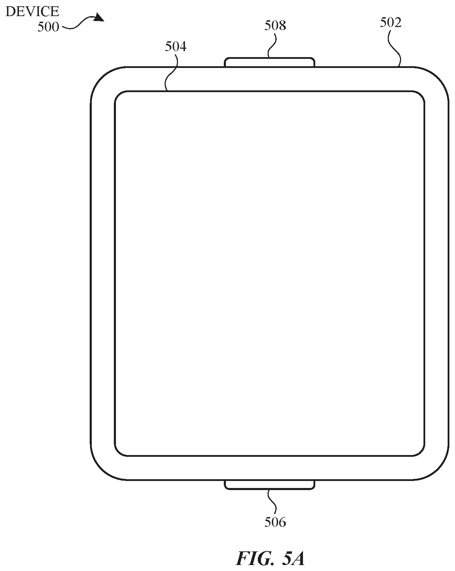

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

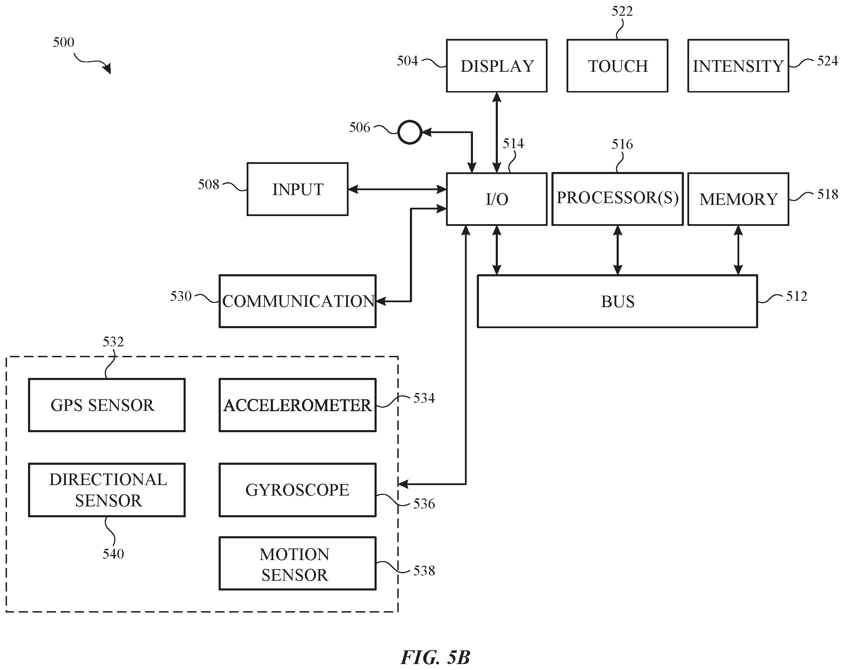

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage media, for storing computer-executable instructions, which, when executed by one or more computer processors 516, for example, can cause the computer processors to perform the techniques described below, including methods 700, 900, and/or 1100 (FIGS. 7, 9, and/or 11). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray^{®} technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

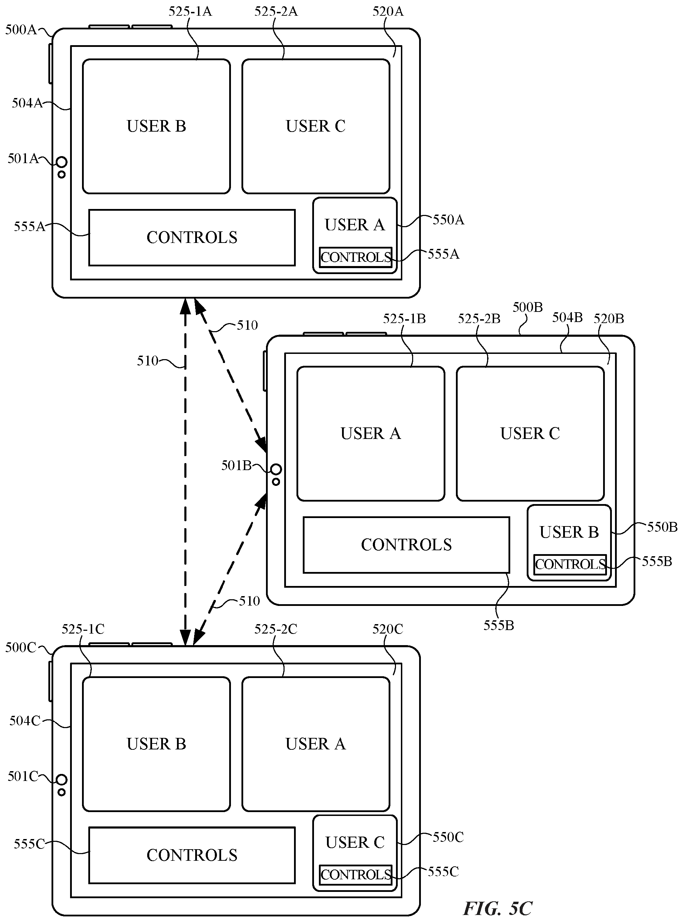

FIG. 5C depicts an exemplary diagram of a communication session between electronic devices 500A, 500B, and 500C. Devices 500A, 500B, and 500C are similar to electronic device 500, and each share with each other one or more data connections 510 such as an Internet connection, Wi-Fi connection, cellular connection, short-range communication connection, and/or any other such data connection or network so as to facilitate real time communication of audio and/or video data between the respective devices for a duration of time. In some embodiments, an exemplary communication session can include a shared-data session whereby data is communicated from one or more of the electronic devices to the other electronic devices to enable concurrent output of respective content at the electronic devices. In some embodiments, an exemplary communication session can include a video conference session whereby audio and/or video data is communicated between devices 500A, 500B, and 500C such that users of the respective devices can engage in real time communication using the electronic devices.

In FIG. 5C, device 500A represents an electronic device associated with User A. Device 500A is in communication (via data connections 510) with devices 500B and 500C, which are associated with User B and User C, respectively. Device 500A includes camera 501A, which is used to capture video data for the communication session, and display 504A (e.g., a touchscreen), which is used to display content associated with the communication session. Device 500A also includes other components, such as a microphone (e.g., 113) for recording audio for the communication session and a speaker (e.g., 111) for outputting audio for the communication session.

Device 500A displays, via display 504A, communication UI 520A, which is a user interface for facilitating a communication session (e.g., a video conference session) between device 500B and device 500C. Communication UI 520A includes video feed 525-1A and video feed 525-2A. Video feed 525-1A is a representation of video data captured at device 500B (e.g., using camera 501B) and communicated from device 500B to devices 500A and 500C during the communication session. Video feed 525-2A is a representation of video data captured at device 500C (e.g., using camera 501C) and communicated from device 500C to devices 500A and 500B during the communication session.

Communication UI 520A includes camera preview 550A, which is a representation of video data captured at device 500A via camera 501A. Camera preview 550A represents to User A the prospective video feed of User A that is displayed at respective devices 500B and 500C.

Communication UI 520A includes one or more controls 555A for controlling one or more aspects of the communication session. For example, controls 555A can include controls for muting audio for the communication session, changing a camera view for the communication session (e.g., changing which camera is used for capturing video for the communication session, adjusting a zoom value), terminating the communication session, applying visual effects to the camera view for the communication session, activating one or more modes associated with the communication session. In some embodiments, one or more controls 555A are optionally displayed in communication UI 520A. In some embodiments, one or more controls 555A are displayed separate from camera preview 550A. In some embodiments, one or more controls 555A are displayed overlaying at least a portion of camera preview 550A.

In FIG. 5C, device 500B represents an electronic device associated with User B, which is in communication (via data connections 510) with devices 500A and 500C. Device 500B includes camera 501B, which is used to capture video data for the communication session, and display 504B (e.g., a touchscreen), which is used to display content associated with the communication session. Device 500B also includes other components, such as a microphone (e.g., 113) for recording audio for the communication session and a speaker (e.g., 111) for outputting audio for the communication session.

Device 500B displays, via display 504B, communication UI 520B, which is similar to communication UI 520A of device 500A. Communication UI 520B includes video feed 525-1B and video feed 525-2B. Video feed 525-1B is a representation of video data captured at device 500A (e.g., using camera 501A) and communicated from device 500A to devices 500B and 500C during the communication session. Video feed 525-2B is a representation of video data captured at device 500C (e.g., using camera 501C) and communicated from device 500C to devices 500A and 500B during the communication session. Communication UI 520B also includes camera preview 550B, which is a representation of video data captured at device 500B via camera 501B, and one or more controls 555B for controlling one or more aspects of the communication session, similar to controls 555A. Camera preview 550B represents to User B the prospective video feed of User B that is displayed at respective devices 500A and 500C.

In FIG. 5C, device 500C represents an electronic device associated with User C, which is in communication (via data connections 510) with devices 500A and 500B. Device 500C includes camera 501C, which is used to capture video data for the communication session, and display 504C (e.g., a touchscreen), which is used to display content associated with the communication session. Device 500C also includes other components, such as a microphone (e.g., 113) for recording audio for the communication session and a speaker (e.g., 111) for outputting audio for the communication session.

Device 500C displays, via display 504C, communication UI 520C, which is similar to communication UI 520A of device 500A and communication UI 520B of device 500B. Communication UI 520C includes video feed 525-1C and video feed 525-2C. Video feed 525-1C is a representation of video data captured at device 500B (e.g., using camera 501B) and communicated from device 500B to devices 500A and 500C during the communication session. Video feed 525-2C is a representation of video data captured at device 500A (e.g., using camera 501A) and communicated from device 500A to devices 500B and 500C during the communication session. Communication UI 520C also includes camera preview 550C, which is a representation of video data captured at device 500C via camera 501C, and one or more controls 555C for controlling one or more aspects of the communication session, similar to controls 555A and 555B. Camera preview 550C represents to User C the prospective video feed of User C that is displayed at respective devices 500A and 500B.

While the diagram depicted in FIG. 5C represents a communication session between three electronic devices, the communication session can be established between two or more electronic devices, and the number of devices participating in the communication session can change as electronic devices join or leave the communication session. For example, if one of the electronic devices leaves the communication session, audio and video data from the device that stopped participating in the communication session is no longer represented on the participating devices. For example, if device 500B stops participating in the communication session, there is no data connection 510 between devices 500A and 500C, and no data connection 510 between devices 500C and 500B. Additionally, device 500A does not include video feed 525-1A and device 500C does not include video feed 525-1C. Similarly, if a device joins the communication session, a connection is established between the joining device and the existing devices, and the video and audio data is shared among all devices such that each device is capable of outputting data communicated from the other devices.

The embodiment depicted in FIG. 5C represents a diagram of a communication session between multiple electronic devices, including the example communication sessions depicted in FIGS. 8BC-8BG. In some embodiments, the communication sessions depicted in FIGS. 8BC-8BG include two or more electronic devices, even if other electronic devices participating in the communication session are not depicted in the figures.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

In some embodiments, the computer system is in a locked state or an unlocked state. In the locked state, the computer system is powered on and operational but is prevented from performing a predefined set of operations in response to user input. The predefined set of operations optionally includes navigation between user interfaces, activation or deactivation of a predefined set of functions, and activation or deactivation of certain applications. The locked state can be used to prevent unintentional or unauthorized use of some functionality of the computer system or activation or deactivation of some functions on the computer system. In some embodiments, in the unlocked state, the computer system is powered on and operational and is not prevented from performing at least a portion of the predefined set of operations that cannot be performed while in the locked state. When the computer system is in the locked state, the computer system is said to be locked. When the computer system is in the unlocked state, the computer is said to be unlocked. In some embodiments, the computer system in the locked state optionally responds to a limited set of user inputs, including input that corresponds to an attempt to transition the computer system to the unlocked state or input that corresponds to powering the computer system off.

Attention is now directed towards embodiments of user interfaces ("UI") and associated processes that are implemented on an electronic device, such as portable multifunction device 100, device 300, or device 500.

FIGS. 6A-6X illustrate exemplary user interfaces for screening calls, in accordance with some embodiments. The user interfaces in these figures are used to illustrate the processes described below, including the processes in FIG. 7.

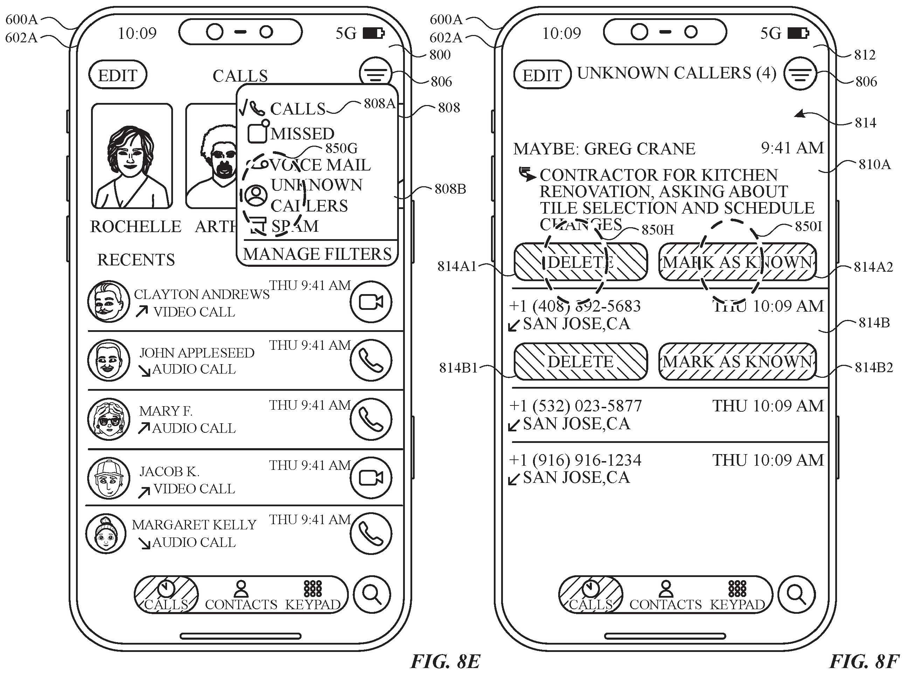

In FIG. 6A, device 600A (e.g., a smartphone) displays user interface 606 (e.g., a wake screen and/or a lock screen) on display 602 (e.g., a touchscreen display). While device 600A is displaying user interface 606 (e.g., while device 600A is locked, in an inactive state, and/or displaying a wake screen), device 600A receives an incoming call from an unknown caller. In some embodiments, an unknown caller is an entity (e.g., a phone number, username, and/or account) that is not recognized by the computer system and/or does not correspond to an entry (e.g., contact information and/or known entity information) saved in memory accessible to the computer system (e.g., memory of the computer system and/or a cloud storage account). For example, in some embodiments, an unknown caller is a caller that is not a saved contact and is not designated as a known entity of device 600A (e.g., as described with reference to FIGS. 8F-8I).

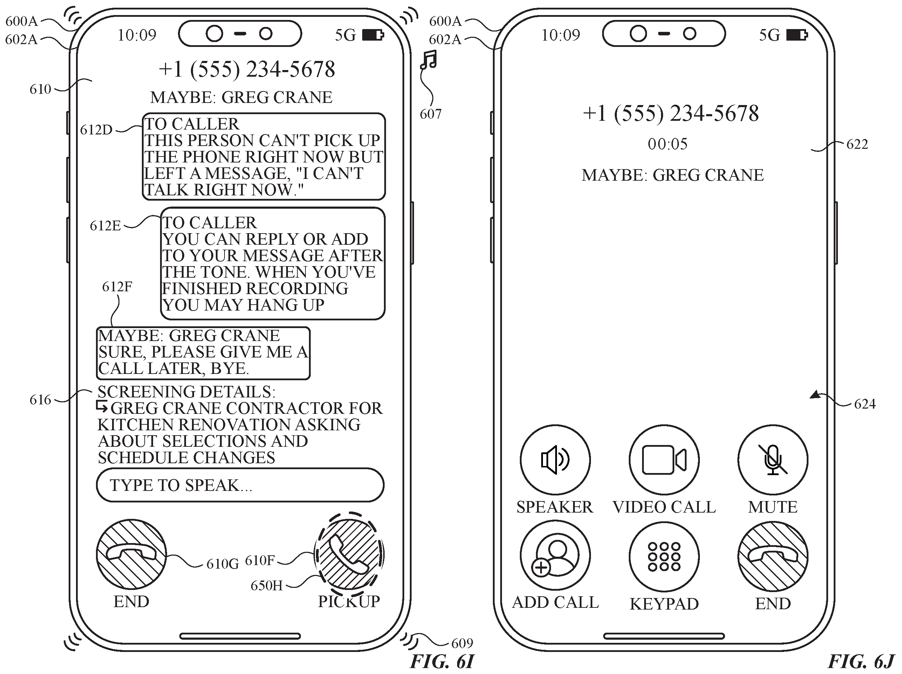

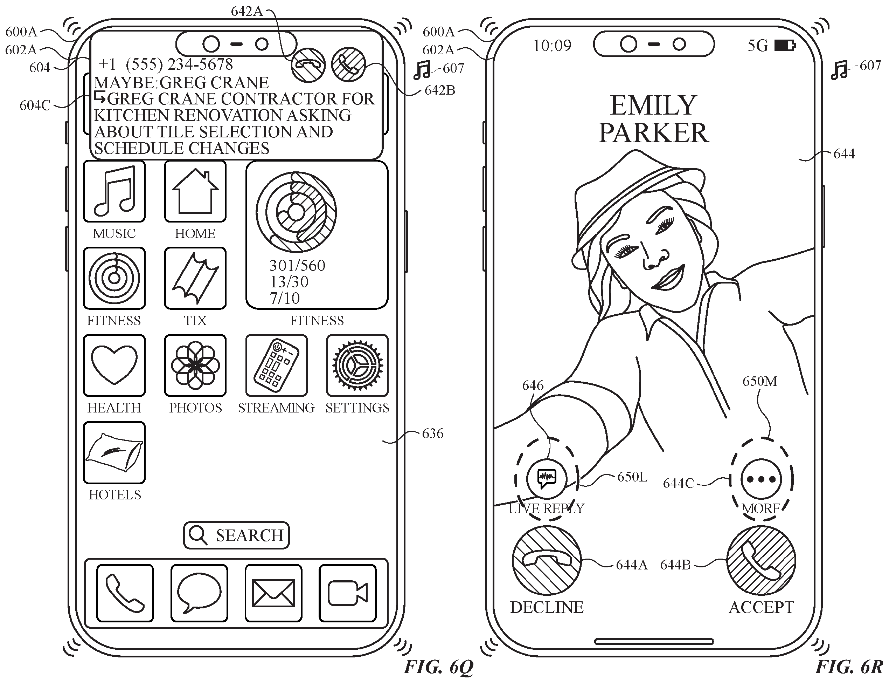

In accordance with a determination that a set of call screening criteria is met (e.g., call screening is enabled, and the call is from an unknown caller), a call screening process is initiated and device 600A displays call screening notification 604, as shown in FIG. 6B. In some embodiments, the call screening process includes opening a communication link with the caller in which a digital call assistant can provide real-time audio messages to the caller and receive real-time voice responses from the caller without device 600A answering the call. Call screening notification 604 includes indication 604A that the unknown caller is being screened, call ID 604B (e.g., a phone number and/or potential name of the caller), and screening status 604C. Screening status 604C indicates that a digital call assistant is asking the unknown caller for their name and reason for the call. In FIG. 6B, because the call is from an unknown caller, device 600A forgoes (or, optionally, delays) outputting a ringtone or displaying an incoming call user interface (e.g., call user interface 622 shown in FIG. 6J or call user interface 644 shown in FIG. 6R).

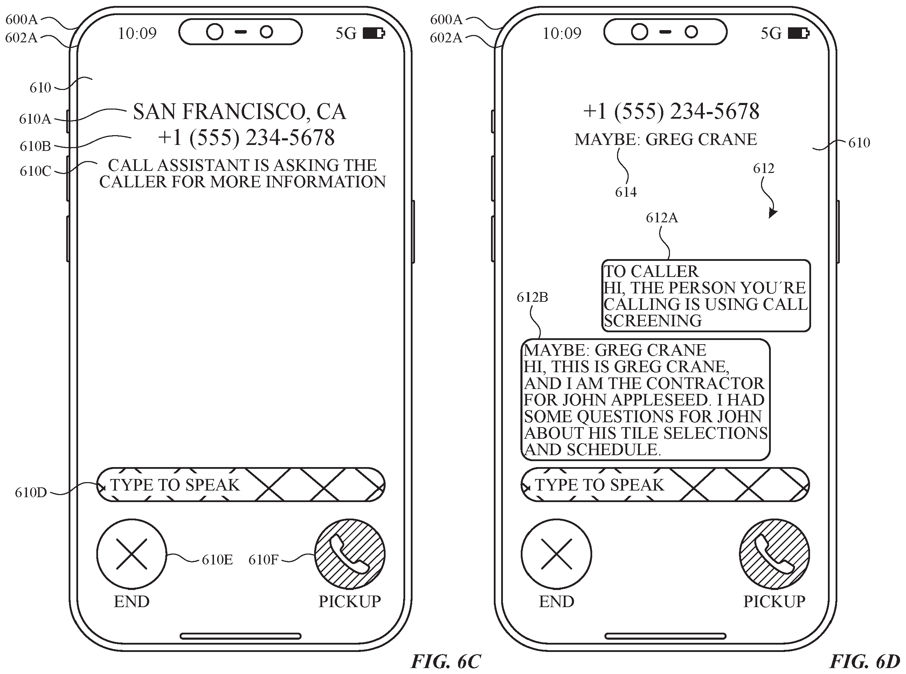

In FIG. 6B, device 600A detects input 650A selecting call screening notification 604. In response to detecting input 650A, device 600A displays call screening interface 610 as shown in FIG. 6C. Call screening interface 610 includes location 610A of the call, call ID 610B (e.g., similar to call ID 604B), screening status 610C (e.g., similar to screening status 604C), message compose field 610D, end screening option 610E, and answer option 610F.

As the call screening process continues, device 600A updates call screening interface 610 to reflect the status of the call screening process. For example, FIG. 6D illustrates call screening interface 610 after the call screening process has advanced from the state in FIG. 6C. In FIG. 6D, device 600A displays description 612 (e.g., a transcript and/or summary) of the interaction between the digital call assistant and the caller. Message 612A displays a transcript of an audio message from the digital call assistant to the caller, informing the caller that the user of device 600A is using (e.g., has enabled) call screening. Message 612B displays a transcript of a voice reply from the caller. Based on the content of the voice reply from the caller shown in message 612B, device 600A provides an indication of a potential name of the caller (e.g., "Maybe: Greg Crane") in indicator 614 and in message 612B. In some embodiments, device 600A provides the potential name of the caller based on information other than, or in addition to, information provided by the caller during the call screening process. For example, device 600A can display a potential name of the caller based on documents (e.g., files and/or images), data sources (e.g., calendar events and/or databases), and/or other communications (e.g., an email and/or text message) that includes information associating a name with the phone number of the call.

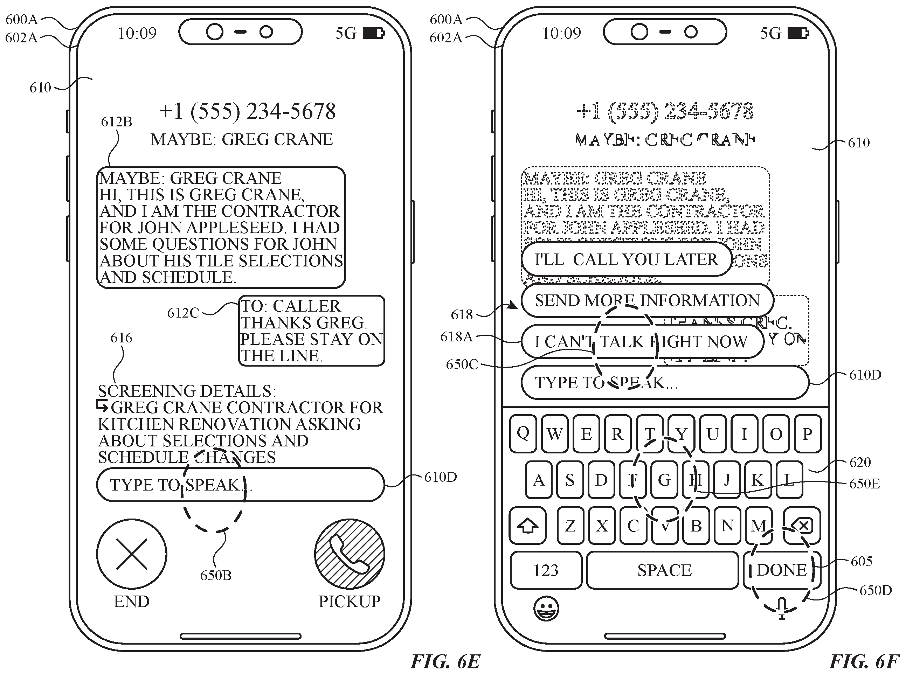

As indicated in FIG. 6E, after the caller provides the voice reply shown in message 612B, the digital call assistant provides message 612C to the caller asking caller to stay on the line. In the example of message 612C, the digital call assistant refers to the caller by name (e.g., Greg) based on the voice reply of the caller in message 612B. Based on the voice reply of the caller in message 612B, device 600A displays summary 616, which provides a summary of the call screening process. In FIG. 6E, summary 616 indicates a name of the caller (e.g., Greg Crane), a description of the caller (e.g., contractor for kitchen renovations), and a reason for the call (e.g., asking about selections and schedule changes).

After the call screening process has advanced to a certain point (e.g., after the digital call assistant has obtained an initial reply from the caller and asked the caller to stay on the line), device 600A enables message compose field 610D. In some embodiments, message compose field 610D is enabled earlier (e.g., as soon as call screening interface 610 is displayed in FIG. 6C). In FIG. 6E, device 600A detects input 650B selecting message compose field 610D. In response to detecting input 650B, device 600A displays keyboard 620 and suggested replies 618, as shown in FIG. 6F. In some embodiments, suggested replies 618 are based on the information obtained from the caller (e.g., device 600A provides different suggested replies depending on the information obtained from the caller). For example, device 600A optionally selects one or more suggested replies from a set of predefined replies based on information provided by the caller during the call screening process. In some embodiments, one or more suggested replies are generated (e.g., in real-time and/or during the call screening process) based on information provided by the caller during the call screening process. In some embodiments, suggested replies 618 are selected and/or generated based on contextual information other than, or in addition to, information provided by the caller during the call screening process, such as, e.g., a date, time of day, a calendar event, a location associated with the phone number of the call, and/or a location of device 600A.

In response to detecting inputs (e.g., input 650E) on keyboard 620, device 600A enters content into message compose field 610D, and in response to input 650D selecting button 605 (e.g., a done button or send button), the digital call assistant provides a message to the caller according to the content in message compose field 610D. This enables a user to create a customized message to the caller. In some embodiments, device 600A composes and/or sends a message to the caller in response to detecting voice inputs (e.g., a user can dictate a customized message). Alternatively, or in addition, device 600A detects selection of a suggested reply, such as input 650C on suggested reply 618A.

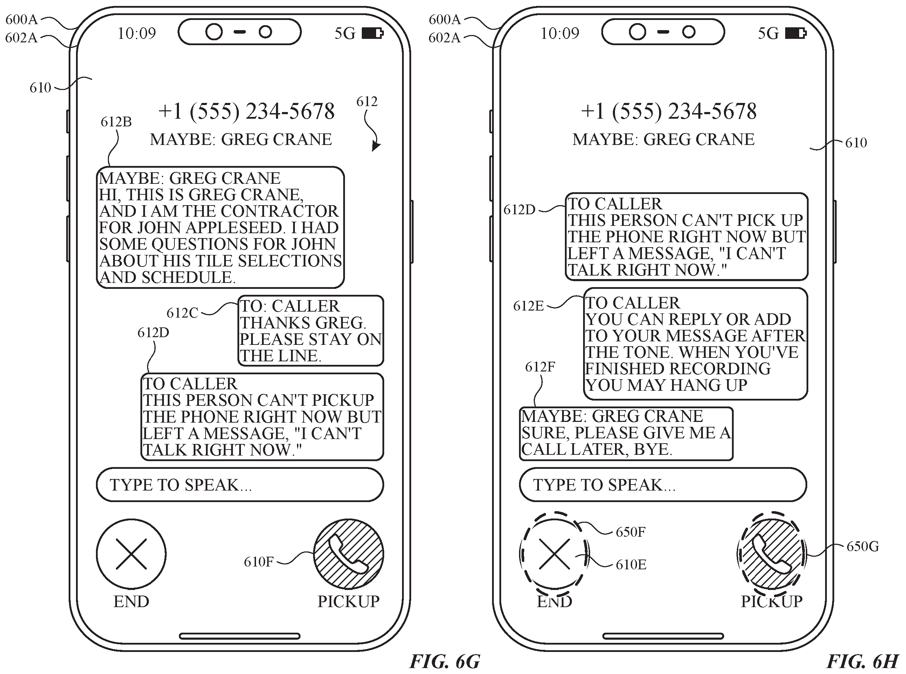

In response to detecting a request to send a reply to the caller (e.g., either a customized reply or a suggested reply), the digital call assistant provides an audio message to the caller in accordance with the selected reply. For example, as shown in FIG. 6G, in response to detecting input 650C selecting suggested reply 618A, the digital call assistant provides an audio message to the caller and device 600A updates description 612 to include message 612D showing a transcript of the message provided by the digital call assistant. Message 612D shows that the audio message from the digital call assistant includes context (e.g., "This person can't pick up the phone right now, but left a message.") and the selected reply (e.g., "I can't talk right now").

After message 612D is provided to the caller, the digital call assistant provides a prompt for the caller to take further action. For example, in FIG. 6H, the digital call assistant tells the caller that they can provide additional information after a tone and then hang up, as shown in message 612E. After message 612E, the caller provides another voice response represented by message 612F.

After the caller provides the response represented by message 612F, end screening option 610E and answer option 610F remain enabled (e.g., until the caller hangs up). In response to detecting input 650G selecting answer option 610F in FIG. 6H, device 600A answers the call and displays call user interface 622 as shown in FIG. 6J. Alternatively, if no input is detected in FIG. 6H and the caller does not hang up, device 600A outputs ringtone 607 and/or tactile output 609 as shown in FIG. 6I. In FIG. 6I, device 600A detects input 650H selecting answer option 610F. In response to detecting input 650H, device 600A answers the call and displays call user interface 622 as shown in FIG. 6J.

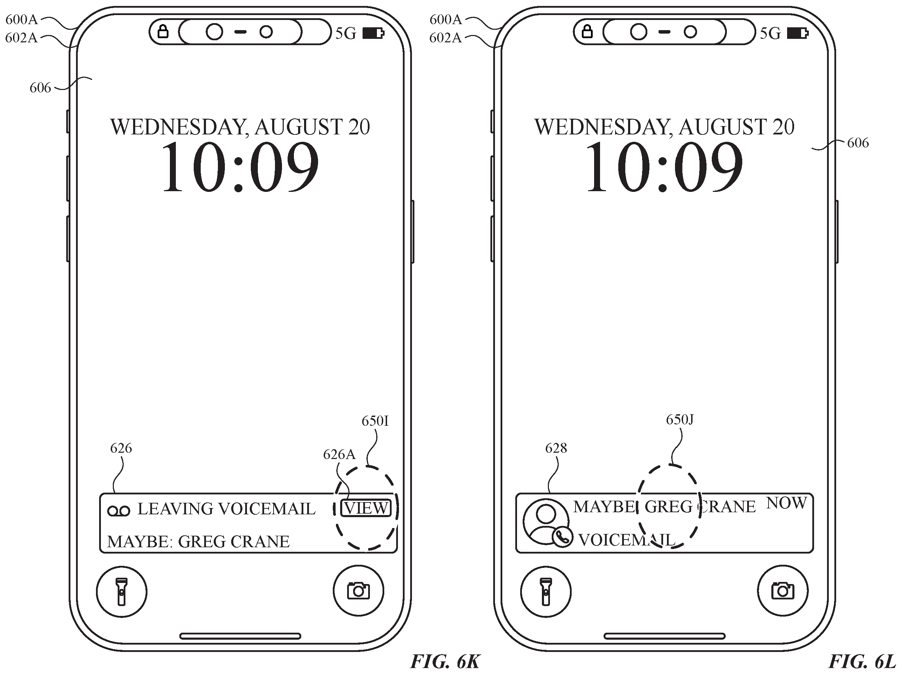

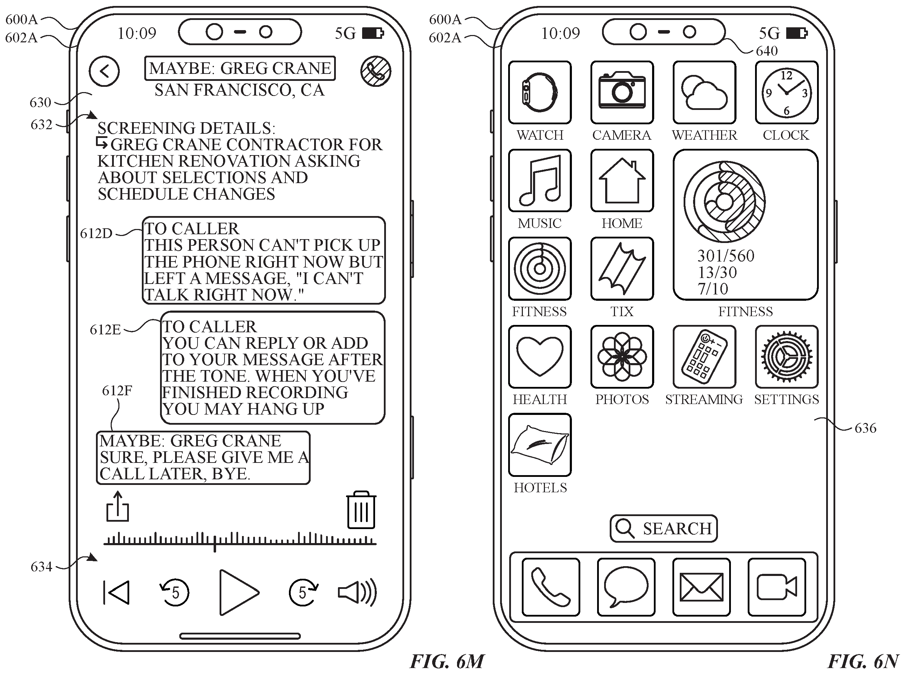

Returning to FIG. 6H, in response to detecting input 650F selecting end screening option 610E, device closes call screening interface 610 and displays user interface 606 as shown in FIG. 6K. In FIG. 6K, device 600A displays voicemail notification 626, which indicates that the caller is leaving a voicemail. In response to detecting input 650I on view option 626A, device 600A displays voicemail interface 630 shown in FIG. 6M. Alternatively, if the caller hangs up, device 600A displays voicemail notification 628 as shown in FIG. 6L. In response to detecting input 650J selecting voicemail notification 628, device 600A displays voicemail interface 630 shown in FIG. 6M. Voicemail interface 630 includes call screening information 632. Call screening information 632 optionally includes a transcript and/or summary of a voice message left by the caller and/or the output of the digital call assistant during the call screening process. Voicemail interface 630 includes controls 634 for controlling (e.g., playing, rewinding, and/or fast forwarding) audio of the voicemail (e.g., audio of the caller and/or the digital call assistant during the call screening process).

FIGS. 6N-6Q illustrate an embodiment in which the call from the unknown caller is received while device 600A is in a different state than in FIG. 6A (e.g., device 600A is unlocked, in a standard operating state, and/or being actively used in FIG. 6A). In FIG. 6N, device 600A displays home screen 636. In some embodiments, device 600A displays an application user interface (e.g., of a messaging application, email application, web browsing application, map application, or other application that is open on device 600) while device 600A is in the state represented by FIG. 6N.

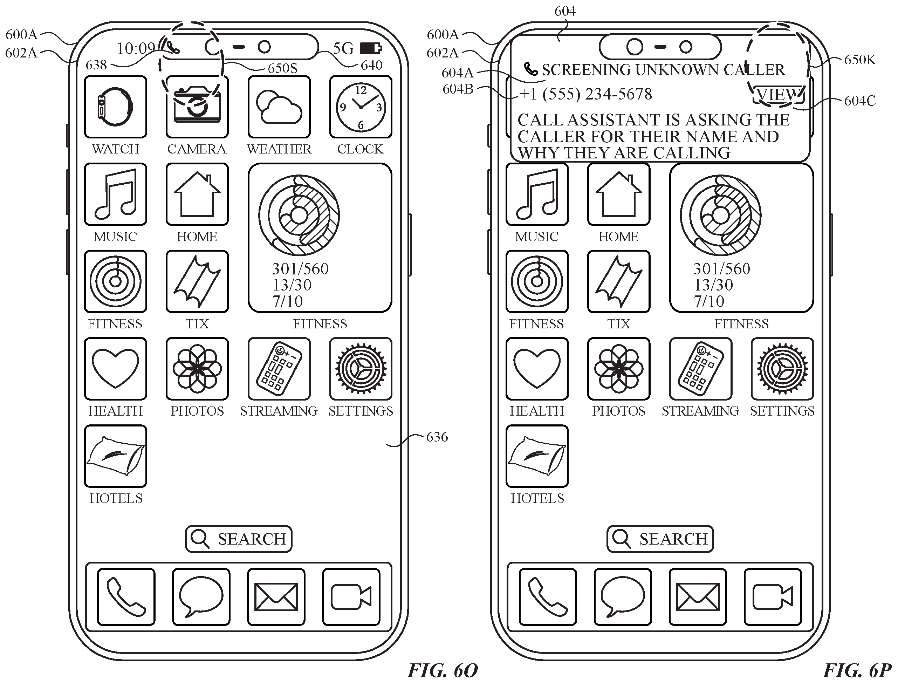

While device 600A is in the state represented by FIG. 6N, device 600A receives a call. In accordance with a determination that the set of call screening criteria is met (e.g., call screening is enabled and the call is from an unknown caller, such as the same caller as in FIG. 6B), the call screening process is initiated and device 600A displays call notification 638 in dynamic region 640 of display 602, as shown in FIG. 6O. In FIG. 6O, device 600A detects input 650S selecting call notification 638. In response to detecting input 650S, device 600A displays call screening notification 604 as shown in FIG. 6P. Device 600A displays call screening notification by expanding dynamic region 640 and displaying call screening notification 604 in expanded dynamic region 640. Like in FIG. 6B, call screening notification 604 in FIG. 6P includes indication 604A that the unknown caller is being screen, call ID 604B (e.g., a phone number and/or potential name of the caller), and screening status 604C. Like in FIG. 6B, because the call in FIG. 6P is from an unknown caller, device 600A forgoes (or, optionally, delays) outputting a ringtone or displaying an incoming call user interface (e.g., call user interface 622 shown in FIG. 6J or call user interface 644 shown in FIG. 6R).

In FIG. 6P, device 600A detects input 650K selecting call screening notification 604. In response to detecting input 650K, device 600A displays call screening interface 610 as shown in FIG. 6C and the call screening process proceeds as described with reference to FIGS. 6C-6M. Alternatively (e.g., if call screening notification 604 is not selected), the call screening process continues (e.g., to the state described in FIG. 6I), and device 600A outputs ringtone 607, updates call screening notification 604 based on the information obtained in the call screening process, and displays end call option 642A (e.g., similar to end call option 610G in FIG. 6I) and answer option 642B (e.g., similar to answer option 610F in FIG. 6I), as shown in FIG. 6Q. In response to detecting selection of end call option 642A, device 600A dismisses call screening notification 604 and/or ends the call screening process. In response to detecting selection of answer option 642B, device 600A answers the call (e.g., and displays call user interface 622 in FIG. 6J).

FIGS. 6R-6U illustrate an example in which call screening is not initiated. In FIG. 6R, device 600A receives a call from a known caller. In some embodiments, a known caller is an entity (e.g., a phone number, username, and/or account) that is recognized by the computer system and/or corresponds to an entry (e.g., contact information and/or known entity information) saved in memory accessible to the computer system (e.g., memory of the computer system and/or a cloud storage account). For example, in some embodiments, a known caller is a caller that is a saved contact and/or is designated as a known entity of device 600A (e.g., as described with reference to FIGS. 8F-8I).

In response to receiving the call, and in accordance with a determination that the set of call screening criteria is not met (e.g., call screening is not enabled and/or the call is from a known caller), device 600A outputs ringtone 607 and displays incoming call user interface 644 as shown in FIG. 6R. Incoming call user interface 644 includes a representation (e.g., an image, photo, avatar, and/or other representation) of the caller, decline option 644A, answer call option 644B, menu option 644C, and reply option 646. In response to detecting selection of answer call option 644B, device 600A answers the incoming call and in response to detecting selection of decline option 644A, device 600A dismisses incoming call user interface 644 and declines the call (e.g., sends the call to voicemail). In some embodiments, in response to detecting input 650M selecting menu option 644C, device 600A displays additional options associated with the incoming call, such as, e.g., an option to compose and/or send a text message to the caller and/or set a reminder to call the caller.

In FIG. 6R, device 600A detects input 650L selecting reply option 646. In response to detecting input 650L, device 600A activates a digital call assistant session to enable sending real-time audio messages to the caller via the digital call assistant without answering the call. For example, in response to detecting input 650L, device 600A displays user interface 648 as shown in FIG. 6S. User interface 648 includes message compose field 648A, keyboard 648B, and suggested messages 652. Message compose field 648A and keyboard 648B can be used to compose and/or send customized live audio messages to the caller. In some embodiments, device 600A composes a message in response to detecting voice inputs (e.g., a user can dictate a customized message). Alternatively, or in addition, one or more of suggested messages 652 can be selected to send a corresponding message to the caller (e.g., as described in FIGS. 6F-6G). In FIG. 6S, device 600A detects input 650N, which represents inputs on keyboard 648B and selection of button 605. In response to detecting input 650N, device 600A enters a corresponding message into message compose field 648A and the digital call assistant outputs a live audio message to the caller according to the composed message. After the live audio message is sent to the caller, device 600A displays description 654 of the digital call assistant session, including message 654A of the live audio message sent in FIG. 6S, along with end option 648C and answer option 648D.

Device 600A updates description 654 as the status of the digital call assistant session changes. For example, the digital call assistant outputs another live audio message to the caller followed by a response from the caller. In response, device 600A updates description 654 with message 654B describing the additional live audio message by the digital call assistant and message 654C describing the response from the caller.

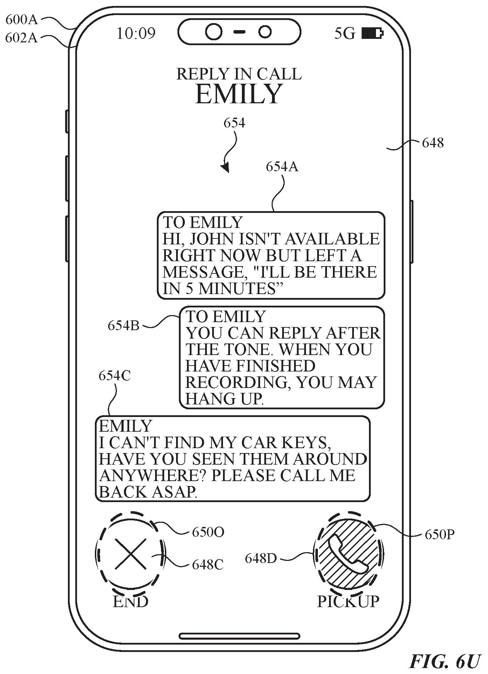

In FIG. 6U, in response to detecting input 6500 selecting end option 648C, device 600A dismisses user interface 648 (e.g., device 600A ends the digital call assistant session and displays incoming call user interface 644 or declines the incoming call). Alternatively, in response to detecting input 650P selecting answer option 648D, device 600A answers the call.

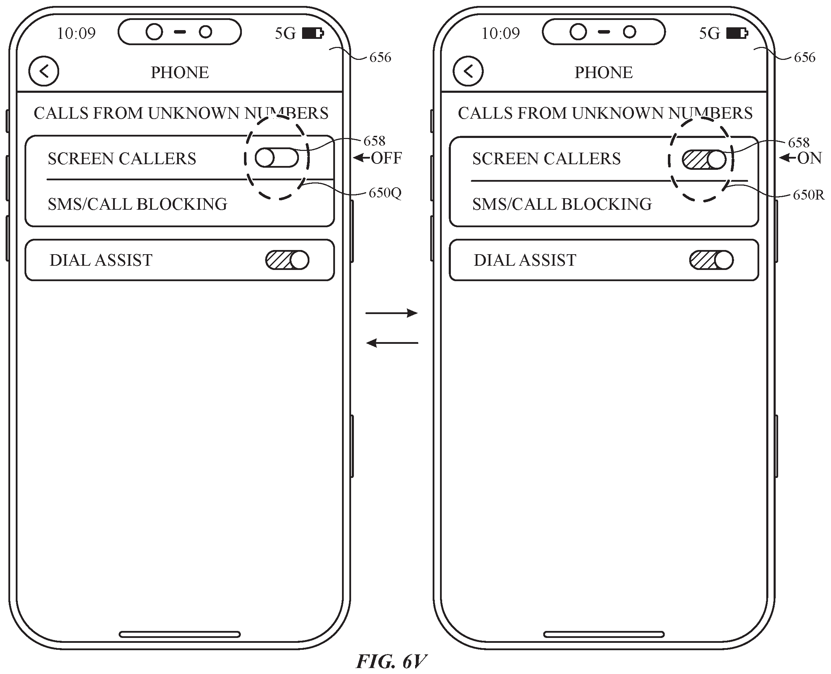

FIG. 6V illustrates a technique for enabling and/or disabling a call screening function, in accordance with some embodiments. In FIG. 6V, device 600A displays settings user interface 656, which includes controls for settings related to handling calls from unknown numbers. Settings user interface 656 includes call screening option 658. In response to detecting input 650Q while call screening option 658 is OFF (e.g., as shown on the left side of FIG. 6V), device 600A enables call screening and sets call screening option 658 to ON (e.g., as shown on the right side of FIG. 6V). In response to detecting input 650R while call screening option 658 is ON (e.g., as shown on the right side of FIG. 6V), device 600A disabled call screening and sets call screening option 658 to OFF (e.g., as shown on the left side of FIG. 6V). In some embodiments, device 600A does not perform the call screening functions described in FIGS. 6B-6Q if call screening option 658 is OFF (e.g., the set of call screening criteria is not met if call screening option 658 is OFF).

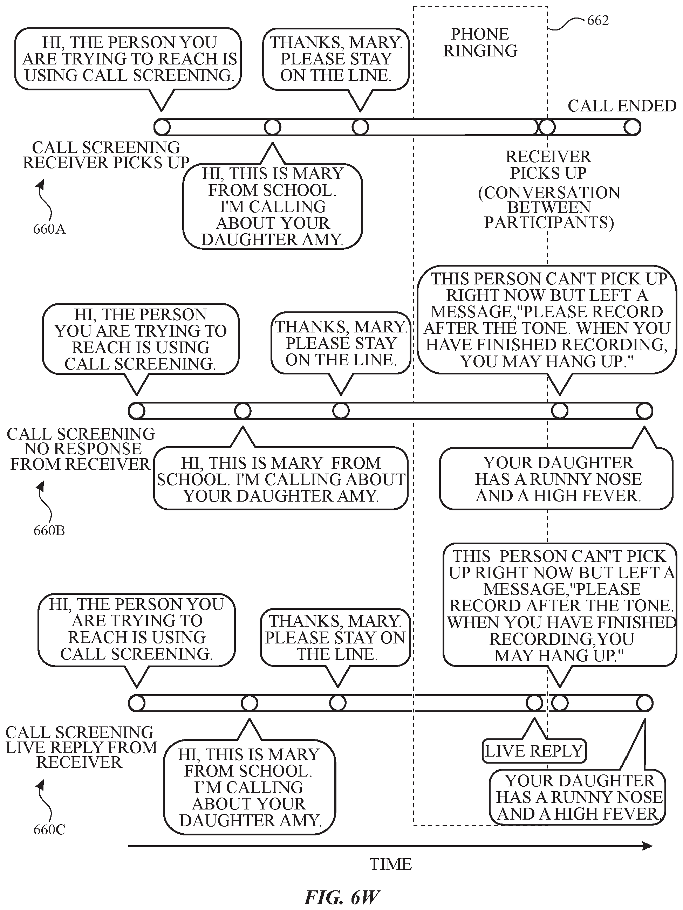

FIG. 6W illustrates examples of the call screening process, in accordance with some embodiments. FIG. 6W illustrates the progression over time (from left to right) of three different scenarios, scenario 660A, scenario 660B, and scenario 660C. In each scenario, the speech bubbles above the horizontal bar represent live audio messages from the digital call assistant, and the speech bubbles below the horizontal bar represent live voice responses from the caller via the digital assistant. Dashed box 662 represents a window in time in which device 600A is outputting a ringtone. In scenario 660A, call screening is initiated and a receiver (e.g., device 600) picks up (e.g., answers the call) during the ringtone window. In scenario 660B, call screening is initiated and completes without a response from the receiver (e.g., without a response from device 600). In scenario 660C, call screening is initiated and the receiver (e.g., device 600) provides a live reply (e.g., a live audio message via the digital call assistant).

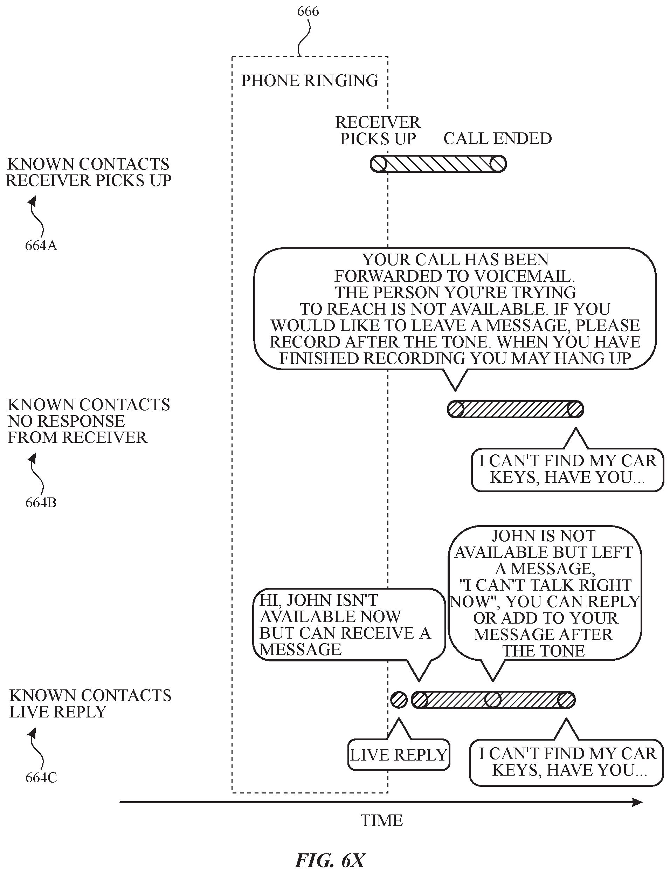

FIG. 6X illustrates examples of calls from a known caller, in accordance with some embodiments. FIG. 6X illustrates the progression over time (from left to right) of three different scenarios, scenario 664A, scenario 664B, and scenario 664C. In each scenario, the speech bubbles above the horizontal bar represent live audio messages from the digital call assistant, and the speech bubbles below the horizontal bar represent live voice responses from the caller via the digital assistant. Dashed box 666 represents a window in time in which device 600A is outputting a ringtone. In scenario 664A, the receiver (e.g., device 600) picks up (e.g., answers the call) during the ringtone window. In scenario 664B, the receiver does not pick up and the caller is sent to voicemail after the ringtone window. In scenario 664C, the receiver initiates a digital call assistant session (e.g., which causes device 600A to stop ringing) and sends a live audio message via the digital call assistant.

FIG. 7 is a flow diagram illustrating a method for screening calls using a computer system in accordance with some embodiments. Method 700 is performed at a computer system (e.g., 100, 300, 500, 600A, 600B, 600C, a smart phone, a smart watch, a tablet computer, a laptop computer, a desktop computer, a wearable device, and/or a head-mounted device) that is in communication with (e.g., includes and/or is connected to) one or more display generation components (e.g., 112, 602A, 602B, 602C, one or more displays, one or more touch-screen displays, one or more monitors, a holographic display system, a transparent display, and/or a head-mounted display system) and one or more input devices (e.g., 112, 116, 602A, 602B, 602C, a touch-sensitive surface (e.g., a touch-sensitive display); a mouse; a keyboard; a remote control; a visual input device; an audio input device (e.g., a microphone); a biometric sensor (e.g., a fingerprint sensor, a face identification sensor, a gaze tracking sensor, and/or an iris identification sensor); a camera (e.g., an infrared camera, depth camera, visible light camera, and/or gaze tracking camera); a movement input sensor (e.g., an accelerometer and/or a gyroscope); a mechanical input device (e.g., a depressible input mechanism, a button, a rotatable input mechanism, a crown, and/or a dial); and/or an RF signal input device (e.g., an antenna)). Some operations in method 700 are, optionally, combined, the orders of some operations are, optionally, changed, and some operations are, optionally, omitted.

As described below, method 700 provides an intuitive way for screening calls. The method reduces the cognitive burden on a user for screening calls, thereby creating a more efficient human-machine interface. For battery-operated computing devices, enabling a user to screen calls faster and more efficiently conserves power and increases the time between battery charges.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently.

Performing an operation when a set of conditions has been met without requiring further user input (such as by automatically displaying either an incoming call user interface with a reply element for calls associated with a first type of caller or a call screening notification for calls associated with a second type of caller) enhances the operability of the device by reducing unnecessary inputs and/or steps to navigate through different user interfaces or sets of controls, reducing energy usage by the device. Providing additional control options (such as by displaying a reply element in an incoming call user interface and/or in response to detecting selection of a call screening notification that provides the ability to send an audio message to a caller without answering the call) without cluttering the UI with additional displayed controls enhances the operability of the device by reducing unnecessary inputs and/or steps to navigate through different user interfaces or sets of controls, reducing energy usage by the device. Providing improved feedback (such as by displaying and/or updating call screening information, such as status information and/or a description of interaction with a digital call assistant, in a call screening notification and/or in a call screening user interface while a digital call assistant is active and/or outputting a ringtone if a set of call screening criteria is met, such as a determination that a digital call assistant has obtained an initial set of information from a caller) enhances the operability of the device by reducing accidental and mistaken inputs, reducing energy usage by the device.

The computer system receives (702) a call (e.g., the incoming call in FIG. 6B, FIG. 6O, FIG. 6P, or FIG. 6R, a phone call, an audio call, a video call, and/or an audio/video call). While (704) the call is incoming (e.g., while the computer system is not connected to the call, while the call is not established, while the call is being delivered to the computer system, and/or before the call is answered at the computer system) (or, in some embodiments, in response to receiving the call), in accordance with a determination that the call is associated with (e.g., is from, was originated by, and/or corresponds to) a first type of caller (e.g., a known caller), the computer system displays (706), via the one or more display generation components, an incoming call user interface (e.g., 644), including displaying (e.g., in the incoming call user interface) a first reply element (e.g., 646, a selectable graphical element, button, icon, and/or affordance) that when selected (e.g., via input 650L) initiates a process (e.g., the process described in FIGS. 6S-6U) for providing (e.g., sending, transmitting, playing, and/or outputting) an audio message (e.g., a live audio message) to the caller in the call (e.g., via a digital call assistant) without answering the call (e.g., without establishing the call at the computer system and/or without connecting the computer system to the call). For example, in response to detecting an input corresponding to selection of the first reply element, the computer system initiates, without answering the call, a process for providing (e.g., sending) an audio message (e.g., a live audio message) to the caller in the call. In some embodiments, the computer system displays a call notification in response to receiving the call (e.g., if the call is received while the computer system is unlocked and/or being actively used). In some embodiments, the computer system displays the incoming call user interface (including the first reply element) in response to detecting an input corresponding to selection of the call notification. In some embodiments, the first type of caller includes a known caller, an entity that is recognized by the computer system, and/or an entity corresponding to an entry saved in memory accessible to the computer system (e.g., memory of the computer system and/or a cloud storage account) that contains, e.g., a name, phone number, and/or other information such as an email address or social media profile (e.g., a saved contact). While (704) the call is incoming (e.g., while the computer system is not connected to the call, while the call is not established, while the call is being delivered to the computer system, and/or before the call is answered at the computer system) (or, in some embodiments, in response to receiving the call), in accordance with a determination that the call is associated with (e.g., is from, was originated by, and/or corresponds to) a second type of caller (e.g., an unknown caller) that is different from the first type of caller, the computer system displays (708), via the one or more display generation components, a call screening notification (e.g., 604, 638, a selectable graphical element, button, icon, and/or affordance), wherein the call screening notification is displayed while a digital call assistant (e.g., a call screening process and/or a call screening session) is active for (e.g., connected to, operating in, communicating with, and/or interacting with) the call (e.g., via a temporary audio communication channel). While displaying the call screening notification, the computer system detects (710), via the one or more input devices, an input (e.g., 650A, 650S, 650K, an air gesture, a gaze, a voice command, a touch input, and/or a button press) corresponding to selection of (e.g., directed to a location of) the call screening notification. In response to detecting the input corresponding to selection of the call screening notification, the computer system displays (712), via the one or more display generation components, a second reply element (e.g., 610D, a selectable graphical element, button, icon, affordance, and/or a message compose field) that when selected (e.g., via input 650B) initiates a process (e.g., the process described in FIGS. 6E-6G and/or ) for providing (e.g., sending, transmitting, playing, and/or outputting) an audio message (e.g., a live audio message) to the caller in the call (e.g., via the digital call assistant) without answering the call (e.g., without establishing the call at the computer system and/or without connecting the computer system to the call). For example, in response to detecting an input corresponding to selection of the second reply element, the computer system initiates, without answering the call, a process for providing (e.g., sending) an audio message (e.g., a live audio message) to the caller in the call. In some embodiments, the digital call assistant is activated for the call (e.g., without the call being answered) in response to receiving the call and in accordance with a determination that the call is associated with the second type of caller. In some embodiments, the call screening notification includes an indication (e.g., text, a graphic, an animation, a color, and/or a visual appearance) that the digital call assistant is active for the call. In some embodiments, the second type of caller includes an unknown caller, an entity that is not recognized by the computer system, and/or an entity that does not correspond to an entry saved in memory accessible to the computer system (e.g., the caller is not a saved contact).

In some embodiments, displaying the incoming call user interface includes displaying (e.g., in the incoming call user interface), via the one or more display generation components, an accept call element (e.g., 644B, a selectable graphical element, button, icon, and/or affordance) that when selected connects the computer system to the call (e.g., answers the call); and displaying the call screening notification includes displaying (e.g., initially displaying) the call screening notification without the accept call element (e.g., the computer system displays the call screening notification without an option for answering the call; e.g., FIGS. 6B, 6O, and 6P do not include answer call option 644B). In some embodiments, the computer system detects, via the one or more input devices, an input corresponding to selection of the accept call element and, in response to detecting the input corresponding to selection of the accept call element, connects to (e.g., answers) the call. In some embodiments, the computer system displays the call screening notification in accordance with a determination that a call screening setting is enabled. In some embodiments, the computer system enables and/or disables the call screening setting in response to detecting an input (e.g., directed to a call screening setting element in a settings user interface displayed via the one or more display generation components). In some embodiments, while the call is incoming and in accordance with a determination that the call is associated with a third type of caller (e.g., a caller that is known to be spam and/or junk), the computer system forgoes activating the digital call assistant (e.g., the computer system displays a call notification and, optionally, silences a ringtone without activating the digital call assistant). In some embodiments, the third type of caller is different from (e.g., is not) the first type of caller or the second type of caller.

In some embodiments, in response to detecting the input corresponding to selection of the call screening notification, the computer system displays, via the one or more display generation components, a call screening user interface (e.g., 610) that includes information (e.g., 610C, 612, 612A, 612B, 612C, 612D, 612E, 612F, and/or 616) about the digital call assistant. In some embodiments, the computer system displays the second reply element concurrently with (e.g., in) the call screening user interface. In some embodiments, displaying the call screening user interface includes displaying (e.g., concurrently with and/or in the call screening user interface) an accept call element (e.g., 610F) that when selected connects the computer system to the call (e.g., answers the call, as shown in FIG. 6J). In some embodiments, the computer system detects, via the one or more input devices, an input corresponding to selection of the accept call element and, in response to detecting the input corresponding to selection of the accept call element, connects to (e.g., answers) the call. In some embodiments, displaying the call screening user interface includes displaying screening status information (e.g., 610C, 612, 612A, 612B, 612C, 612D, 612E, 612F, 616, text, an image, a color, and/or an animation) that is based on a status of the digital call assistant (e.g., a call screening status and/or an action that the digital call assistant has taken or is currently taking). For example, in accordance with a determination that the digital call assistant is in a first state, the screening status information includes first information; and in accordance with a determination that the digital call assistant is in a second state that is different from the first state, the screening status information includes second information that is different from the first information. In some embodiments, the digital call assistant requests identification information from the caller and/or information about a reason for the call.

In some embodiments, while displaying the second reply element (e.g., in the call screening user interface), the computer system detects, via the one or more input devices, an input (e.g., 650B, a tap and/or other input) corresponding to selection of (e.g., directed to a location of) the second reply element; and in response to detecting the input corresponding to selection of the second reply element, the computer system initiates the process for providing an audio message to the caller in the call without answering the call (e.g., as shown in FIGS. 6F-6G). In some embodiments, the call screening user interface includes a message compose field and/or a send button that when selected causes an audio message, in the call to the caller, that is based on (e.g., includes) content included in the message compose field. In some embodiments, the computer system includes content in the message compose field that corresponds to a set of one or more inputs (e.g., inputs on a keyboard and/or speech inputs) detected by the computer system (e.g., the user can provide inputs to create a customized message in the call to the caller via the digital call assistant). In some embodiments, initiating the process for providing an audio message to the caller in the call without answering the call includes providing (e.g., displaying) message options (e.g., suggested messages and/or pre-generated messages such as "I'll call you later," "Send more information," and/or "I can't talk right now") that can be selected to provide a corresponding audio message in the call to the caller without answering the call (e.g., the computer system displays the message options in response to detecting the input corresponding to selection of the second reply element). In some embodiments, the message options are based on information provided by the caller to the digital call assistant. For example, in accordance with a determination that the caller provided first information to the digital call assistant, the computer system displays a first set of message options (e.g., corresponding to a first set of audio messages); and in accordance with a determination that the caller provided second information to the digital call assistant, the computer system displays a second set of message options (e.g., corresponding to a second set of audio messages) that is different from the first set of message options (e.g., the second set of message options includes one or more message options that are not included in the first set of message options). In some embodiments, the digital call assistant provides an audio message to the caller that includes an indication that a user of the computer system cannot answer the call (e.g., even if a message that is created by and/or selected by the user of the computer system does not include the indication that the user of the computer system cannot answer the call). In some embodiments, the digital call assistant provides an audio message to the caller that includes a prompt to leave a voice message (e.g., after the user of the computer system has sent a message to the caller via the digital call assistant). In some embodiments, in response to a determination (e.g., detecting) that the caller has disconnected from the call (e.g., the caller ended the call and/or hung up), a voicemail is created that includes audio provided by the caller to the digital call assistant.

In some embodiments, displaying the call screening user interface includes displaying (e.g., concurrently with and/or in the call screening user interface) a description (e.g., text, a transcript, a summary, and/or an image) of an audio message (e.g., 612A, 612C, 612D, and/or 612E) provided in the call to the caller by the digital call assistant (e.g., "To Caller: Hi, the person you're calling is using call screening."; "To Caller: Thanks, Greg. Please stay on the line."). In some embodiments, displaying the call screening user interface includes displaying (e.g., concurrently with and/or in the call screening user interface) a description (e.g., 612B, 612F, text, a transcript, a summary, and/or an image) of audio from the caller (e.g., voice response(s) to the digital call assistant). In some embodiments, the description of the audio from the caller includes content (e.g., a summary) generated by artificial intelligence. In some embodiments, the computer system displays the description of the audio from the caller in response to detecting that the caller has provided a response to the digital call assistant. In some embodiments, the computer system displays (e.g., in the call screening user interface and/or as part of the description of the audio from the caller) a potential name of the caller that is based on the audio from the caller.

In some embodiments, while displaying the call screening notification, the computer system detects, via the one or more input devices, a change in a status of the digital call assistant (e.g., a change in a status of a call screening process performed by the digital call assistant); and in response to detecting the change in the status of the digital call assistant, the computer system updates display of the call screening notification based on the change in status of the digital call assistant (e.g., as described in FIGS. 6P-6Q). For example, in response to the digital call assistant receiving a response from the caller and/or providing an audio message to the caller, the computer system updates the call screening notification to include a description of the response from the caller and/or the audio message to the caller. In some embodiments, the call screening notification is displayed in a dynamic region (e.g., a dynamic region of the one or more display generation components) that changes size and/or shape (e.g., expands and/or contracts) to display different content (e.g., different amounts of content) at different times (e.g., while different user interfaces are displayed). In some embodiments, when call screening is active (e.g., the digital call assistant is active), the computer system displays an indication that call screening is active in the dynamic region (e.g., the indication is not displayed when call screening is not active). In some embodiments, the indication that call screening is active is persistently displayed in the dynamic region (e.g., as the computer system navigates to different user interfaces and/or applications). In some embodiments, in response to detecting an input corresponding to selection of the indication that call screening is active, the computer system expands the dynamic region (e.g., and displays additional information about the status of the call screening).

In some embodiments, while the call is incoming, in accordance with a determination that the call is associated with the second type of caller, the computer system forgoes (e.g., silencing and/or delaying) output of a ringtone (e.g., the computer system does not initially ring in response to receiving a call from an unknown caller, as shown in FIGS. 6B, 6O, and 6P). In some embodiments, while the call is incoming and after forgoing (e.g., at least initially) output of a ringtone, in accordance with a determination that a set of call screening criteria is met (e.g., initial information has been obtained from the caller and/or the digital call assistant has reached a particular state), the computer system outputs, via one or more output devices that are in communication with the computer system, a ringtone (e.g., 607) (e.g., as shown in FIGS. 6E and 6Q).

In some embodiments, while displaying the incoming call user interface, including displaying the first reply element, the computer system detects, via the one or more input devices, an input (e.g., 650L, a tap gesture, and/or other input) corresponding to selection of (e.g., directed to a location of) the first reply element; and in response to detecting the input corresponding to selection of the first reply element, the computer system initiates the process for providing an audio message to the caller in the call without answering the call (e.g., as described in FIGS. 6S-6T). In some embodiments, the process for providing an audio message to the caller in the call without answering the call includes: detecting, via the one or more input devices, a set of one or more inputs (e.g., 650N) corresponding to a request to generate and send a message (e.g., a customized message entered via a keyboard and/or a suggested message provided by the computer system); and in response to detecting the set of one or more inputs corresponding to the request to generate and send the message, providing (e.g., causing output of), without answering the call, an audio message (e.g., represented by 654A) in the call (e.g., via the digital call assistant) based on the request to generate and send the message (e.g., the digital assistant provides the generated message to the caller). In some embodiments, the computer system displays a description (e.g., a transcript and/or a summary) of the audio message provided in the call and/or audio (e.g., a reply) from the caller (e.g., after the digital call assistant provides the audio message). In some embodiments, the computer system concurrently displays (e.g., in a live reply user interface) the description of the audio message and an accept call element (e.g., a selectable graphical element, button, icon, and/or affordance) that when selected connects the computer system to the call (e.g., answers the call). In some embodiments, after providing the audio message based on the request to generate and send the message, the computer system provides one or more elements and provides one or more additional audio messages in the call in response to detecting one or more inputs (e.g., the computer system provides an interface to send additional audio messages). In some embodiments, after providing the audio message based on the request to generate and send the message, and in accordance with a determination that a set of voice message prompt criteria is met, an audio message (e.g., a follow-up voice message) is provided to the caller (e.g., via the digital call assistant) that includes a prompt to leave a voice message (e.g., "You can reply after the tone. When you have finished recording, you may hang up."). In some embodiments, in response to detecting the input corresponding to selection of the first reply element, the computer system forgoes (e.g., delays and/or temporarily forgoes) initiating a voicemail activity (e.g., sending the caller to voicemail). For example, if the user selects the first reply element, the computer system delays sending the caller to voicemail (e.g., to give the user of the computer system a chance to generate and/or select a message to be provided by the digital call assistant). In some embodiments, after detecting the input corresponding to selection of the first reply element and before an audio message that is based on a request from a user of the computer system is provided to the caller, an audio message is provided (e.g., via the digital call assistant) to the caller (e.g., "John isn't available right now but can receive a message"). For example, the digital call assistant outputs a holding message to the caller while the user of the computer system generates and/or selects a message. In some embodiments, displaying the incoming call user interface includes: in accordance with a determination that the call is associated with a business entity, the computer system displays (e.g., in the incoming call user interface) a name and/or logo associated with the business entity. In some embodiments, the name and/or logo is based on (e.g., obtained from) information in a maps application and/or from a cellular carrier.

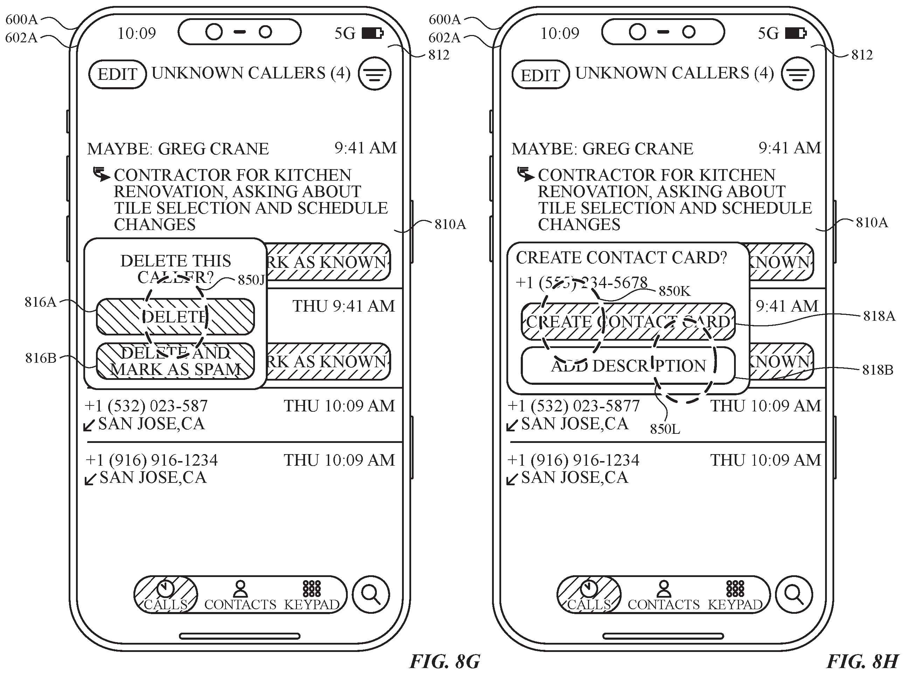

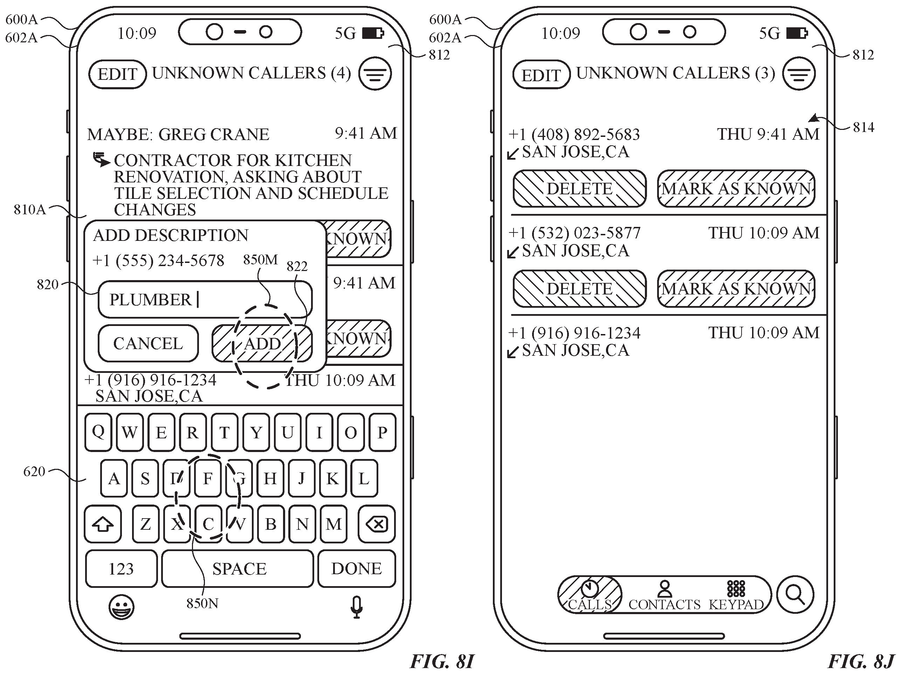

In some embodiments, after receiving a respective call associated with the second type of caller for which the digital call assistant was active (e.g., a call that was screened), the computer system displays, via the one or more display generation components, a representation (e.g., 810A in FIG. 8F) of the respective call in a list of representations of calls (e.g., a call log). In some embodiments, the representation of the respective call is displayed in a list of recent calls and/or a list of calls from unknown callers. In some embodiments, the representation of the respective call is displayed in a list of representations of calls associated with the second type of caller (e.g., unknown callers) independent of whether an audio message was provided to the caller based on content selected by the user of the computer system (e.g., even if the user receiving the call replied to the incoming call via the digital call assistant). In some embodiments, the representation of the respective call includes a description (e.g., a partial transcript and/or summary) of audio provided by the caller to the digital call assistant. In some embodiments, the computer system detects an input corresponding to selection of the representation of the respective call and, in response to detecting the input corresponding to selection of the representation of the respective call, the computer system displays additional information (e.g., details) about the call screening session. In some embodiments, while displaying the representation of the respective call (e.g., in the list of representations of calls), the computer system displays, via the one or more display generation components, a selectable element (e.g., 814A2 and/or a mark as known option); the computer system detects, via the one or more input devices, an input (e.g., 850I, a tap gesture and/or other input) corresponding to selection of (e.g., directed to a location of) the selectable element; and in response to detecting the input corresponding to selection of the selectable element, the computer system initiates a process (e.g., the process described in FIGS. 8F, 8H, and 8I) for designating a caller associated with the respective call as the first type of caller (e.g., a known caller).

Note that details of the processes described above with respect to method 700 (e.g., FIG. 7) are also applicable in an analogous manner to the methods described below. For example, methods 900 and/or 1100 optionally include one or more of the characteristics of the various methods described above with reference to method 700. For example, the communication items described in methods 900 and/or 1100 can be screened according to the techniques described in method 700. For brevity, these details are not repeated below.

FIGS. 8A-8BG illustrate exemplary user interfaces for managing communication items (e.g., filtering communication items), in accordance with some embodiments. The user interfaces in these figures are used to illustrate the processes described below, including the processes in FIG. 9.

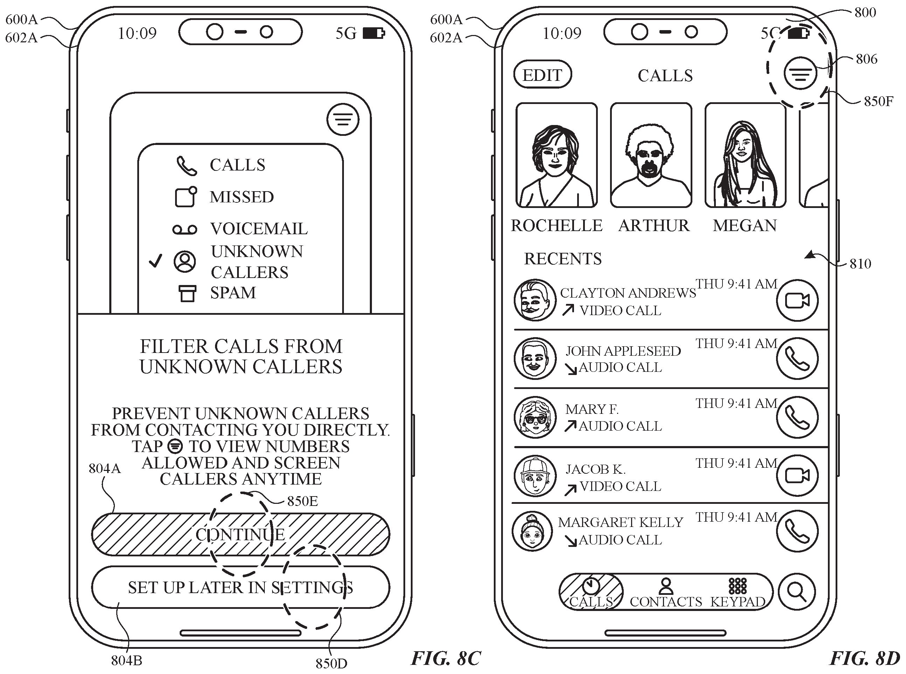

In FIG. 8A, device 600A displays home screen 636. In response to detecting input 850A selecting phone application icon 636A, device 600A displays phone application user interface 800 as shown in FIG. 8B. Phone application user interface 800 corresponds to calls tab 800A and displays list 810 of communication items representing respective communications (e.g., phone calls and/or video calls). For example, communication item 810A represents a recent incoming phone call from an unknown caller and communication item 810B represents a recent outgoing video call. In FIG. 8B, communication item 810A is displayed in list 810 because a communication filtering function that includes filtering calls from unknown callers is not currently enabled. In accordance with a determination that a set of filtering prompt criteria is met (e.g., including that the communication filtering function is not enabled), device 600A displays filtering prompt 802 in phone application user interface 800. In FIG. 8B, device 600A detects input 850C selecting filtering prompt 802. In response to detecting input 850C, device 600A displays information about a corresponding function for filtering communication items, continue option 804A, and dismiss option 804B, as shown in FIG. 8C. The function for filtering communication items is referred to as the communication filtering function. In response to detecting input 850D selecting dismiss option 804B, device 600A displays (e.g., re-displays) phone application user interface 800 without enabling the communication filtering function (e.g., and without filtering prompt 802). In response to detecting input 850E selecting continue option 804A, device 600A enables (e.g., activates) the communication filtering function.

FIG. 8D illustrates device 600A displaying phone application user interface 800 while the communication filtering function is enabled. Communication item 810A is not displayed in list 810 in FIG. 8D because the communication filtering function is enabled and communication item 810A is associated with an unknown caller. In response to detecting input 850F selecting filter menu option 806, device 600A displays filter menu 808 as shown in FIG. 8E. Filter menu 808 includes calls option 808A (e.g., the currently selected option) and unknown callers option 808B. In response to detecting input 850G selecting unknown callers option 808B, device 600A displays unknown callers user interface 812 as shown in FIG. 8F. Unknown callers user interface 812 displays a communication item only if the communication item is associated with an unknown caller (e.g., unknown callers user interface 812 only includes communication items associated with unknown callers). For example, list 814 includes communication item 810A because it corresponds to an incoming call from an unknown caller (e.g., for which call screening was performed as described in FIGS. 6A-6X) and communication item 814B corresponding to an incoming call from a different unknown caller. Because communication item 810A corresponds to a call from an unknown caller, device 600A displays delete option 814A1 and mark as known option 814A2 associated with communication item 810A. Similarly, because communication item 814B corresponds to a call from an unknown caller, device 600A displays delete option 814B1 and mark as known option 814B2 associated with communication item 814B. In FIG. 8F, list 814 includes other communication items associated with calls from unknown callers. In some embodiments, device 600A only displays delete and/or mark as known options for a predetermined number (e.g., one, two, three, or four) communication items in list 814.

In response to detecting input 850H selecting delete option 814A1, device 600A displays delete confirmation option 816A and spam option 816B, as shown in FIG. 8G. In response to detecting input 850J selecting delete confirmation option 816A, device 600A deletes communication item 810A but does not mark the caller associated with communication item 810A as spam (e.g., future calls from the caller associated with communication item 810A will not be treated as spam). Alternatively, in response to detecting an input selecting spam option 816B, device 600A deletes communication item 810A and marks the caller associated with communication item 810A as spam (e.g., future calls from the caller associated with communication item 810A will be treated as spam).

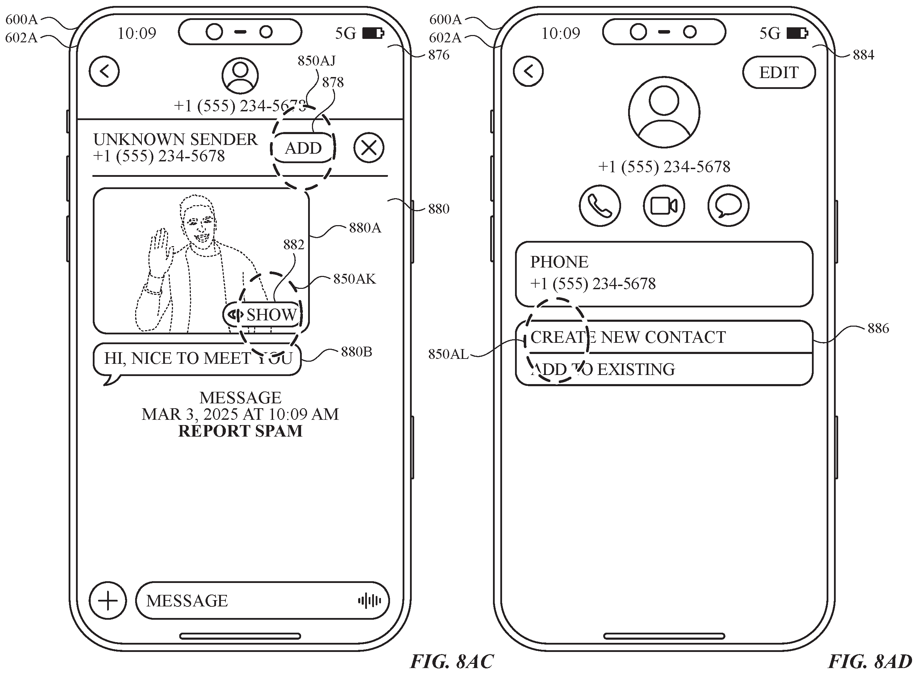

Returning to FIG. 8F, in response to detecting input 850I selecting mark as known option 814B2, device 600A displays create contact option 818A and add description option 818B as shown in FIG. 8H. In response to detecting input 850K selecting create contact option 818A, device 600A displays a user interface (e.g., user interface 884 in FIG. 8AD) for creating a saved contact entry with information of the caller associated with communication item 810A. Alternatively, in response to detecting input 850L selecting add description option 818B, device 600A displays add description element 820 for adding a description to the caller associated with communication item 810A, as shown in FIG. 8I. In response to detecting input 850N (e.g., one or more touch inputs) directed to keyboard 620, device 600A populates description element 820 with a description (e.g., "PLUMBER") corresponding to input 850N. While description element 820 is populated with a description, device 600A detect input 850M selecting add button 822. In response to detecting input 850M selecting add button 822, device 600A adds the description in description element 820 to the caller associated with communication item 810A and marks the caller associated with communication item 810A as a known caller.

FIG. 8J illustrates unknown callers user interface 812 after marking the caller associated with communication item 810A as known. As shown in FIG. 8J, communication item 810A is not displayed in unknown callers user interface 812 because the caller associated with communication item 810A is now marked as a known caller.

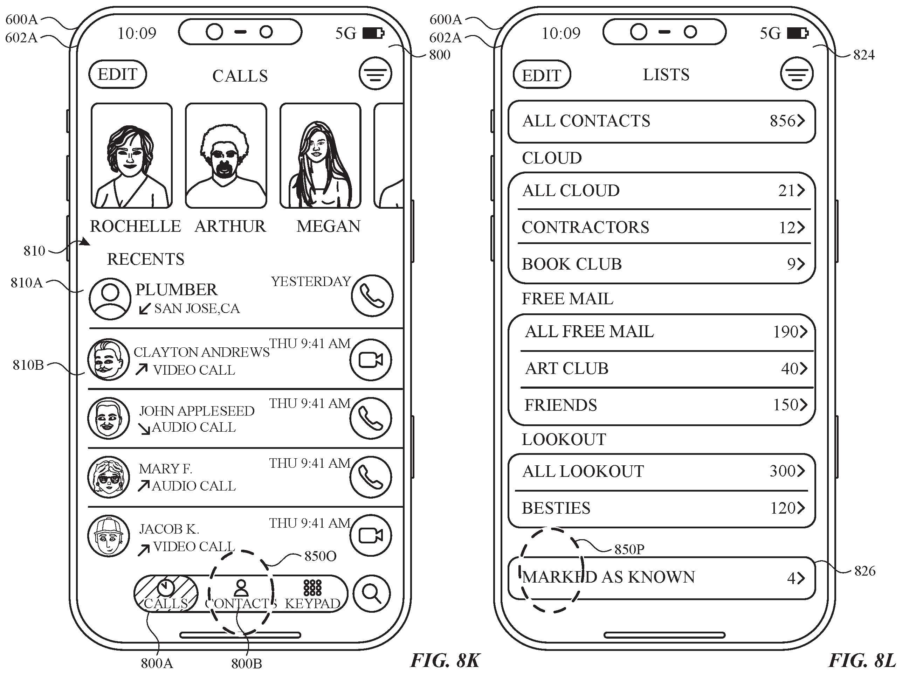

FIG. 8K illustrates phone application user interface 800 after marking the caller associated with communication item 810A as known. As shown in FIG. 8K, communication item 810A is displayed in list 810 because the caller associated with communication item 810A is now marked as a known caller. Communication item 810A is updated in list 810 to include the description added in FIG. 8I.

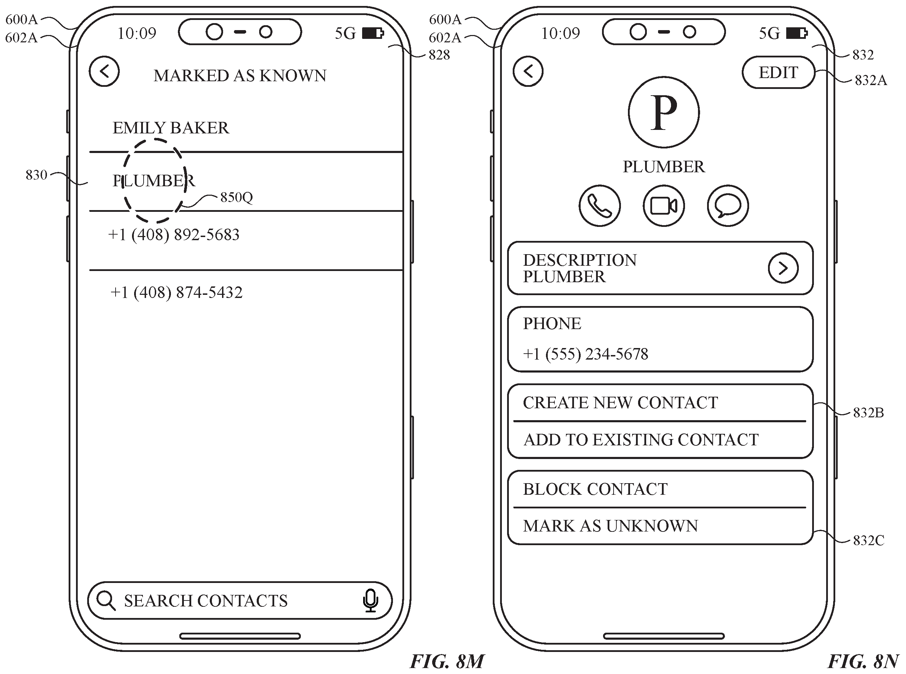

In FIG. 8K, device 600A detects input 8500 selecting contacts tab 800B. In response to detecting input 8500, device 600A displays contacts user interface 824 shown in FIG. 8L. Contacts user interface 824 includes items corresponding to different lists, such as different lists of contacts, and list item 826 corresponding to a list of entities that are marked as known but are not saved as a contact. In response to detecting input 850P selecting list item 826, device 600A displays user interface 828 as shown in FIG. 8M. User interface 828 includes a list of items corresponding to saved entities (e.g., callers) that are marked as known, including item 830 corresponding to the caller associated with communication item 810A. In response to detecting input 850Q selecting item 830, device 600A displays user interface 832 shown in FIG. 8N. User interface 832 includes information of the entity corresponding to item 830 (e.g., the caller associated with communication item 810A), including the description added in FIG. 8I and the phone number of the caller associated with communication item 810A. User interface 832 includes various options, including edit option 832A, create new contact option 832B, and mark as unknown option 832C. In response to detecting an input selecting edit option 832A, device 600A provides a user interface for editing the information associated with item 830 (e.g., to change the description). In response to detecting an input selecting create new contact option 832B, device 600A displays a user interface (e.g., a user interface analogous to user interface 884 in FIG. 8AD) for saving the entity associated with item 830 as a contact (e.g., not just as a known caller). In response to detecting an input selecting mark as unknown option 832C, device 600A marks the entity associated with item 830 as an unknown entity (e.g., an unknown caller) and, optionally, removes the description from the entity (e.g., disassociates the description "PLUMBER" from the number "+1 (555) 234-5678").

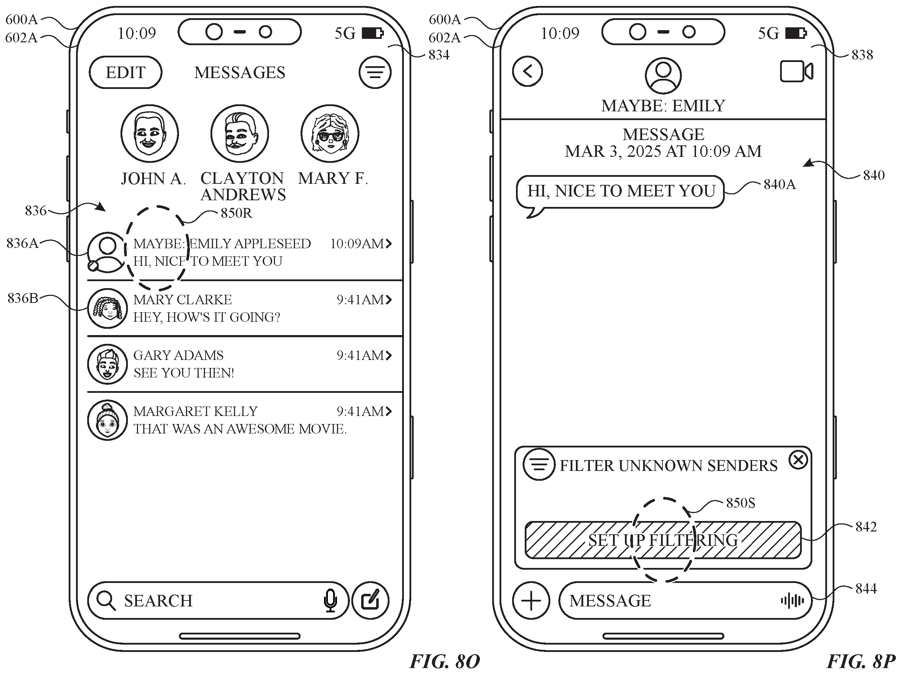

Returning to FIG. 8A, in some examples, device 600A detects input 850B selecting messages icon 636B. In response to detecting input 850B, device 600A displays messaging application user interface 834 as shown in FIG. 8O. Messaging application user interface 834 includes list 836 of message conversation items, including item 836A and item 836B. In response to detecting input 850R selecting item 836A, device 600A displays corresponding message conversation 838 shown in FIG. 8P. Message conversation 838 includes message region 840, which displays messages between the user of device 600A and a remote participant of message conversation 838, and message compose field for composing messages to send to the remote participant of message conversation 838. For example, message 840A is a message from the remote participant to the user of device 600A. The remote participant of message conversation 838 is an unknown sender. In some embodiments, an unknown sender is an entity (e.g., a phone number, username, and/or account) that is not recognized by the computer system and/or does not correspond to an entry (e.g., contact information and/or known entity information) saved in memory accessible to the computer system (e.g., memory of the computer system and/or a cloud storage account). For example, in some embodiments, an unknown sender is a sender that is not a saved contact and is not designated as a known entity of device 600A (e.g., as described with reference to FIGS. 8F-8I). In contrast, a known sender is an entity (e.g., a phone number, username, and/or account) that is recognized by the computer system and/or that corresponds to an entry (e.g., contact information and/or known entity information) saved in memory accessible to the computer system (e.g., memory of the computer system and/or a cloud storage account). For example, in some embodiments, a known sender is a sender that is a saved contact and/or is designated as a known entity of device 600A (e.g., as described with reference to FIGS. 8F-8I).

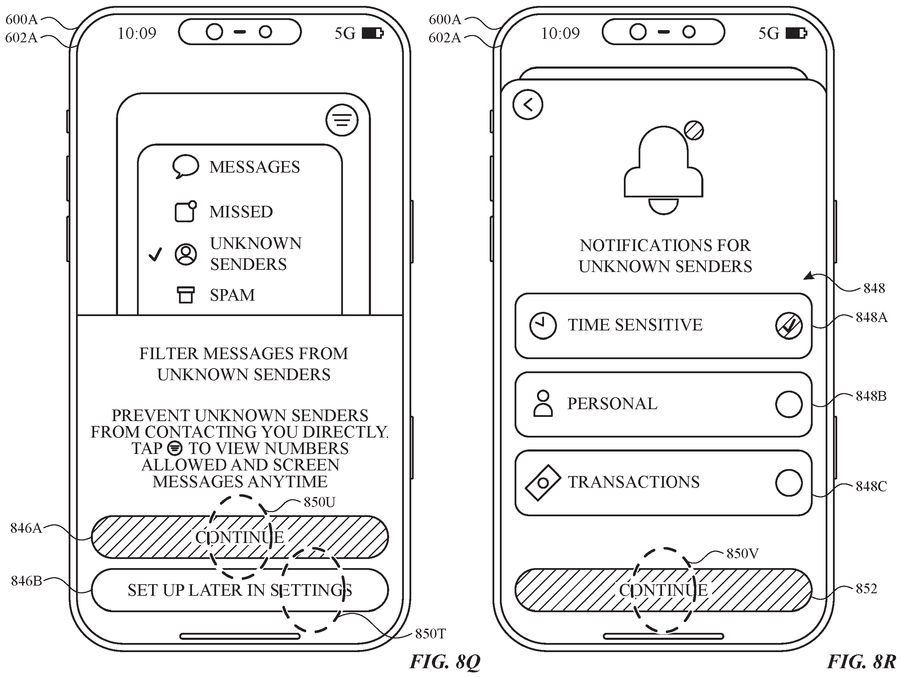

In accordance with a determination that a set of filtering prompt criteria is met (e.g., including that message filtering is not enabled and the sender of message 840A is an unknown sender), device 600A displays filtering prompt 842 in message conversation 838. In FIG. 8P, device 600A detects input 850S selecting filtering prompt 842. In response to detecting input 850S, device 600A displays information about a corresponding function for filtering message conversation items, continue option 846A, and dismiss option 846B, as shown in FIG. 8Q. The function for filtering message conversation items is referred to as the messages filtering function. In response to detecting input 850T selecting dismiss option 846B, device 600A displays (e.g., re-displays) message conversation 838 without enabling the messages filtering function (e.g., and without filtering prompt 842). In response to detecting input 850U selecting continue option 846A, device 600A displays exception options 848, including time sensitive option 848A, personal option 848B, and transactions option 848C, as shown in FIG. 8R. In accordance with a determination that time sensitive option 848A is selected, device 600A excludes (e.g., does not filter out) messages from unknown senders related to matters that are determined to be time sensitive (e.g., messages that meet a set of time sensitivity criteria). In accordance with a determination that personal option 848B is selected, device 600A excludes (e.g., does not filter out) messages from unknown senders related to matters that are determined to be personal (e.g., messages that meet a set of personal content criteria). In accordance with a determination that transactions option 848C is selected, device 600A excludes (e.g., does not filter out) messages from unknown senders related to matters that are determined to be related to a transaction (e.g., messages related to a financial and/or business transaction and/or messages that meet a set of transaction criteria). In response to detecting input 850V selecting continue option 852, device 600A enables (e.g., activates) the messages filtering function and applies any exceptions selected in FIG. 8R.

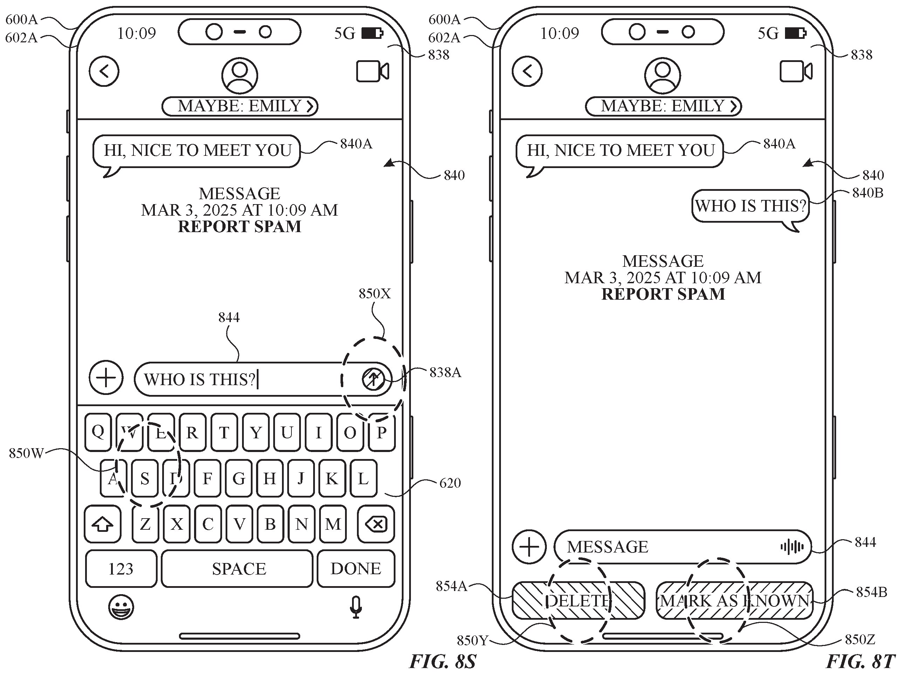

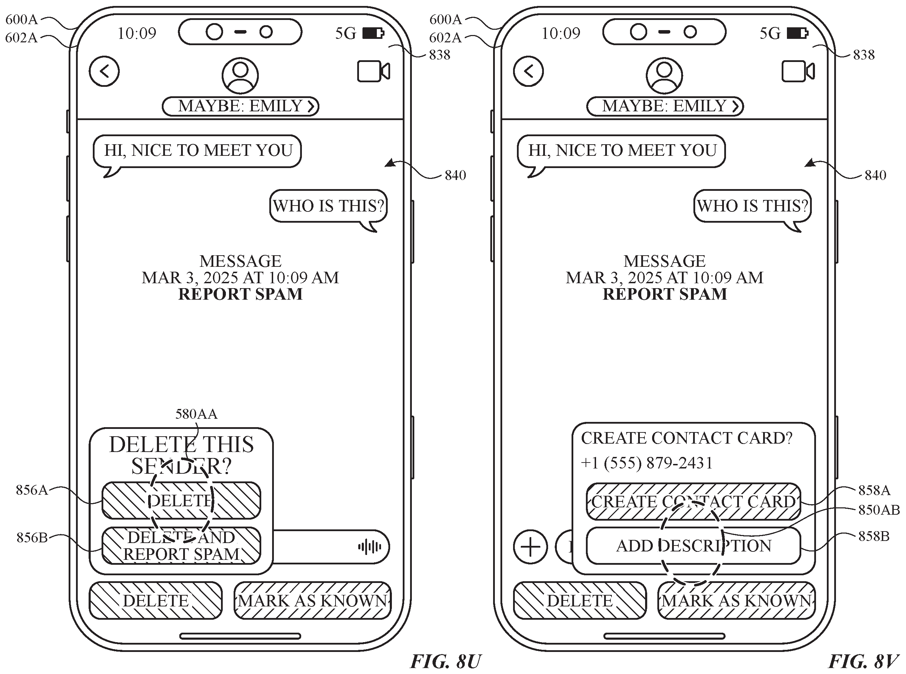

FIG. 8S illustrates device 600A displaying message conversation 838 after the messages filtering function is enabled. In response to detecting input 850W directed to keyboard 620, device 600A populates message compose field 844 with content corresponding to input 850W. In response to detecting input 850X selecting send button 838A, device 600A sends a reply message to the remote participant of message conversation 838 with the content in message compose field 844. In response to sending the reply message, device 600A displays the reply message (e.g., message 840B) in message region 840, as shown in FIG. 8T. Because message 840B is a reply to an unknown sender, device 600A displays delete option 854A and mark as known option 854B (e.g., in message conversation 838). In response to detecting input 850Y selecting delete option 854A, device 600A displays delete confirmation option 856A and spam option 856B, as shown in FIG. 8U. In response to detecting input 850AA selecting delete confirmation option 856A, device 600A deletes message conversation 838 but does not mark the remote participant as spam (e.g., future messages from the remote participant will not be treated as spam). Alternatively, in response to detecting an input selecting spam option 856B, device 600A deletes message conversation 838 and marks the remote participant as spam (e.g., future messages from the remote participant will be treated as spam).

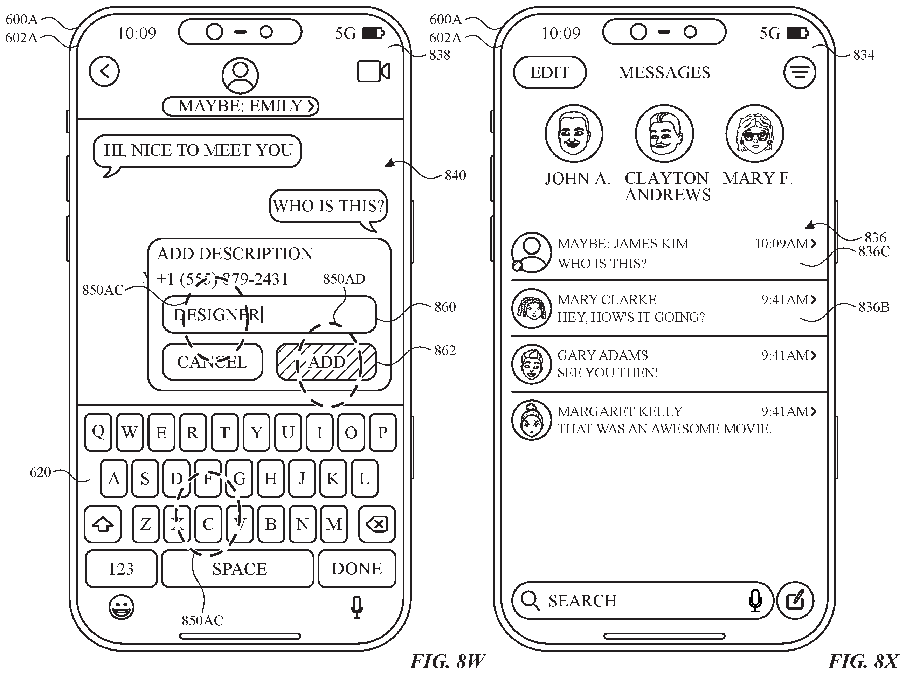

Returning to FIG. 8T, in response to detecting input 850Z selecting mark as known option 854B, device 600A displays create contact option 858A and add description option 858B as shown in FIG. 8V. In response to detecting an input selecting create contact option 858A, device 600A displays a user interface (e.g., user interface 884 in FIG. 8AD) for creating a saved contact entry with information of the remote participant. Alternatively, in response to detecting input 850AB selecting add description option 858B, device 600A displays add description element 860 for adding a description to the remote participant of message conversation 838, as shown in FIG. 8W. In response to detecting input 850AC (e.g., one or more touch inputs) directed to keyboard 620, device 600A populates description element 860 with a description (e.g., "DESIGNER") corresponding to input 850AC. While description element 860 is populated with a description, device 600A detect input 850AD selecting add button 862. In response to detecting input 850AD selecting add button 862, device 600A adds the description in description element 860 to the remote participant of message conversation 838 and marks the remote participant as a known entity (e.g., a known sender). After marking the remote participant as a known entity, device 600A removes delete option 854A and mark as known option 854B from message conversation 838 and updates message conversation 838 to reflect the description entered for the remote participant (e.g., "MAYBE: EMILY" is replaced with "DESIGNER").

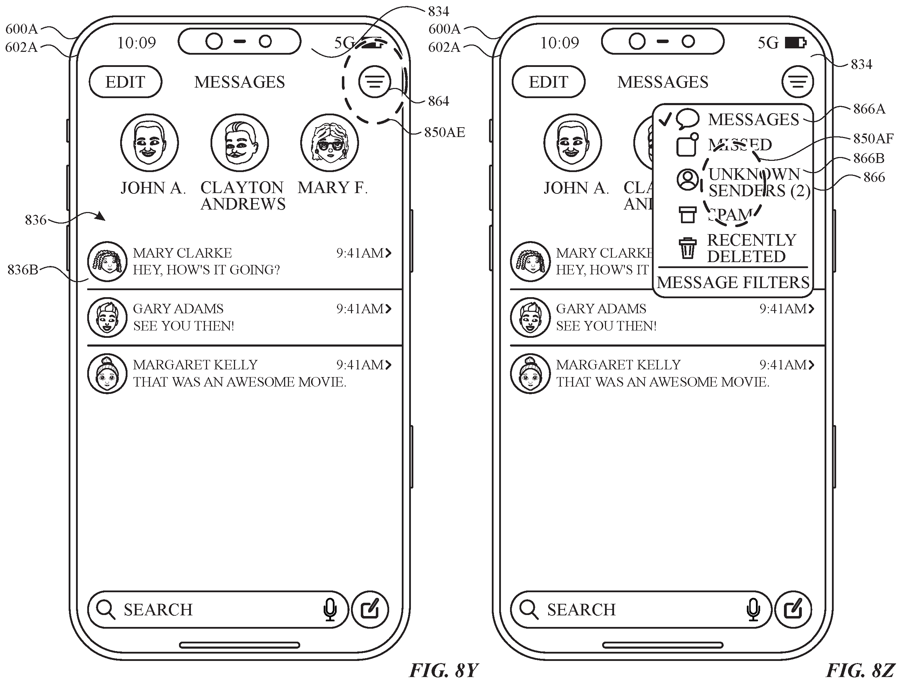

FIG. 8X illustrates an example of messaging application user interface 834 after enabling the messages filtering function. In FIG. 8X, device 600A displays list 836, including item 836C corresponding to a recently received message from an unknown sender. In some embodiments, when the messages filtering function is enabled, device 600A temporarily displays items corresponding to unknown senders in list 836. For example, after a threshold amount of time has elapsed since receiving the message corresponding to item 836C, device 600A removes item 836C from list 836, as shown in FIG. 8Y.

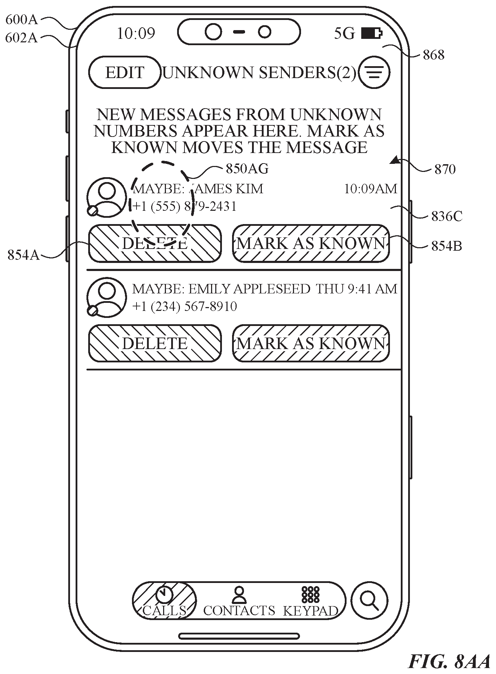

In FIG. 8Y, device 600A detects input 850AE selecting filter menu option 864. In response to detecting input 850AE selecting filter menu option 864, device 600A displays filter menu 866 as shown in FIG. 8Z. Filter menu 866 includes messages option 866A (e.g., the currently selected option) and unknown senders option 866B. In response to detecting input 850AF selecting unknown senders option 866B, device 600A displays unknown senders user interface 868 as shown in FIG. 8AA. Unknown senders user interface 868 displays an item corresponding to a message conversation or a received message only if the item is associated with an unknown sender (e.g., unknown senders user interface 868 only includes items associated with unknown senders). For example, list 870 includes item 836C corresponding to the recently received message that was previously displayed in list 836 on messaging application user interface 834 in FIG. 8X (e.g., device 600A moved item 836C from list 836 to list 870 because item 836C is associated with an unknown sender). Because item 836C corresponds to an unknown sender, device 600A displays delete option 854A and mark as known option 854B (e.g., in item 836C). In response to detecting an input selecting delete option 854A, device 600A displays delete confirmation option 856A and spam option 856B (e.g., as shown and described in FIG. 8U). In response to detecting an input selecting mark as known option 854B, device 600A displays create contact option 858A and add description option 858B (e.g., as shown in FIG. 8V). In FIG. 8AA, device 600A detects input 850AG selecting item 836C. In response to detecting input 850AG, device 600A displays a message conversation with the sender associated with item 836C (e.g., analogous to message conversation 838 as shown in FIG. 8S or FIG. 8T).

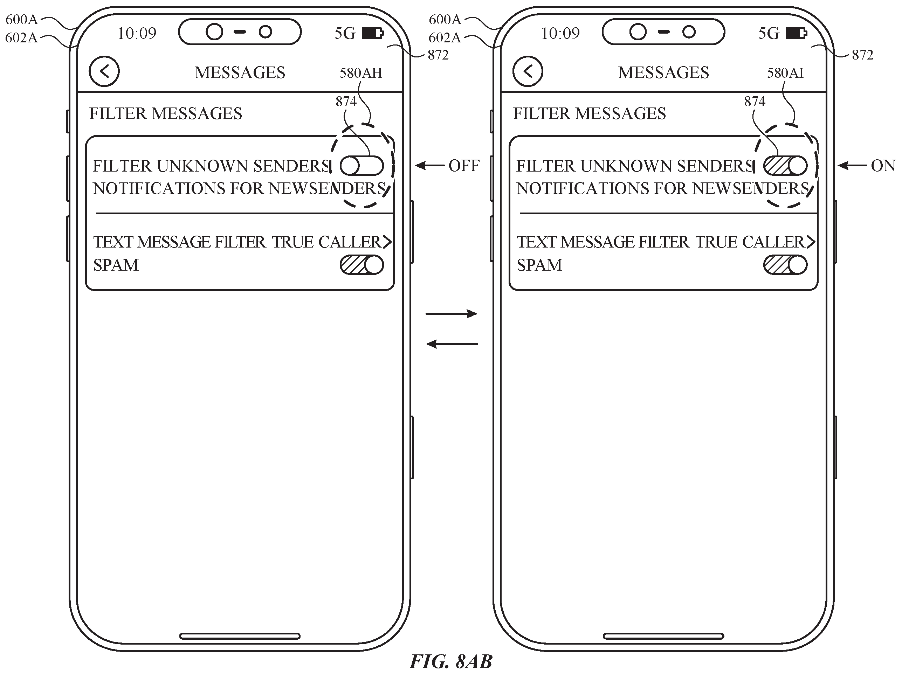

FIG. 8AB illustrates a technique for enabling and/or disabling a communication filtering feature, in accordance with some embodiments. In FIG. 8AB, device 600A displays settings user interface 872, which includes controls for settings related to filtering messages. Settings user interface 872 includes filter unknown senders option 874. In response to detecting input 850AH while filter unknown senders option 874 is OFF (e.g., as shown on the left side of FIG. 8AB), device 600A enables filtering of message conversation items and/or notifications for unknown senders and sets filter unknown senders option 874 to ON (e.g., as shown on the right side of FIG. 8AB). In response to detecting input 850AI while filter unknown senders option 874 is ON (e.g., as shown on the right side of FIG. 8AB), device 600A disabled filtering of message conversation items and/or notifications for unknown senders and sets filter unknown senders option 874 to OFF (e.g., as shown on the left side of FIG. 8AB). In some embodiments, device 600A does not provide an option (e.g., unknown senders option 866B) if filter unknown senders option 874 is OFF. In some embodiments, device 600A displays an option for filtering unknown callers analogous to filter unknown senders option 874 (e.g., device 600A does not provide unknown callers option 808B in FIG. 8E if the option for filtering unknown callers is OFF).

FIGS. 8AC-8AE illustrate an example of a message conversation that includes a message from an unknown sender, in accordance with some embodiments. Message conversation 876 includes message region 880. Message region 880 includes a representation of content 880A (e.g., an image and/or video) and a message 880B received from an unknown sender. In accordance with a determination that message conversation 876 corresponds to an unknown sender, device 600A displays add contact option 878. In response to detecting input 850AJ selecting add contact option 878, device 600A displays user interface 884 for saving the entity associated with message conversation 876 as a contact entry, as shown in FIG. 8AD. In response to detecting input 850AL selecting create new contact option 886, device 600A saves a contact entry with the information in user interface 884.

Returning to FIG. 8AC, in accordance with a determination that content 880A was received from an unknown sender, device 600A obscures (e.g., hides, blurs, and/or does not show) content 880A and displays show option 882. In response to detecting input 850AK selecting show option 882, device 600A displays content 880A (e.g., an unobscured version of content 880A), removes show option 882, and displays indication 888 that content 880A was received from a sender that is not in a list of senders (e.g., saved contacts and/or a message list).

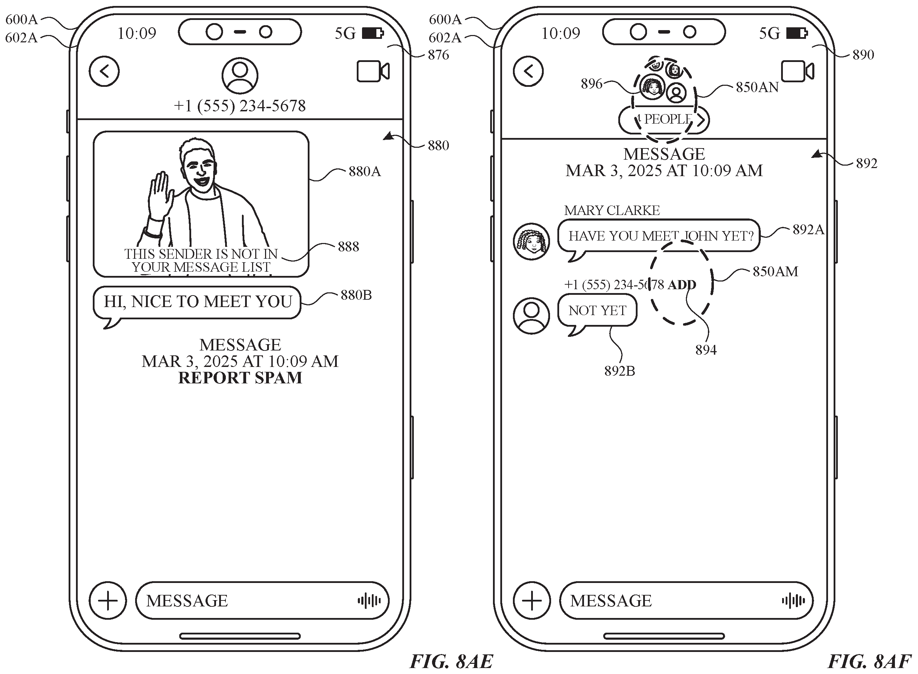

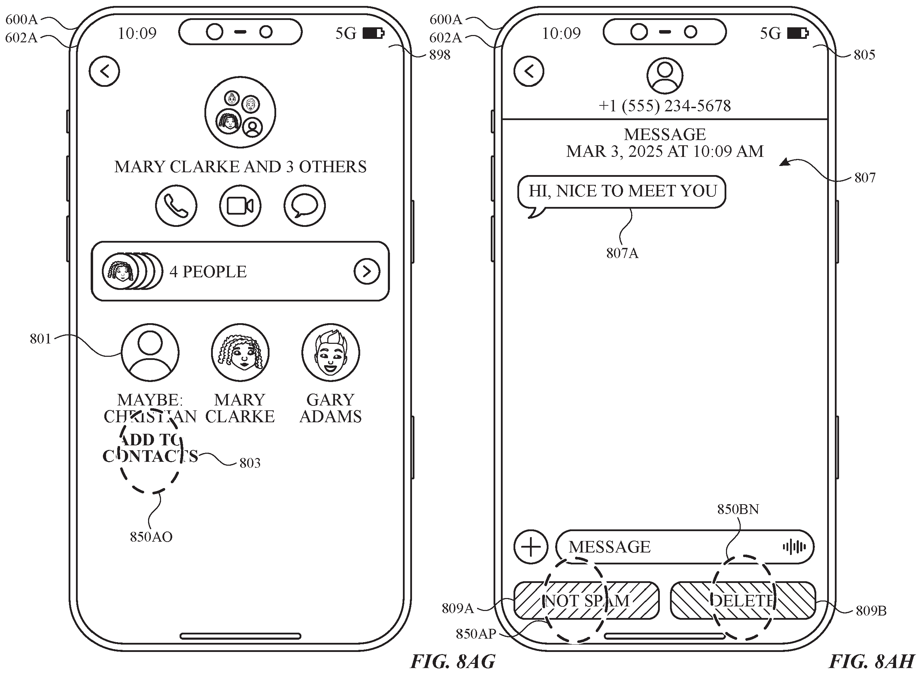

FIGS. 8AF-8AG illustrate an example of a group message conversation that includes an unknown sender, in accordance with some embodiments. In FIG. 8AF, device 600A displays message conversation 890 with message region 892. Message region 892 includes message 892A from a known sender and message 892B from an unknown sender. In accordance with a determination that message 892B is from an unknown sender, device 600A displays add contact option 894 in message region 892 (e.g., adjacent to message 892B and/or to an identifier of the sender of message 892B, such as the phone number, account name, and/or potential name of the sender). In response to detecting input 850AM selecting add contact option 894, device 600A displays a user interface for saving the unknown sender of message 892B as a contact entry (e.g., a user interface analogous to user interface 884 shown in FIG. 8AD). Alternatively, or in addition, in response to detecting input 850AN selecting group identifier 896, device 600A displays user interface 898 as shown in FIG. 8AG, which includes details about the participants of group message conversation 890. In accordance with a determination that message conversation 890 includes an unknown participant (or that message conversation 890 includes a received message from an unknown sender), device 600A displays add contact option 803 next to representation 801 of the unknown participant (e.g., the sender of message 892B). In response to detecting input 850AO selecting add contact option 803, device 600A displays a user interface for saving the unknown participant as a contact entry (e.g., a user interface analogous to user interface 884 shown in FIG. 8AD).

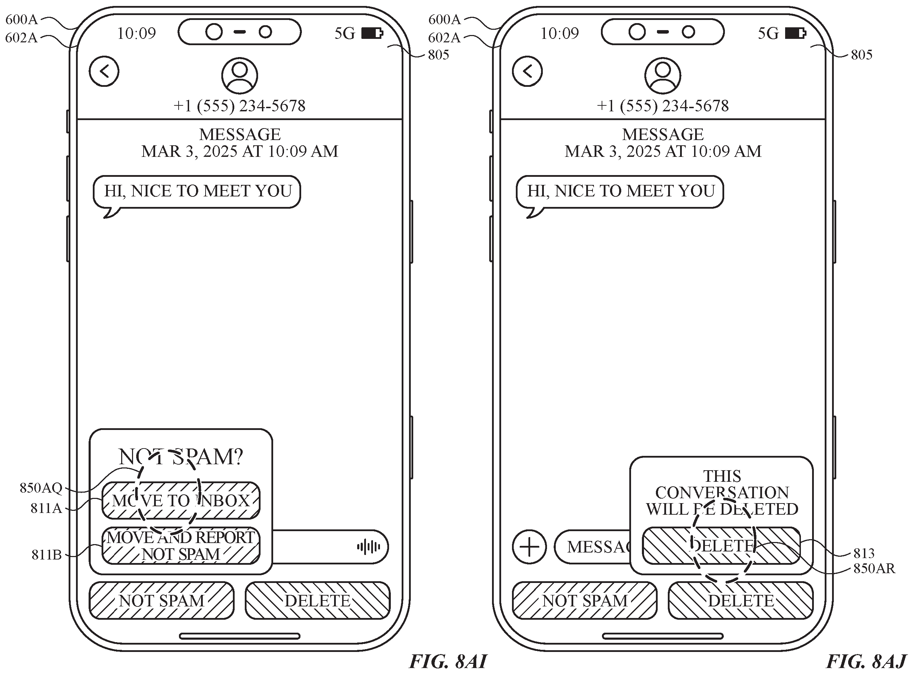

FIGS. 8AH-8AJ illustrate an example of a message conversation that includes a potential spam message, in accordance with some embodiments. In FIG. 8AH, device 600A displays message conversation 805, which includes message 807A in message region 807. Message 807A is identified as a potential spam message. In accordance with a determination that message 805A is potentially a spam message, device 600A displays not spam option 809A and delete option 809B in message conversation 805. In response to detecting input 850AP selecting not spam option 809A, device 600A displays move to inbox option 811A and move and report not spam option 811B as shown in FIG. 8AI. In response to detecting an input selecting move and report not spam option 811B, message conversation 805 is moved to an inbox (e.g., from a spam folder) and reported as not being spam. In response to detecting input 850AQ selecting move to inbox option 811A, message conversation 805 is moved to an inbox without reporting the message conversation as spam. Alternatively, in response to detecting input 850BN selecting delete option 809B in FIG. 8AH, device 600A displays delete confirmation option 813 as shown in FIG. 8AJ. In response to detecting input 850AR selecting delete confirmation option 813, device 600A deletes message conversation 805 (e.g., without marking and/or reporting message conversation 805 as not spam).

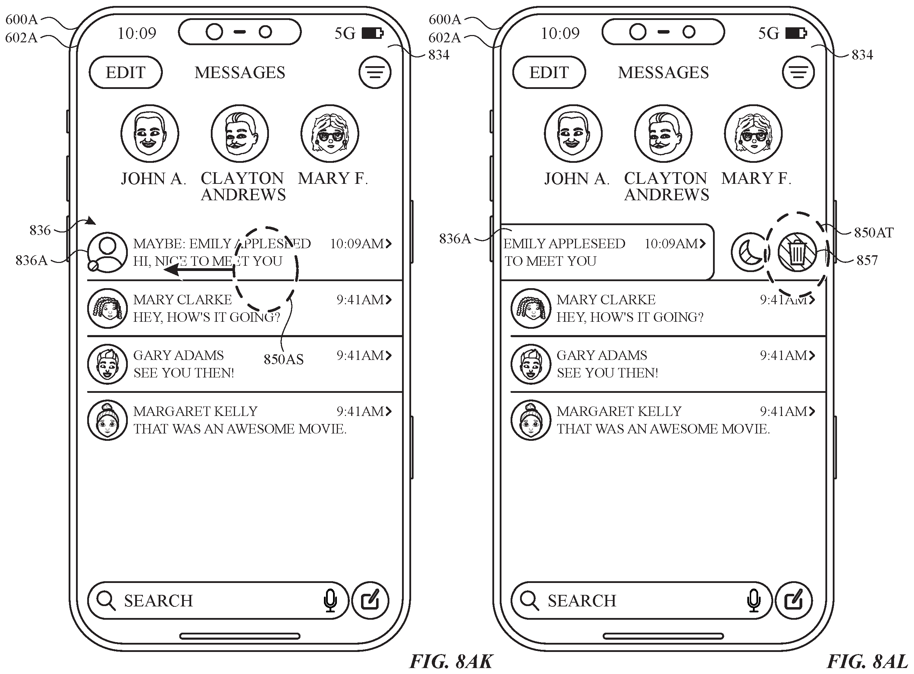

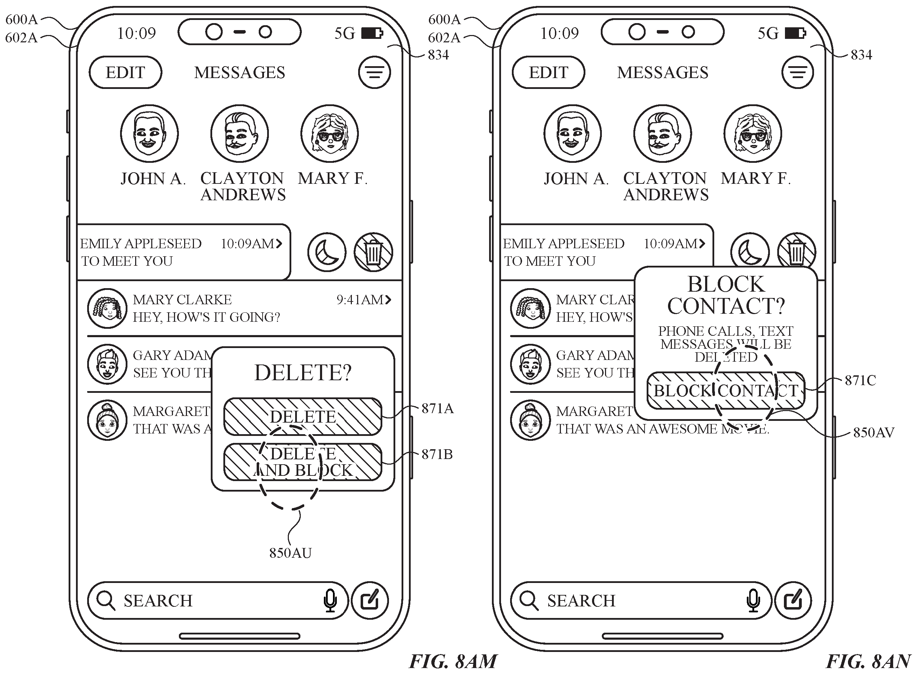

FIGS. 8AK-8AN illustrate techniques for blocking communication from an entity, in accordance with some embodiments. In FIG. 8AK, device 600A displays messaging application user interface 834 with list 836 of message conversations. List 836 includes item 836A corresponding to a message received from an unknown entity. In response to detecting input 850AS (e.g., a right-to-left swipe and/or drag gesture on item 836A), and in accordance with a determination that item 836A corresponds to a message from an unknown entity, device 600A displays delete option 857, as shown in FIG. 8AL. In response to detecting input 850AT selecting delete option 857, device 600A displays delete option 871A and delete and block option 871B shown in FIG. 8AM. In response to detecting an input selecting delete option 813A, device 600A deletes item 836A from list 836 (e.g., along with the corresponding message conversation). In response to detecting input 850AU selecting delete and block option 813B, device 600A displays block confirmation option 871C as shown in FIG. 8AN. In response to detecting input 850AV selecting block confirmation option 871C, device 600A blocks future communications from the remote entity associated with item 836A (e.g., the sender associated with item 836A).

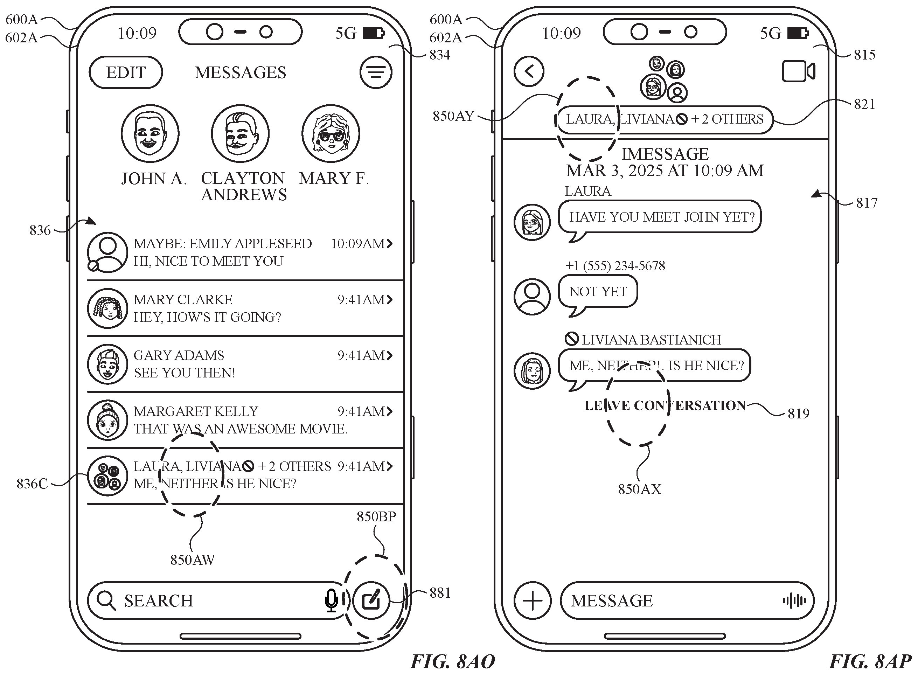

FIGS. 8AO-8AR illustrate techniques for leaving a message conversation that includes a blocked contact, in accordance with some embodiments. In FIG. 8AO, device 600A displays messaging application user interface 834 with list 836 of items corresponding to respective message conversations. Item 836C corresponds to a message conversation that includes a participant that is a blocked contact. In response to detecting input 850AW selecting item 836C, device 600A displays message conversation 815 as shown in FIG. 8AP. Group identifier 821 includes a description of the participants of message conversation 815 and an indication (e.g., a circle with a diagonal line) that the conversation includes a participant that is a blocked contact (e.g., Liviana). Message region 817 includes messages between the participants of message conversation 815, including a message from the blocked contact (e.g., Liviana Bastianich). In accordance with a determination that message conversation includes a blocked contact, device 600A displays leave conversation option 819 in message conversation 815 (e.g., in message region 817 and/or adjacent to a message from the blocked contact). In response to detecting input 850AX selecting leave conversation option 819, device 600A displays confirmation option 823 as shown in FIG. 8AQ. In response to detecting input 850AZ selecting confirmation option 823, device 600A removes the user of device 600A from message conversation 815 and, optionally, removes item 836C from list 836 in messaging application user interface 834.

Returning to FIG. 8AP, in response to detecting input 850AY selecting group identifier 821, device 600A displays group details user interface 827, which includes details about the participants of group message conversation 815. Group details user interface 827 includes leave conversation option 825 (e.g., in accordance with a determination that group details user interface 827 corresponds to a message conversation that includes a blocked contact). In response to detecting input 850BA selecting leave conversation option 825, device 600A removes the user of device 600A from message conversation 815 and, optionally, removes item 836C from list 836 in messaging application user interface 834.

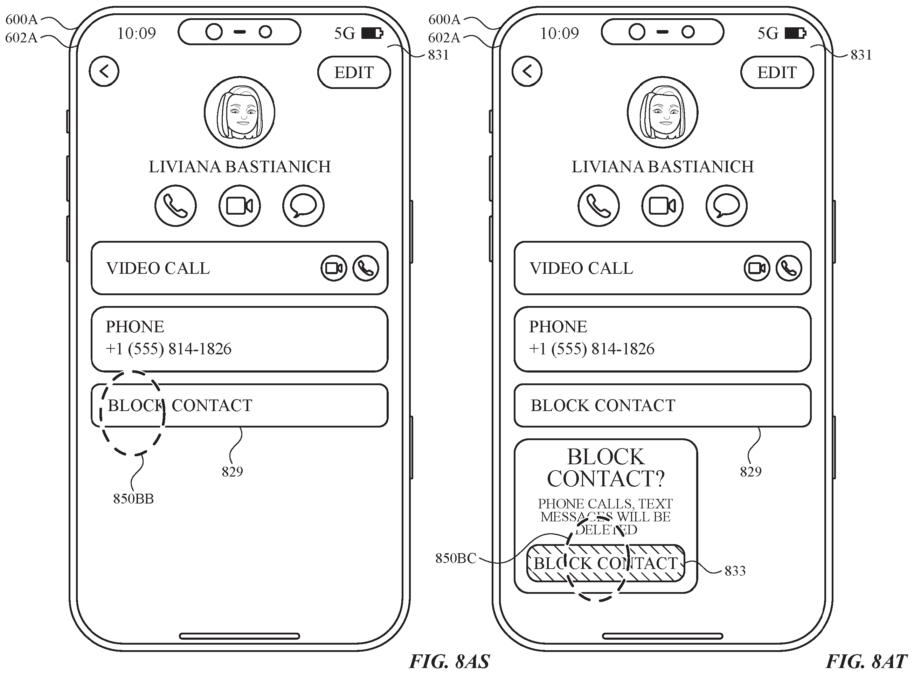

FIGS. 8AS-8BB illustrate techniques related to blocked contacts, in accordance with some embodiments. In FIG. 8AS, device 600A displays contact user interface 831 (e.g., a contact card) of a respective contact (e.g., Liviana Bastianich). Contact user interface 831 includes information associated with the respective contact (e.g., name, phone number, email address, username, and/or other information), selectable options corresponding to methods of communicating with the entity of the respective contact (e.g., phone call, video call, and/or text message), and block contact option 829. In response to detecting input 850BB selecting block contact option 829, device 600A displays confirmation option 833 as shown in FIG. 8AT. In response to detecting input 850BC selecting confirmation option 833, device 600A blocks future communications with the respective contact and deletes previous communication items (e.g., phone calls and text messages) associated with the respective contact.

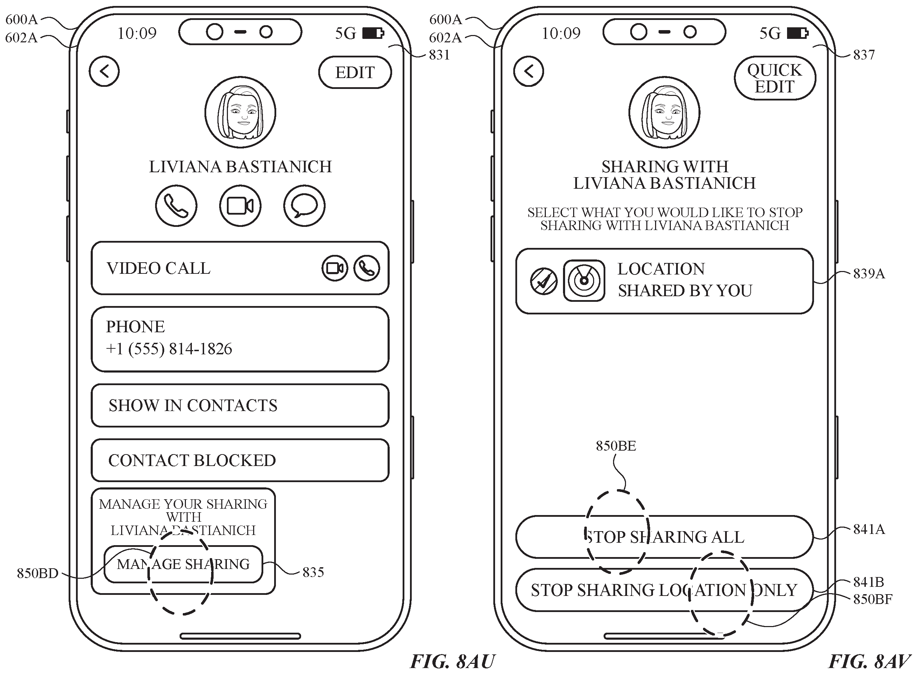

When the respective contact is blocked (e.g., in response to detecting input 850BC), device 600A displays manage sharing option 835 in contact user interface 831, as shown in FIG. 8AU. In response to detecting input 850BD selecting manage sharing option 835, device 600A displays user interface 837, which includes options for managing information that is shared with the respective contact, as shown in FIG. 8AV. User interface 837 includes location sharing option 839A, which indicates that device 600A is currently sharing location information with the respective contact. Location sharing option 839A can be selected to select or deselect location sharing option 839A. In response to detecting input 850BF selecting stop sharing location 841B, device 600A stops sharing location information with the respective contact (e.g., in accordance with a determination that location sharing option 839A is selected).

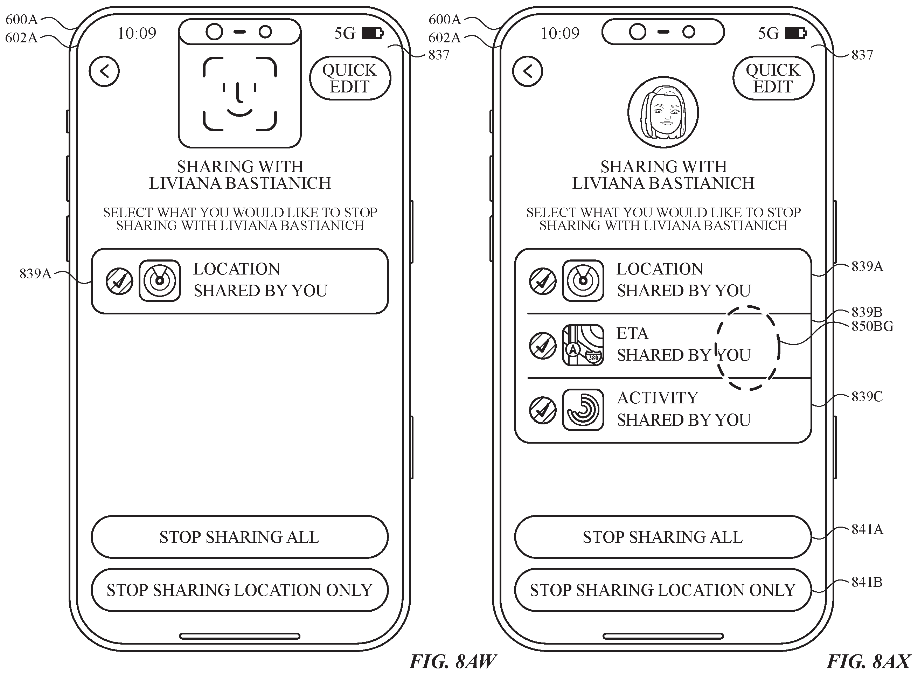

In response to detecting input 850BE selecting stop sharing all option 841A, device 600A prompts a user for authentication (e.g., a password, passcode, facial ID, and/or fingerprint ID), as shown in FIG. 8AW. In response to a determination that authentication is successful, device 600A displays options to stop sharing other information with the respective contact (e.g., other information that is currently being shared with the respective contact). For example, in FIG. 8AX, device 600A displays ETA sharing option 839B (e.g., corresponding to estimated time of arrival information) and activity sharing option 839C (e.g., corresponding to activity information that is being shared with the respective contact), which are selected by default. In response to detecting input 850BG selecting ETA sharing option 839B, device 600A de-selects ETA information as information that will stop being shared with the respective contact (e.g., device 600A will continue sharing ETA information with the respective contact). In response to detecting an input (e.g., input 850BE) selecting stop sharing all option 841A, device stops sharing information corresponding to the data options that are selected in user interface 837 (e.g., location sharing option 839A, ETA sharing option 839B, and/or activity sharing option 839C).

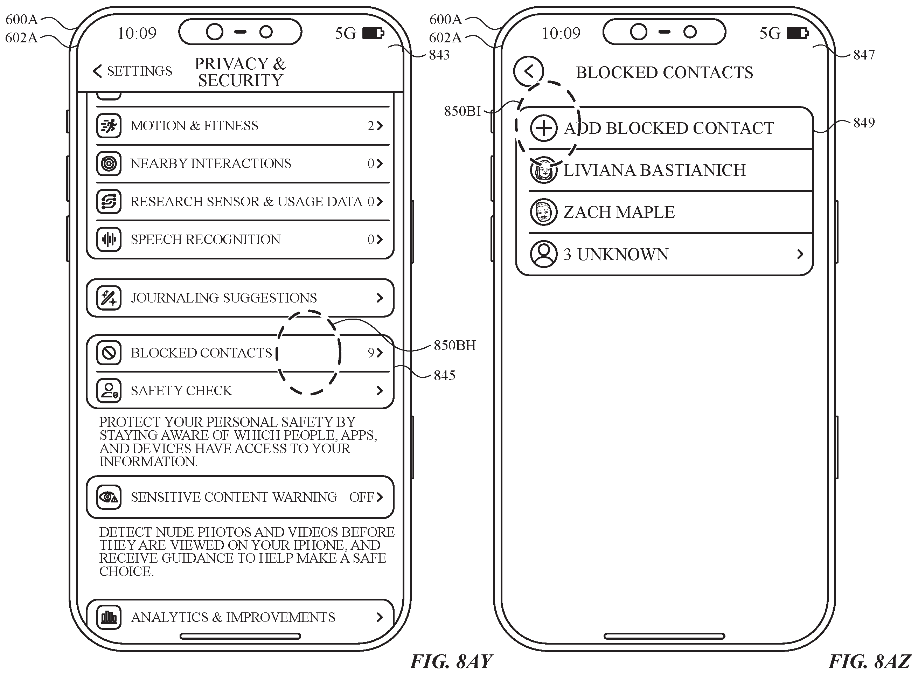

Turning to FIG. 8AY, device 600A displays settings user interface 843 for selecting options related to privacy and security. In response to detecting input 850BH selecting blocked contacts option 845, device 600A displays blocked contacts user interface 847, which includes a list of blocked contacts (e.g., including respective contact Liviana Bastianich from FIG. 8AT), as shown in FIG. 8AZ. Blocked contacts user interface 847 provides options for managing (e.g., adding, deleting, and/or editing) the list of blocked contacts. For example, in response to detecting input 850BI selecting add blocked contact option 849, device 600A initiates a process for adding a contact to the list of blocked contacts (e.g., designating another contact as a blocked contact).

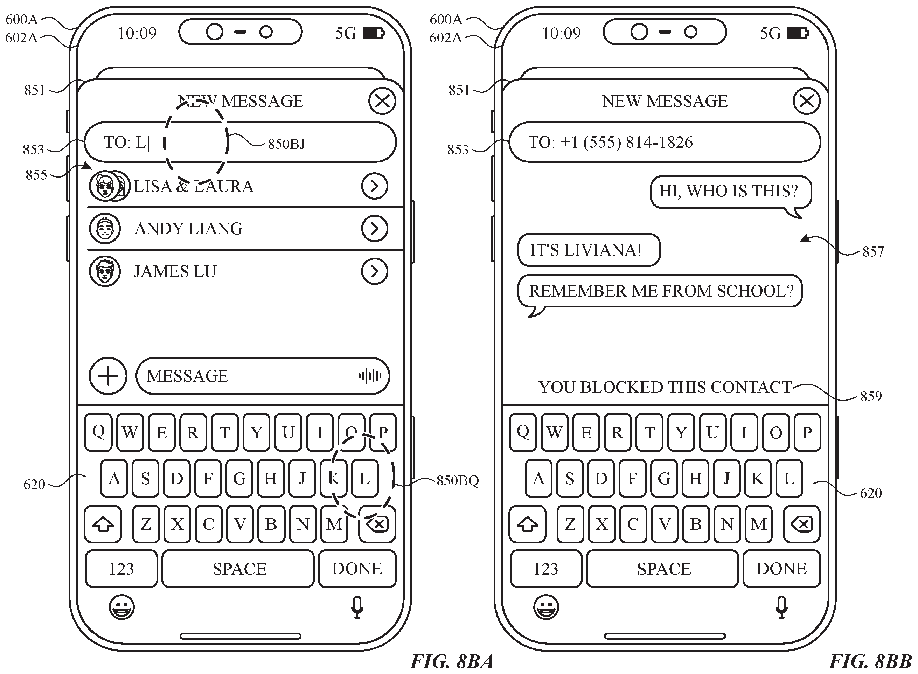

Turning to FIG. 8BA, device 600A displays new message user interface 851. In some embodiments, device 600A displays new message user interface 851 in response to detecting input 850BP selecting new message button 881 in FIG. 8AO. New message user interface 851 provides the ability to select one or more recipients for a new message. For example, in response to detecting input 850BJ directed to recipient field 853 followed by input 850BQ directed to keyboard 620, device 600A begins to populate recipient field 853. Device 600A displays list 855 of potential recipients based on the content entered in recipient field 853. For example, in FIG. 8BA, because the letter "L" is entered in recipient field 853, device 600A displays contact entries with first or last names that begin with the letter "L" (e.g., Lisa, Laura, Andy Liang, and James Lu). Device 600A does not display contact entries of blocked contacts in list 855. For example, device 600A does not display blocked contact Liviana Bastianich from blocked contacts user interface 847 even though the first name begins with the letter "L". To select a blocked contact as a recipient, a user can (e.g., is required to) enter a full contact ID, such as a full phone number or email address. For example, in FIG. 8BB, blocked contact Liviana Bastianich is selected as a recipient by entering the full phone number of the blocked contact in recipient field 853. In accordance with a determination that a blocked contact is selected as a recipient, as shown in FIG. 8BB, device 600A displays notification 859 that the selected recipient is a blocked contact.

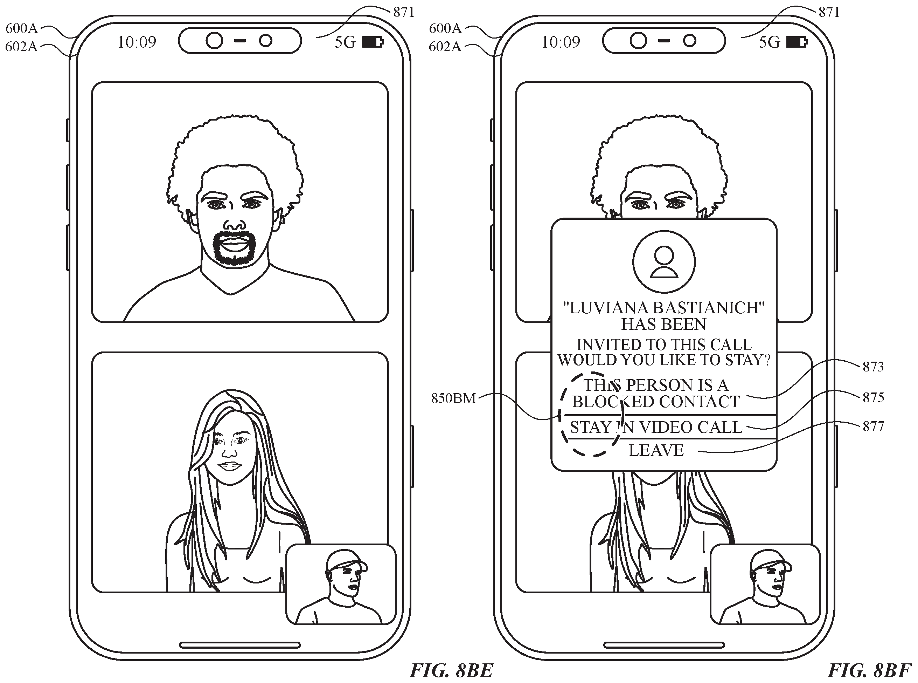

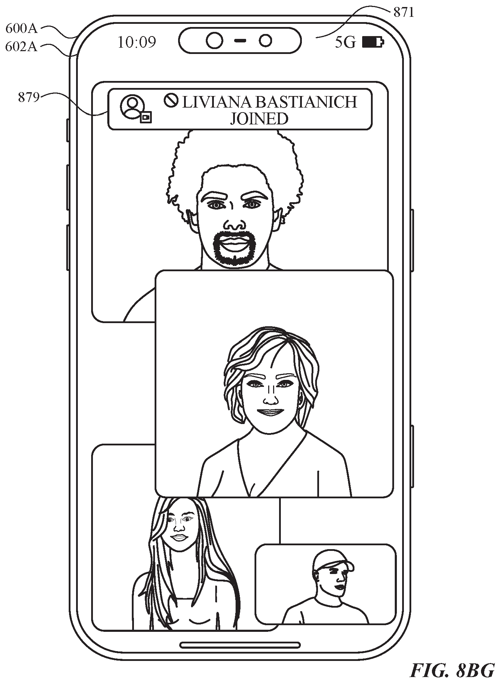

FIGS. 8BC-8BG illustrate techniques for video calls that include a blocked contact, in accordance with some embodiments. In FIG. 8BC, device 600A displays video communication user interface 861 corresponding to an invitation to join a video call (e.g., a group video call). Group identifier 861A includes a description of the participants of the video call and an indication (e.g., a circle with a diagonal line) that the video call includes a participant that is a blocked contact (e.g., Rory Jenni). In response to detecting input 850BK selecting join option 863, device 600A displays notification 865, which identifies the blocked contact and indicates that the participant is a blocked contact (e.g., "This person is a blocked contact"), confirmation option 867, and decline option 869. In response to detecting input 850BL selecting confirmation option 867, device 600A joins the video call with the blocked contact as shown in FIG. 8BE. In FIG. 8BF, a second blocked contact is invited to join the video call. In response to the second blocked contact being invited to join the video call, device 600A displays notification 873, which identifies the second blocked contact and indicates that the invited participant is a blocked contact (e.g., "This person is a blocked contact"), stay option 875, and leave option 877. In response to detecting an input selecting leave option 877, device 600A leaves (e.g., disconnects from) the video call. In response to detecting input 850BM selecting stay option 875, device 600A remains connected to the video call. When the invited participant (e.g., the second blocked contact) joins the video call as shown in FIG. 8BG, device 600A displays notification 879 that the invited participant has joined the video call, including an indication (e.g., the circle with a diagonal line in notification 879) that the participant who joined is a blocked contact.

FIG. 9 is a flow diagram illustrating a method for managing communication items using a computer system in accordance with some embodiments. Method 900 is performed at a computer system (e.g., 100, 300, 500, 600A, 600B, 600C, a smart phone, a smart watch, a tablet computer, a laptop computer, a desktop computer, a wearable device, and/or a head-mounted device) that is in communication with (e.g., includes and/or is connected to) one or more display generation components (e.g., 112, 602A, 602B, 602C, one or more displays, one or more touch-screen displays, one or more monitors, a holographic display system, a transparent display, and/or a head-mounted display system) and one or more input devices (e.g., 112, 116, 602A, 602B, 602C, a touch-sensitive surface (e.g., a touch-sensitive display); a mouse; a keyboard; a remote control; a visual input device; an audio input device (e.g., a microphone); a biometric sensor (e.g., a fingerprint sensor, a face identification sensor, a gaze tracking sensor, and/or an iris identification sensor); a camera (e.g., an infrared camera, depth camera, visible light camera, and/or gaze tracking camera); a movement input sensor (e.g., an accelerometer and/or a gyroscope); and/or a mechanical input device (e.g., a depressible input mechanism, a button, a rotatable input mechanism, a crown, and/or a dial)). Some operations in method 900 are, optionally, combined, the orders of some operations are, optionally, changed, and some operations are, optionally, omitted.

As described below, method 900 provides an intuitive way for managing communication items. The method reduces the cognitive burden on a user for managing communication items, thereby creating a more efficient human-machine interface. For battery-operated computing devices, enabling a user to manage communication items faster and more efficiently conserves power and increases the time between battery charges.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Performing an operation when a set of conditions has been met without requiring further user input (such as by displaying a communication item with a selectable element to initiate a process for designating an entity associated with the communication item as a known entity based on whether a set of one or more entity criteria is met and/or prompting a user to enable an unknown entity filter if a set of one or more filtering criteria is met) enhances the operability of the device by reducing unnecessary inputs and/or steps to navigate through different user interfaces or sets of controls, reducing energy usage by the device. Providing additional control options (such as by displaying a description element to assign a description to an entity associated with a communication item and designate the entity as a known entity) without cluttering the UI with additional displayed controls enhances the operability of the device by reducing unnecessary inputs and/or steps to navigate through different user interfaces or sets of controls, reducing energy usage by the device. Restricting access to potentially sensitive information and/or compartmentalizing the information to specific devices and processes (such as by displaying a representation of a message without at least a portion of the content of the message in accordance with a determination that the sender of the message is an unknown entity) improves privacy and security by limiting the manner in which that potentially sensitive information can be accessed.

The computer system detects (902), via the one or more input devices, an input (e.g., an air gesture, a gaze, a voice command, a touch input, a button press, and/or a movement of the computer system) corresponding to a request to display a user interface (e.g., 812 and/or 868) for displaying communication items associated with a first type of entity (e.g., a user interface for displaying messages, calls, emails, and/or other types of communication from unknown entities, such as unknown callers and/or unknown senders). In some embodiments, a communication item is a representation of a communication, such as a graphical user interface element that corresponds to a phone call (e.g., a recent call, a missed call, an incoming call, an outgoing call, an answered call, a video call, a conference call, a group call), a voicemail, a text message, a message conversation, a group message conversation, an email, and/or an email thread. In some embodiments, an entity includes a caller, a sender of a message, a sender of an email, a person, a business, an organization, and/or an account (e.g., a social media account and/or application account). In some embodiments, the first type of entity includes an unknown entity, an entity that is not recognized by the computer system, and/or an entity that does not correspond to an entry saved in memory accessible to the computer system (e.g., the entity is not a saved contact or designated as a known entity). In response to detecting the input corresponding to the request to display the user interface for displaying communication items associated with the first type of entity, the computer system displays (904), via the one or more display generation components, the user interface for displaying communication items associated with the first type of entity, including: in accordance with a determination that a set of one or more entity criteria (e.g., unknown entity criteria) is met, the computer system displays (906) (e.g., concurrently displaying), via the one or more display generation components, a first communication item (e.g., 810A and/or 836A) and a first graphical element (e.g., 814A2, 854B, a "mark as known" option, a selectable graphical element, button, selectable icon, and/or affordance) that when selected (e.g., via input 850I) initiates a process (e.g., the process described in FIGS. 8F, 8H, and 8I and/or the process described in FIGS. 8T, 8V, and 8W) for designating an entity associated with the first communication item as a known entity; and in accordance with a determination that the set of one or more entity criteria is not met (e.g., that the first communication item does not correspond to the first type of entity), the computer system displays (908), via the one or more display generation components, the user interface for displaying communication items associated with the first type of entity without displaying the first communication item. In some embodiments, the determination that the set of one or more entity criteria is met includes (or, in some embodiments, requires) a determination that the first communication item corresponds to the first type of entity (e.g., a communication from the first type of entity).

In some embodiments, the process for designating an entity associated with the first communication item as a known entity includes: detecting, via the one or more input devices, an input (e.g., 850I, 850Z, an air gesture, a gaze, a voice command, a touch input, and/or a button press) corresponding to selection of (e.g., directed to a location of) the first graphical element; in response to detecting the input corresponding to selection of the first graphical element, displaying, via the one or more display generation components, a description element (e.g., 818B, 858B, an "Add description" option, a selectable graphical element, button, selectable icon, and/or affordance); detecting, via the one or more input devices, a set of one or more inputs (e.g., 850L, 850M, 850N, 850AB, 850AC, 850AD, an air gesture, a gaze, a voice command, a touch input, and/or a button press) that includes selection of (e.g., directed to a location of) the description element; and in response to detecting the set of one or more inputs that includes selection of the description element, assigning a description (e.g., a label) to the entity associated with the first communication item and designating the entity associated with the first communication item as a known entity. In some embodiments, the set of one or more inputs includes entry of the description (e.g., via one or more inputs directed to a text entry field, a keyboard, and/or an add button). In some embodiments, in response to detecting the set of one or more inputs (e.g., 850L, 850M, 850N, 850AB, 850AC, 850AD) that includes selection of the description element (e.g., 818B and/or 858B), the computer system forgoes creating (e.g., forgoes saving) a contact entry (e.g., a contact card) for the entity associated with the first communication item (e.g., the computer system assigns the description to the entity associated with the first communication item and designates the entity associated with the first communication item as a known entity without creating and/or saving a contact entry for the entity associated with the first communication item; e.g., as described with reference to FIGS. 8K-8N).

In some embodiments, after designating the entity associated with the first communication item as a known entity, the computer system displays, via the one or more display generation components, the user interface (e.g., 812 as shown in FIG. 8J) for displaying communication items associated with the first type of entity without the first communication item (e.g., the computer system removes the first communication item from the user interface for displaying communication items associated with the first type of entity). In some embodiments, after designating the entity associated with the first communication item as a known entity, the computer system displays, via the one or more display generation components, the first communication item in a user interface for displaying communication items associated with a second type of entity that does not include communication items associated with the first type of entity. In some embodiments, the computer system displays entries for entities that have a description and/or label but do not have a contact entry in a first user interface that does not include entries for entities that have a contact entry (e.g., described entities are displayed in a different and/or separate user interface (e.g., in a separate folder and/or tab) from contact entries). In some embodiments, in response to detecting a set of one or more inputs, the computer system edits the description of the entity associated with the first communication item (e.g., a user can subsequently edit the description of the entity associated with the first communication item).

In some embodiments, the user interface for displaying communication items associated with the first type of entity is a user interface (e.g., 834) of a first application (e.g., a messaging application); the computer system receives, via a second application (e.g., a phone application or a video call application) that is different from the first application, a communication from the entity associated with the first communication item; and after designating the entity associated with the first communication item as a known entity: the computer system detects, via the one or more input devices, an input (e.g., 850F, an air gesture, a gaze, a voice command, a touch input, a button press, and/or a movement of the computer system) corresponding to a request to display a user interface (e.g., 812) of the second application, wherein the user interface of the second application is for displaying communication items associated with the first type of entity (e.g., a user interface for displaying messages, calls, emails, and/or other types of communication from unknown entities, such as unknown callers and/or unknown senders); and in response to detecting the input corresponding to the request to display the user interface of the second application (and, in some embodiments, in accordance with a determination that the set of one or more entity criteria is not met), the computer system displays, via the one or more display generation components, the user interface of the second application without displaying a communication item (e.g., 801A) associated with the entity (e.g., designating the entity as a known entity with respect to the first application causes the entity to be recognized and/or designated as a known entity with respect to the second application). In some embodiments, after receiving the communication from the entity associated with the first communication item via the second application and before designating the entity associated with the first communication item as a known entity, in response to detecting an input corresponding to a request to display the user interface of the second application, the computer system displays the user interface of the second application with a communication item associated with the entity (e.g., in accordance with a determination that the set of one or more entity criteria is met). In some embodiments, while an ability to display the user interface for displaying communication items associated with the first type of entity is not enabled (e.g., unknown entity filtering is not enabled), the computer system detects a sequence of one or more inputs corresponding to a request to designate the entity associated with the first communication item as a known entity; and in response to detecting the sequence of one or more inputs corresponding to the request to designate the entity associated with the first communication item as a known entity, the computer system designates the entity associated with the first communication item as a known entity and/or assigns a description to the entity. For example, a description can be assigned to an unknown entity and/or an unknown entity can be designated as a known entity when unknown entity filtering is not enabled. In some embodiments, while displaying the description element, the computer system concurrently displays a contact element that when selected initiates a process for saving a contact entry for the entity associated with the first communication item.

In some embodiments, the computer system detects, via the one or more input devices, an input (e.g., 850A, 850B, an air gesture, a gaze, a voice command, a touch input, a button press, and/or a movement of the computer system) corresponding to a request to display a user interface (e.g., 800 and/or 834) for displaying communication items (e.g., a user interface for displaying messages, calls, emails, and/or other types of communication); in response to detecting the input corresponding to the request to display the user interface for displaying communication items, the computer system displays, via the one or more display generation components, the user interface (e.g., 800 and/or 834) for displaying communication items, including: in accordance with a determination that a set of one or more filtering criteria is met (e.g., that an unknown entity filtering mode and/or setting is not enabled), the computer system displays (e.g., in and/or concurrently with the user interface for displaying communication items), via the one or more display generation components, a prompt (e.g., 802 and/or 842) to enable an unknown entity filter; and the computer system detects, via the one or more input devices, an input (e.g., 850C, 850S, an air gesture, a gaze, a voice command, a touch input, a button press, and/or a movement of the computer system) corresponding to acceptance of the prompt (e.g., text, a color, a selectable graphical element, a button, a selectable icon, and/or an affordance); and in response to detecting the input corresponding to acceptance of the prompt, the computer system initiates a process for enabling the unknown entity filter (e.g., the process described in FIGS. 8B-8C and/or FIGS. 8P-8R). In some embodiments, in accordance with a determination that the set of one or more filtering criteria is not met (e.g., that an unknown entity filtering mode and/or setting is enabled), the computer system displays the user interface for displaying communication items without the prompt to enable the unknown entity filter. In some embodiments, in accordance with a determination that the unknown entity filter is enabled, the computer system provides a capability (e.g., in the user interface for displaying communication items) to filter communication items associated with unknown entities (e.g., to display only communication items associated with unknown entities without displaying communication items associated with entities that are not unknown entities). In some embodiments, displaying the prompt to enable the unknown entity filter includes displaying (e.g., in and/or concurrently with the prompt) a description (e.g., a textual and/or graphical description) of the unknown entity filter. The description is optionally displayed in the prompt, concurrently with the prompt, and/or in response to detecting acceptance of the prompt. In some embodiments, the description of the unknown entity filter includes a textual, graphical, and/or animated description.

In some embodiments, the set of one or more entity criteria is not met in accordance with a determination that the first communication item is associated with an unknown entity that satisfies an exception condition (e.g., an exception condition corresponding to time sensitive option 848A, personal option 848B, and/or transactions option 848C). In some embodiments, a user can create (e.g., via user input) exceptions for communication items associated with unknown entities so that communication items associated with unknown entities are not displayed in the user interface for displaying communication items associated with the first type of entity (e.g., unknown entities). Examples of exception conditions include, but are not limited to, time sensitive communications, personal communications (e.g., communications that are determined to include personal content), transaction communications (e.g., financial and/or commercial transactions), and/or other communications that are determined to satisfy a priority threshold (e.g., high priority messages). In some embodiments, the process for enabling the unknown entity filter includes displaying and/or detecting selection of one or more selectable elements corresponding to respective exception conditions that are used to determine whether the set of one or more entity criteria is met (e.g., the computer system displays options for exception conditions that can be selected by the user).

In some embodiments, while displaying a messaging user interface (e.g., 838 and/or a user interface of a messaging application) that includes a message conversation (e.g., 840) between a user associated with the computer system and a first participant that is different from the user associated with the computer system: in accordance with a determination that the set of one or more entity criteria is met, the computer system displays (e.g., concurrently displaying), via the one or more display generation components, a second graphical element (e.g., 854B, another instance of the first graphical element, a "mark as known" option, a selectable graphical element, button, selectable icon, and/or affordance) that when selected initiates a process for designating the first participant as a known entity; and in accordance with a determination that the set of one or more entity criteria is not met, the computer system displays, via the one or more display generation components, the messaging user interface without displaying the second graphical element. In some embodiments, while displaying the messaging user interface (e.g., 838): the computer system detects, via the one or more input devices, a sequence of one or more inputs (e.g., 850W and/or 850X) corresponding to a request to send a message in the message conversation to the first participant; and displaying (e.g., initially displaying) the second graphical element (e.g., 854B) in accordance with the determination that the set of one or more entity criteria is met is performed in response to detecting the sequence of one or more inputs corresponding to the request to send the message in the message conversation to the first participant (e.g., in response to sending the message to the first participant). In some embodiments, the computer system displays the second graphical element in response to detecting an input corresponding to a request to display the messaging user interface (e.g., when the message conversation between a user associated with the computer system and a first participant that is different from the user associated with the computer system is initially displayed). In some embodiments, in response to detecting the sequence of one or more inputs corresponding to the request to send the message in the message conversation to the first participant, the computer system maintains the entity status (e.g., known entity or unknown entity) of the first participant (e.g., replying in the message conversation to the first participant does not change the entity status of the first participant). In some embodiments, while displaying the message conversation, in accordance with a determination that the first participant is an unknown entity, the computer system displays an option (e.g., a selectable graphical element, button, selectable icon, and/or affordance) to display details of the first participant and/or an option (e.g., a selectable graphical element, button, selectable icon, and/or affordance) to initiate a process for creating a new contact entry for the first participant.

In some embodiments, while displaying, via the one or more display generation components, a message conversation (e.g., 890 and/or 892) that includes a user associated with the computer system, a first participant, and a second participant (e.g., a message conversation that includes three or more participants): the computer system receives a message (e.g., 892B), in the message conversation, from the first participant; and in response to receiving the message from the first participant: the computer system displays, via the one or more display generation components and in the message conversation, the message from the first participant; and in accordance with a determination that the first participant is an unknown entity, the computer system displays, via the one or more display generation components and in the message conversation (e.g., next to the message from the first participant, a phone number of the first participant, a potential name of the first participant, and/or an account name of the first participant), a create-contact element (e.g., 894, a selectable graphical element, button, selectable icon, and/or affordance) that when selected initiates a process for creating a contact entry for the first participant. For example, in response to detecting an input corresponding to selection of the create contact element, the computer system displays a user interface for creating a contact entry for the first participant. In some embodiments, the computer system displays a user interface (e.g., a details UI) that includes more information about the participants of a message conversation than information that is displayed in the message conversation (e.g., a group contact details user interface). In some embodiments, in accordance with a determination that a respective participant of the message conversation is an unknown entity, the computer system displays, in the details UI, a create-contact element (e.g., a selectable graphical element, button, selectable icon, and/or affordance) that when selected initiates a process for creating a contact entry for the respective participant. In some embodiments, in response to being added to a communication session (e.g., a group message conversation, a group audio and/or video call, and/or a communication session that includes two or more participants other than the user associated with the computer system) that includes an unknown entity, the computer system displays an option in the user interface of the communication session to share profile information (e.g., a name and/or photo) of the user associated with the computer system with the unknown entity (and/or other participants of the communication session). In some embodiments, being added to the communication session includes receiving a request to join and/or participate in the communication session. In some embodiments, in response to being added to a communication session, the computer system shares (e.g., automatically shares) profile information of the user associated with the computer system in accordance with a determination that a known contact added the user associated with the computer system to the communication session (e.g., the computer system does not automatically share the profile information in accordance with a determination that an unknown entity added the user associated with the computer system to the communication session). In some embodiments, the computer system displays the option to share profile information of the user associated with the computer system with one or more participants of the communication session in a group details user interface. In some embodiments, while the computer system is in a communication session (e.g., a group communication session), in accordance with a determination that an unknown entity joins the communication session, the computer system displays an option (e.g., a button and/or banner) to create a contact entry for the unknown entity.

In some embodiments, while displaying, via the one or more display generation components, a message conversation (e.g., 876, 880, and/or a text message conversation) between a user associated with the computer system and a first participant, wherein the message conversation includes a first message (e.g., 880A and/or 880B) from the first participant that includes content of a first type (e.g., a photo, a file name, and/or a link): in accordance with a determination that the first participant is an unknown entity, the computer system displays, via the one or more display generation components, a representation (e.g., 880A) of the first message without displaying at least a portion of the content of the first type (e.g., the computer system hides and/or obscures content of the first type from unknown entities, as shown in FIG. 8AC); and in accordance with a determination that the first participant is a known entity, the computer system displays, via the one or more display generation components, the representation of the first message including displaying the portion of the content of the first type (e.g., 880A in FIG. 8AE, but without 888). In some embodiments, while displaying the representation of the first message without displaying at least the portion of the content of the first type, the computer system displays (e.g., concurrently displays) a show element (e.g., a selectable graphical element, button, selectable icon, and/or affordance); and in response to detecting an input corresponding to selection of the show element, the computer system initiates a process for displaying the portion of the content. In some embodiments, the content of the first type includes a link (e.g., to a file, website, and/or folder); and in response to detecting an input corresponding to a request to open the link (e.g., selection of the link): in accordance with a determination that the first participant is an unknown entity, the computer system forgoes opening the link and provides (e.g., displays) a prompt to confirm the request to open the link. In some embodiments, while the content of the first type from an unknown entity is displayed in the message conversation (e.g., if the content of the first type is accepted and/or in response to detecting an input corresponding to a request to display the portion of the content of the first type), the computer system displays the content of the first type and an indication (e.g., text, a color, an animation, and/or an image) that the first participant is an unknown entity (e.g., "This sender is not in your message list"). In some embodiments, after the first participant is designated and/or saved as a known entity, the computer system displays the portion of the content of the first type in the message conversation (e.g., the computer system automatically shows the portion of the content of the first type if the first participant is added as a contact). In some embodiments, in accordance with a determination that a message (e.g., from an unknown entity) includes content of a particular type (e.g., a complex attachment and or link), the computer system forgoes loading a preview of the content of the particular type.

In some embodiments, while displaying a communication item (e.g., 805) associated with a respective unknown entity: in accordance with a determination that the communication item associated with the respective unknown entity satisfies a set of one or more spam criteria (e.g., as shown in FIG. 8AH), the computer system displays, via the one or more display generation components: a delete element (e.g., 809B, a selectable graphical element, button, selectable icon, and/or affordance) that when selected (e.g., via input 850BN) initiates a process for deleting the communication item associated with the respective unknown entity (e.g., as described with reference to FIGS. 8AH and 8AJ); and a not spam element (e.g., 809A, a selectable graphical element, button, selectable icon, and/or affordance) that when selected (e.g., via input 850AP) initiates a process (e.g., as described with reference to FIGS. 8AH and 8AI) for designating the communication item associated with the respective unknown entity as not spam (e.g., such that the communication item associated with the respective unknown entity does not satisfy the set of one or more spam criteria). In some embodiments, the process for designating the communication item associated with the respective unknown entity as not spam includes moving the communication item associated with the respective unknown entity out of a spam folder. In some embodiments, in accordance with a determination that the communication item associated with the respective unknown entity satisfies a set of one or more spam criteria, the computer system displays the communication item associated with the respective unknown entity without displaying the delete element and the not spam element. In some embodiments, the communication item associated with the respective unknown entity includes a message conversation. In some embodiments, the communication item associated with the respective unknown entity includes a voicemail (e.g., a voicemail user interface). In some embodiments, after an amount of time (e.g., 5 minutes, 10 minutes, or 15 minutes) has elapse since receiving a communication from an unknown entity, in accordance with a determination that the communication satisfies the set of one or more spam criteria, the computer system designates the communication as spam and, optionally, automatically moves a communication item corresponding to the communication to a spam folder. In some embodiments, display option in message conversation to "Stop or Report Spam"; select for options to "Delete and Stop" and "Delete and Report Spam". In some embodiments, while displaying a message conversation that includes a message that satisfies the set of one or more spam criteria, the computer system displays a selectable element (e.g., a selectable graphical element, button, selectable icon, and/or affordance); and in response to detecting an input corresponding to selection of the selectable element, the computer system displays an option (e.g., a selectable graphical element, button, selectable icon, and/or affordance) that when selected deletes the message conversation and stops further communications from the sender of the message and an option (e.g., a selectable graphical element, button, selectable icon, and/or affordance) that when selected deletes the message conversation and reports the message as spam.

Note that details of the processes described above with respect to method 900 (e.g., FIG. 9) are also applicable in an analogous manner to the methods described above/below. For example, methods 700 and/or 1100 optionally include one or more of the characteristics of the various methods described above with reference to method 900. For example, the computer system in method 700 can display a communication item as described in method 900 for a screened call, and the computer system in method 1100 can display a communication item as described in method 900 for a communication from an entity that is not a permitted contact. For brevity, these details are not repeated below.

FIGS. 10A-10AF illustrate exemplary user interfaces for managing communication requests, in accordance with some embodiments. The user interfaces in these figures are used to illustrate the processes described below, including the processes in FIG. 11.

FIG. 10A illustrates device 600B (e.g., a smartphone) that has display 602B (e.g., a touchscreen display). Device 600B is associated with (e.g., logged into) a user account (e.g., a child's user account) that is managed by another device and/or account (e.g., a parent's account). Device 600B is referred to as a requester device because it is configured to send requests for approval to communicate with unapproved entities to an approver (e.g., to the account (or a device associated with the account) that manages the account associated with device 600B), as described in greater detail below.

In FIG. 10A, device 600B is operating in a restricted mode of operation that limits a communication functionality of device 600B. For example, device 600B is unable to communicate with entities (e.g., numbers, accounts, and/or email addresses) that are not designated as permitted contacts. In FIG. 10A, device 600B displays messages user interface 1000. In some embodiments, device 600B displays messages user interface 1000 in response to detecting an input (e.g., an air gesture, a gaze, a voice command, a touch input, a button press, and/or a movement of the computer system) corresponding to a request to display messages user interface 1000. For example, in some embodiments, device 600B displays messages user interface 1000 in response to detecting an input (e.g., a tap and/or other input) corresponding to selection of a messaging application icon (e.g., messages icon 636B in FIG. 8A). In some embodiments, device 600B displays message user interface 1000 in response to an input (e.g., a swipe gesture on a particular portion of display 602B and/or other input) corresponding to a request to unlock device 600B and/or navigate away from a wake screen. In some embodiments, device 600B displays messages user interface 1000 in response to an input corresponding to a request to navigate from a different user interface (e.g., a user interface of a different application or a different user interface of the messaging application corresponding to messages user interface 1000) to messages user interface 1000.

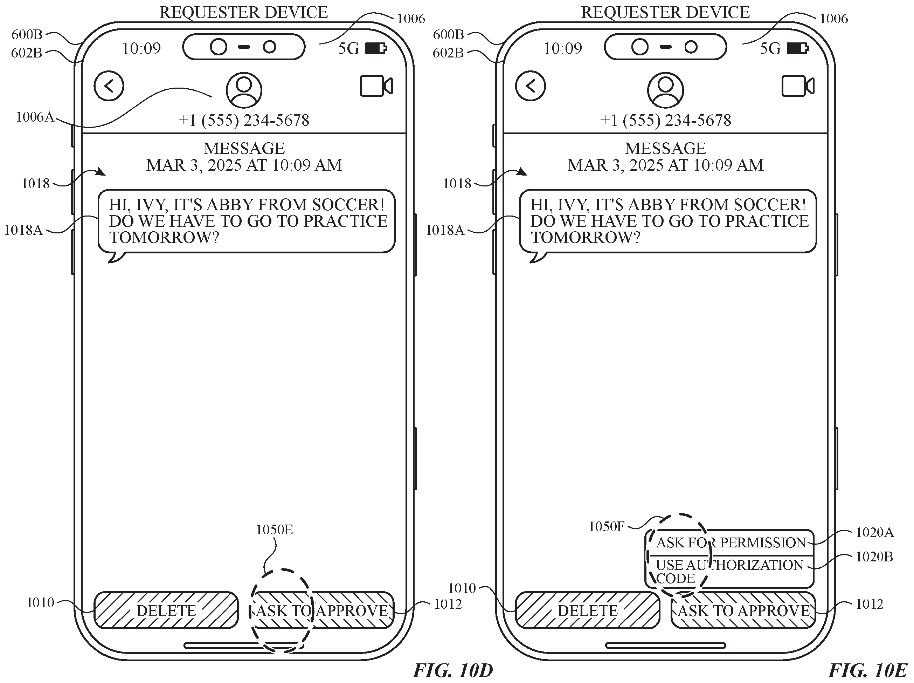

Messages user interface 1000 is configured to display communication items (e.g., graphical representations of communications such as text messages and/or message conversations) between the user of device 600B and one or more other entities. Device 600B displays communication item 1002A, communication item 1002B, and communication item 1002C in messages user interface 1000. Communication item 1002A and communication item 1002B correspond to respective communications (e.g., messages) from respective unapproved entities (e.g., unknown entities and/or entities that are not permitted contacts). Communication item 1002C corresponds to a communication from a permitted contact. In accordance with a determination that a respective communication item does not correspond to a permitted contact, device 600B displays the respective communication item with a request element and, optionally, a delete element. For example, device 600B displays communication item 1002A with request element 1004B1, and delete element 1004A1. Because communication item 1002A is not associated with a permitted contact, device 600B hides (e.g., does not display and/or obscures) content of the communication associated with communication item 1002A. For example, device 600B does not display a preview and/or summary of the content associated with communication item 1002A in FIG. 10A. In response to detecting an input corresponding to selection of delete element 1004A1, device 600B deletes communication item 1002A and, optionally, deletes the communication associated with communication item 1002A. In response to detecting input 1050B corresponding to selection of request element 1004B1, device 600B initiates a process for sending a request to approve communication with the entity associated with communication item 1002A. For example, in response to detecting input 1050B, device 600B displays permission element 1020A and/or authorization element 1020B described in greater detail in FIG. 10E.

Alternatively, in FIG. 10A, device 600B detects input 1050A corresponding to selection of communication item 1002A. In response to detecting input 1050A, device 600B displays user interface 1006 (e.g., a message conversation user interface) associated with communication item 1002A, including cancel element 1010 and request element 1012. Because communication item 1002A is not associated with a permitted contact, device 600B hides (e.g., does not display and/or obscures) the content of the communication associated with communication item 1002A. User interface 1006 displays a prompt and/or instructions to request approval to communicate with the entity associated with communication item 1002A.

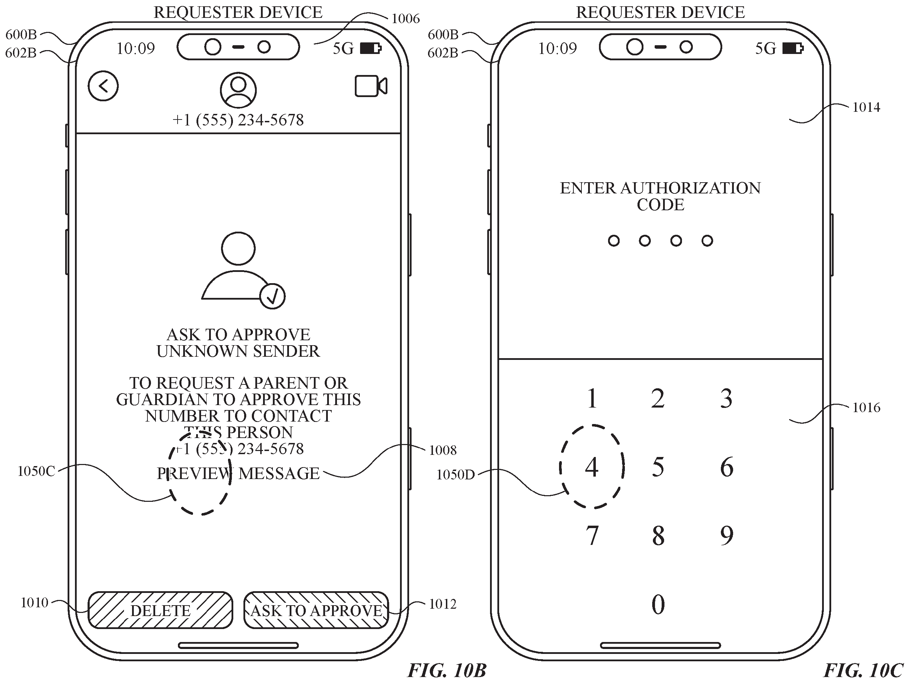

User interface 1006 includes preview element 1008. In response to detecting input 1050C corresponding to selection of preview element 1008, device 600B initiates a process for providing authentication (e.g., a password and/or passcode) to preview the communication. For example, in response to detecting input 1050C, device 600B displays user interface 1014 as shown in FIG. 10C. User interface 1014 includes keypad 1016 for entering a passcode. In some embodiments, the passcode required in user interface 1014 is a passcode of a parent and/or guardian account that manages the communication settings of device 600B (e.g., the passcode is different from a passcode that is used to unlock device 600B). In FIG. 10C, device 600B detects one or more inputs 1050D directed to keypad 1016 corresponding to entry of a passcode. In accordance with a determination that the passcode entered via one or more inputs 1050D matches a passcode of an authorized account, device 600B displays the communication associated with user interface 1006. For example, as shown in FIG. 10D, device 600B displays received message 1018A in message conversation 1018 without designating the sender of message 1018A as a permitted contact for device 600B.

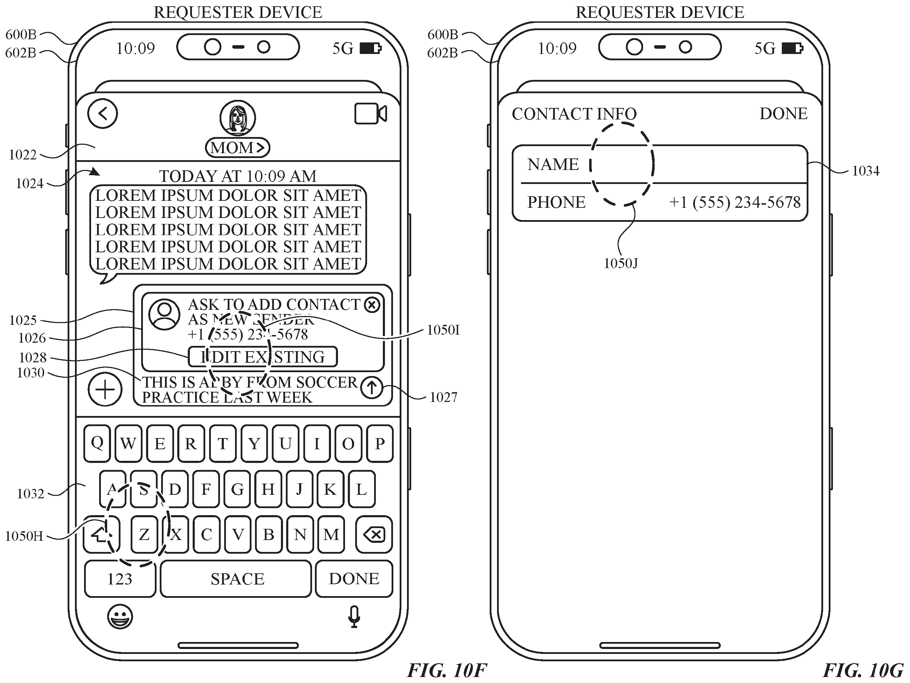

In FIG. 10D, in response to detecting input 1050E corresponding to selection of request element 1012, device 600B displays permission element 1020A and authorization element 1020B shown in FIG. 10E. In response to detecting an input corresponding to selection of authorization element 1020B, device 600B initiates a process at device 600B for designating the sender of message 1018A as a permitted contact. For example, in some embodiments, in response to detecting an input selecting authorization element 1020B, device 600B displays user interface 1014, and then, in response to detecting entry of a matching passcode, adds the sender of message 1018A as a permitted contact for device 600B. In response to detecting input 1050F corresponding to selection of permission element 1020A, device 600B initiates a process for sending a request to approve communication with the sender of message 1018A (e.g., the entity associated with communication item 1002A and/or user interface 1006). For example, in response to detecting input 1050F corresponding to selection of permission element 1020A, device 600B displays new message user interface 1022 for sending a request to an approver (e.g., Mom), as shown in FIG. 10F. New message user interface 1022 includes message conversation 1024 with the approver (e.g., including previous messages with the approver), message compose field 1025, and request 1026. Message compose field 1025 is pre-populated with request 1026. A user can enter additional content into message compose field 1025 via keyboard 1032. For example, in response to detecting one or more inputs 1050H directed to keyboard 1032, device 600B enters corresponding content (e.g., "This is Abby from soccer practice last week") into message compose field 1025.

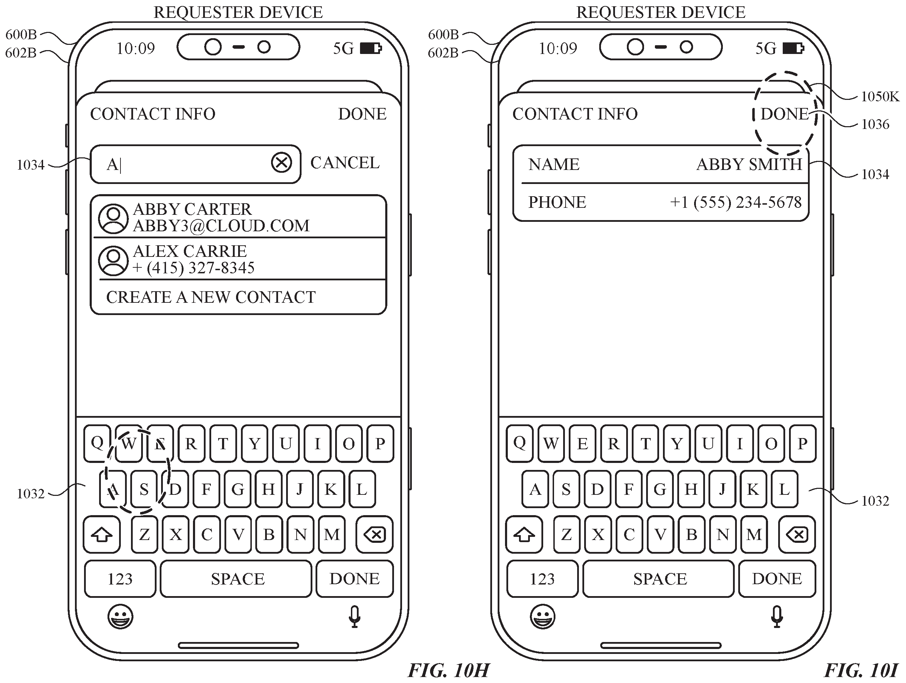

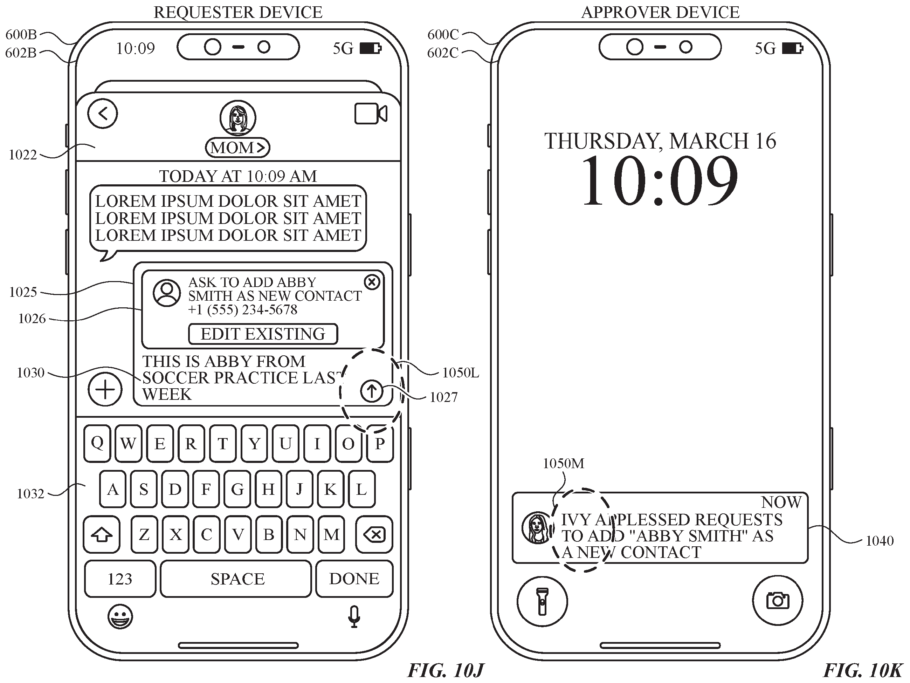

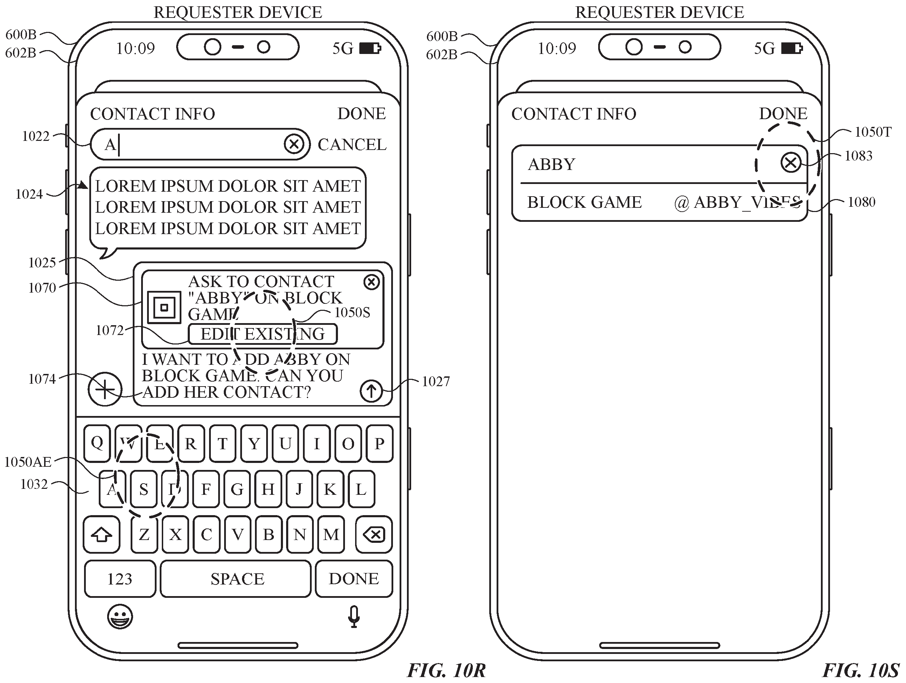

Request 1026 includes information about the entity for which approval to communicate with is being requested. New message user interface 1022 includes edit option 1028 (e.g., in request 1026) for editing the information included in request 1026. In response to detecting input 1050I selecting edit option 1028, device 600B displays information element 1034 shown in FIG. 10G. Information element 1034 can be selected to add, remove, and/or change the information in request 1026. For example, in response to detecting input 1050J corresponding to selection of information element 1034, device 600B displays keyboard 1032 as shown in FIG. 10H. In response to detecting input 1050G on keyboard 1032, device 600B edits the name of the entity associated with request 1026, as shown in FIG. 10I (e.g., adds the name "Abby Smith"). As shown in FIG. 10J, in response to detecting input 1050K corresponding to selection of done element 1036, device 600B updates request 1026 with the edits (e.g., name "Abby Smith") made in FIGS. 10R-10I.

In FIG. 10J, device 600B detects input 1050L corresponding to a request (e.g., selection of send button 1027) to send a message with the content of message compose field 1025, including request 1026 and customized content 1030, to the approver. In response to detecting input 1050L, device 600B sends a message with the content of message compose field 1025.

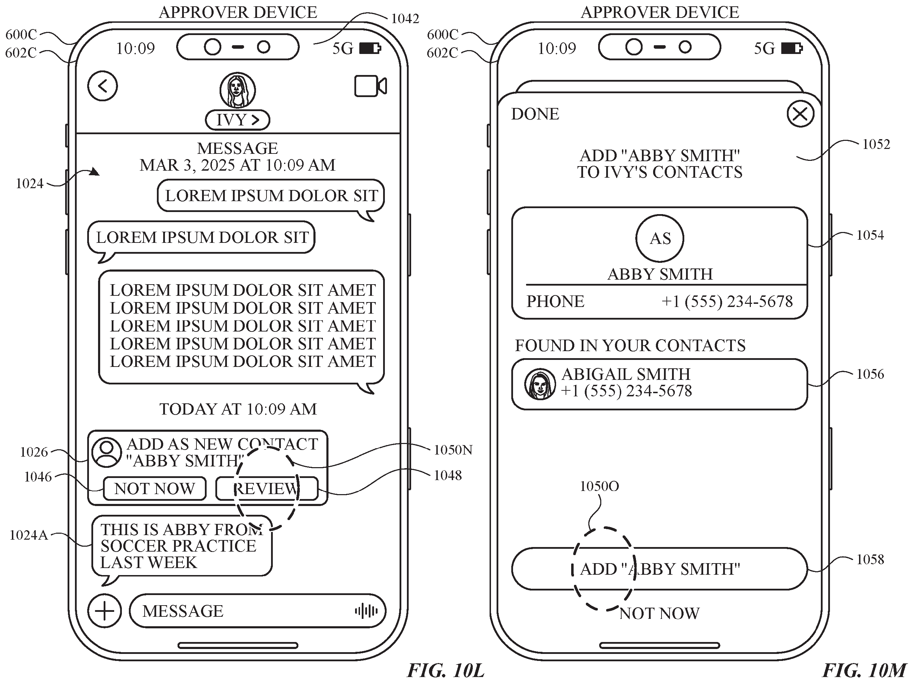

FIG. 10K illustrates device 600C of the approver (e.g., parent and/or mom) to which request 1026 was sent. In response to receiving the message from device 600B, including request 1026, device 600C displays notification 1040 on display 602C. In FIG. 10I, device 600C detects input 1050M corresponding to selection of notification 1040. In response to detecting input 1050M corresponding to selection of notification 1040, device 600C displays message conversation user interface 1042, including message conversation 1024 between the user of device 600C (e.g., the approver and/or parent) and the user of device 600B (e.g., the requester and/or child), as shown in FIG. 10L. Message conversation 1024 includes request 1026 and message 1024A from the user of device 600B.

Device 600C displays cancel element 1046 and review element 1048 with request 1026 (e.g., in message conversation 1024). In some embodiments, in response to detecting an input corresponding to selection of cancel element 1046, device 600C deletes request 1026 and/or removes request 1026 from message conversation 1024. In FIG. 10L, device 600C detects input 1050N corresponding to selection of review element 1048. In response to detecting input 1050N, device 600C displays user interface 1052 for designating the entity identified in request 1026 as a permitted contact, as shown in FIG. 10M.

User interface 1052 includes information associated with request 1026 (e.g., including the information added by the user of device 600B in FIGS. 10F-10I). For example, user interface 1052 includes information 1054, which includes a name and phone number of the entity. In accordance with a determination that information associated with the request is identified by device 600C, device 600C displays entity information 1056 in user interface 1052. For example, if device 600C identifies information in a list of contact entries (e.g., existing contacts) associated with device 600C, an email application, a messaging application, a calendar application, or other application of device 600C that matches information in request 1026, device 600C displays the identified information and, optionally, the location where the identified information was found (e.g., "Found in your contacts").

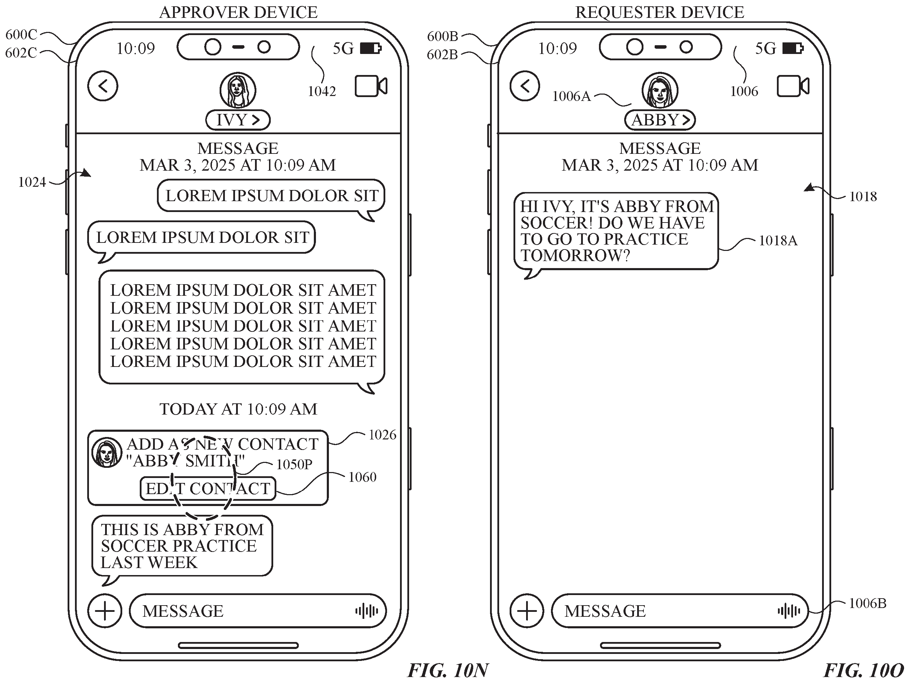

User interface 1052 includes add contact option 1058. In FIG. 10M, device 600C detects input 10500 corresponding to selection of add contact option 1058, device 600C designates the entity associated with request 1026 as a permitted contact for device 600B (e.g., device 600C approves the request and adds and/or saves Abby Smith as a permitted contact). After adding the requested entity as a permitted contact for device 600B, device 600C updates request 1026 in message conversation user interface 1042 to include edit option 1060, as shown in FIG. 10N. In response to detecting input 1050P corresponding to selection of edit option 1060, device 600C initiates a process for editing the information associated with the approved contact and/or removing the approved contact from the list of permitted contacts for device 600B. In some embodiments, the process for editing the information associated with the approved contact and/or removing the approved contact from the list of permitted contacts for device 600B includes displaying one or more user interface (e.g., a contact card and/or information page of the approved contact) and/or detecting one or more inputs corresponding to a request to edit the information ass10O - change 1062 to 1018ociated with the approved contact and/or remove the approved contact from the list of permitted contacts for device 600B.

FIG. 10O illustrates user interface 1006 on requester device 600B after request 1026 is approved (e.g., as shown in FIG. 10M). Since the remote participant of message conversation 1018 (e.g., the sender of message 1018A) is now a permitted contact, device 600B displays user interface 1006 with updated header 1006A that includes the name of the permitted contact (e.g., Abby) and the content of message conversation 1018 is not hidden. In FIG. 10O, user interface 1006 includes message compose field 1006B, which can be selected to compose and/or send communications to the permitted contact. Message compose field 1006B is not displayed in user interface 1006 in FIG. 10D prior to the sender of message 1018A being a permitted contact (e.g., because device 600B was restricted from communicating with the sender of message 1018A at that time). In FIG. 10O, because the remote participant of message conversation 1018 is now a permitted contact, device 600C can receive and display new messages from the permitted contact in message conversation 1018 (e.g., without authentication by a parent or other entity that manages the communication setting of device 600B).

In some embodiments, once an entity is designated as a permitted contact for device 600B for a first type of communication (e.g., text messages), device 600B can communicate with the permitted contact via other types of communication (e.g., phone calls and/or video calls). In some embodiments, if an entity is approved as a permitted contact with respect to a first type of application (e.g., a first-party application), device 600B can communicate with the permitted contact via other applications of the first type (e.g., other first-party communication application) but not via applications that are not of the first type (e.g., third-party applications).

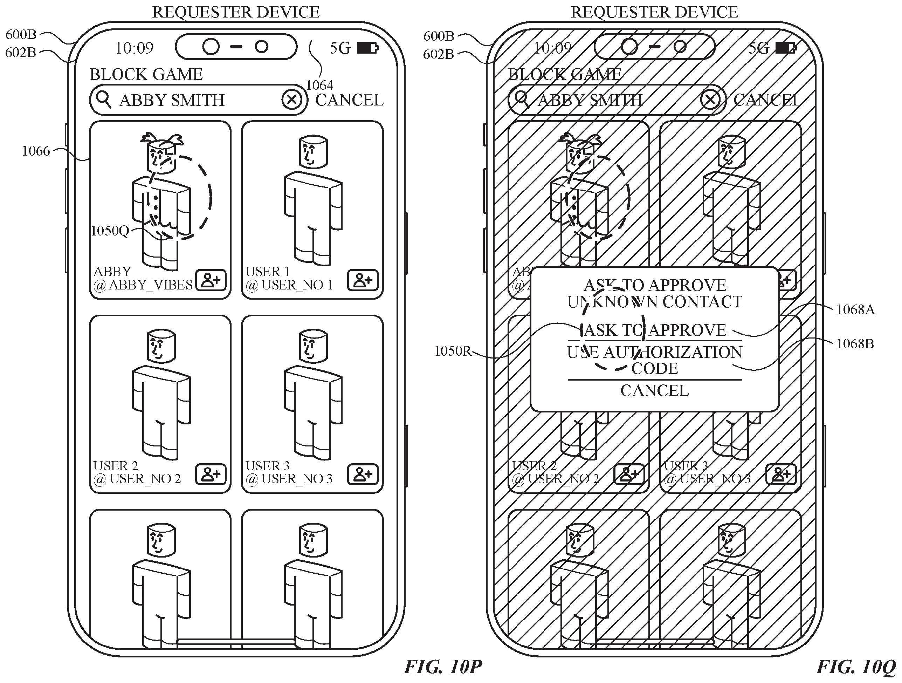

FIG. 10P illustrates device 600B displaying user interface 1064 of an interactive application (e.g., a third-party application, a social media application, a game application, and/or an application that is different from the messaging application of FIGS. 10A-10O). User interface 1064 displays representations of users of the interactive application. In some embodiments, the interactive application includes communication functionality that enables users to communicate (e.g., via text, audio, and/or video communication), an ability to post content for other users to view, and/or an ability to view content posted by other users. User interface 1064 includes representation 1066 of a remote user of the interactive application. In some embodiments, the user corresponding to representation 1066 is the same entity (e.g., the same person and/or associated with the phone number and/or account information) as the sender of message 1018A in FIG. 10O. In some embodiments, representation 1066 is a request (e.g., a friend request and/or an invitation) and/or an option to associate with a user account of the interactive application. In the embodiment illustrated in FIG. 10P, although the entity associated with representation 1066 is approved as a permitted contact with respect to the messaging application in FIG. 10O, device 600B is not approved to communicate with and/or view content associated with that entity via the application of user interface 1064 (e.g., the user account represented by representation 1066 is not a permitted contact).

In FIG. 10O, device 600C detects input 1050Q corresponding to selection of representation 1066. In response to detecting input 1050Q, device 600B displays request element 1068A and authorization element 1068B, as shown in FIG. 10Q. In some embodiments, in response to detecting an input selecting authorization element 1068B, device 600B initiates an authentication process at device 600B to designate the account of representation 1066 as a permitted contact with respect to the interactive application (e.g., device 600B displays a passcode user interface similar to user interface 1014 in FIG. 10C).

Alternatively, in FIG. 10Q, device 600B detects input 1050R corresponding to selection of request element 1068A. In response to detecting input 1050R, device 600B initiates a process for sending a request to approve the account associated with representation 1066 as a permitted contact. In some embodiments, approving the account associated with representation 1066 as a permitted contact enables device 600B to communicate with the account associated with representation 1066 via the interactive application, view content posted by the account associated with representation 1066 in the interactive application, and/or post content in the interactive application that can be viewed by the account associated with representation 1066. As shown in FIG. 10R, in response to detecting input 1050R, device 600B displays new message user interface 1022 for sending a request to an approver (e.g., Mom) (e.g., similar to FIG. 10F). New message user interface 1022 includes message conversation 1024 with the approver, message compose field 1025, and request 1070. Message compose field 1025 is pre-populated with request 1070. A user can enter additional content into message compose field 1025 via keyboard 1032. For example, in response to detecting one or more inputs 1050AE directed to keyboard 1032, device 600B enters corresponding content (e.g., "I want to add Abby on Block Game. Can you add her contact?") into message compose field 1025.

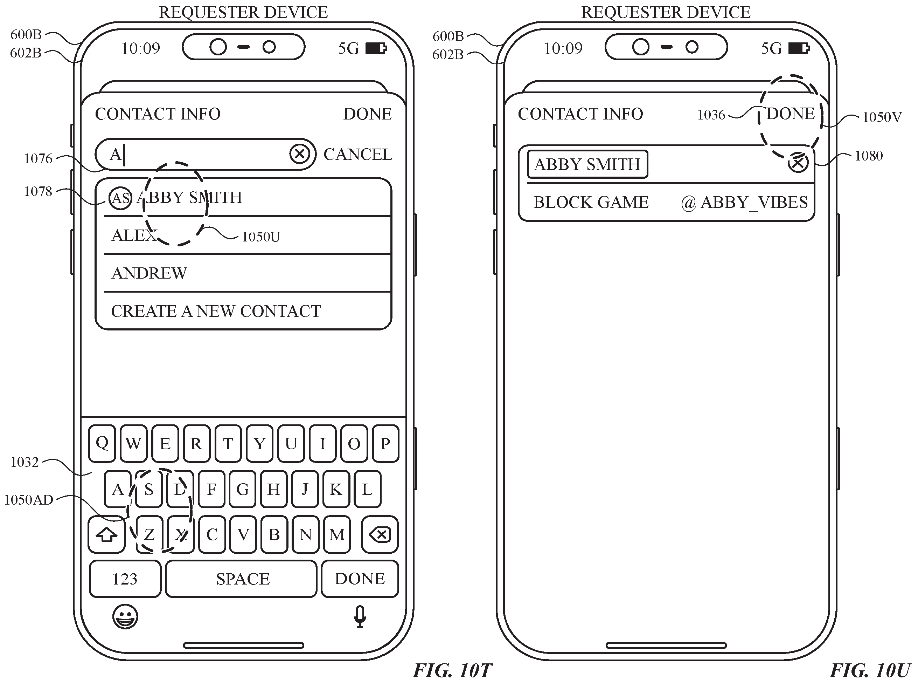

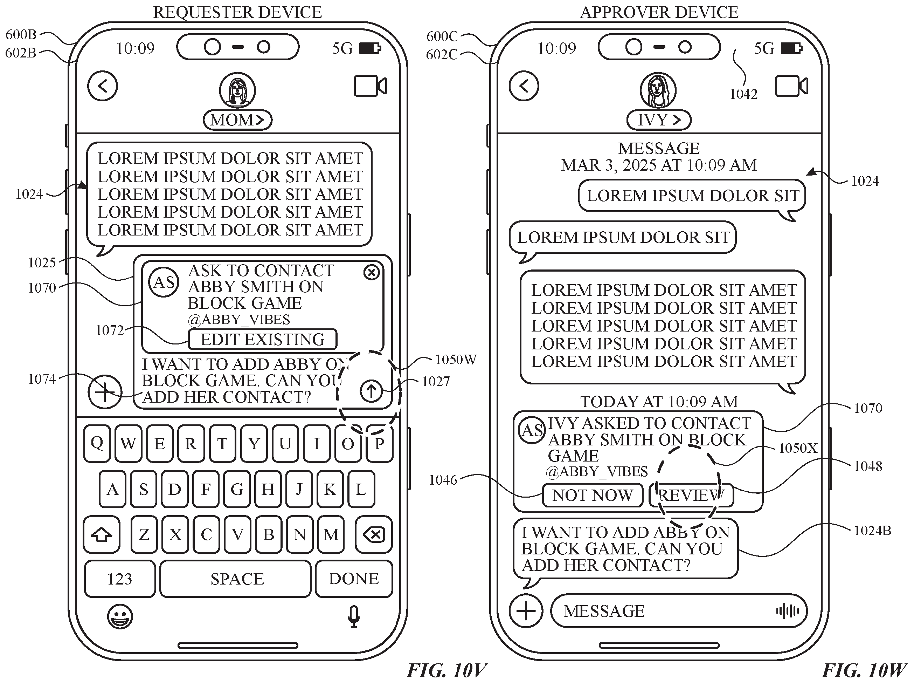

Request 1070 includes information about the account for which approval is being requested. In FIG. 10R, new message user interface 1022 includes edit option 1072 (e.g., in request 1070) for editing the information included in request 1070. In response to detecting input 1050S selecting edit option 1072, device 600B displays information element 1080 shown in FIG. 10S. Information element 1080 can be selected to add, remove, and/or change the information in request 1070. For example, in response to detecting input 1050T corresponding to selection of information element 1080 (e.g., selection of clear element 1083), device 600B displays keyboard 1032 as shown in FIG. 10T. In response to detecting input 1050AD on keyboard 1032, device 600B enters corresponding text (e.g., the letter "A") into text field 1076. In response to entering the text into field 1076, device 600B displays existing contacts (e.g., permitted contacts) that potentially match the entered text, including representation 1078 of the permitted contact of message conversation 1018 in FIG. 10O. In FIG. 10T, device 600B detects input 1050U corresponding to selection of representation 1078. In response to detecting input 1050U, device selects the contact associated with representation 1078 for request 1070, as shown in FIG. 10U. As shown in FIG. 10V, in response to detecting input 1050V corresponding to selection of done element 1036, device 600B updates request 1070 with the edits (e.g., name "Abby Smith") made in FIGS. 10T-10U.

In FIG. 10V, device 600B detects input 1050W corresponding to a request (e.g., selection of send button 1027) to send a message with the content of message compose field 1025, including request 1070 and customized content 1074, to the approver. In response to detecting input 1050W, device 600B sends a message with the content of message compose field 1025.

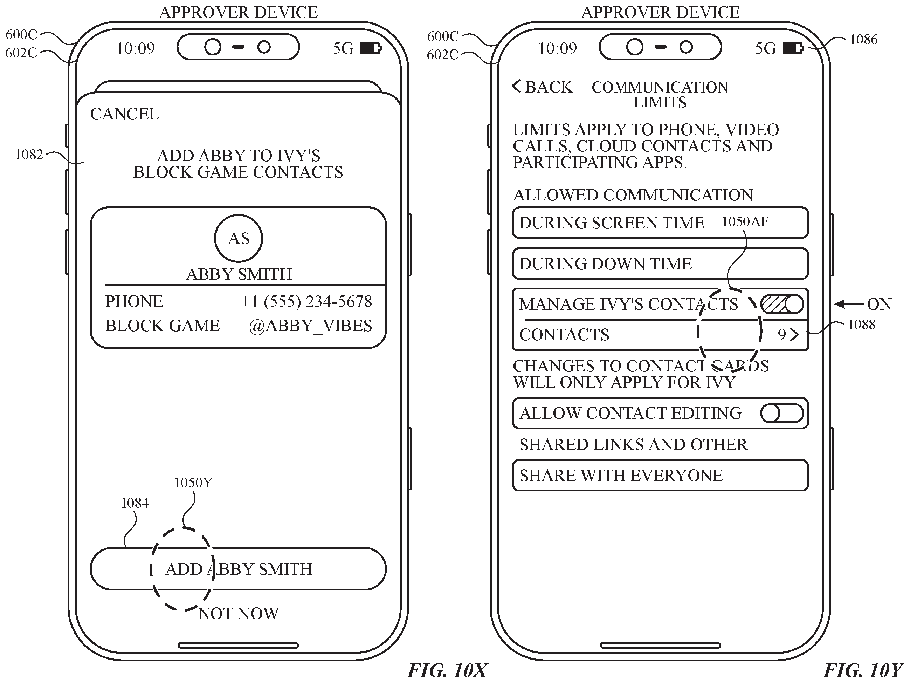

FIG. 10W illustrates device 600C of the approver (e.g., parent and/or mom) to which request 1070 was sent. After receiving the message from device 600B, including request 1070, device 600C displays message conversation user interface 1042, including message conversation 1024 between the user of device 600C (e.g., the approver and/or parent) and the user of device 600B (e.g., the requester and/or child). Message conversation 1024 includes request 1070 and message 1024B from the user of device 600B. Device 600C displays cancel element 1046 and review element 1048 with request 1070 (e.g., in message conversation 1024). In some embodiments, in response to detecting an input corresponding to selection of cancel element 1046, device 600C deletes request 1070 and/or removes request 1070 from message conversation 1024. In FIG. 10W, device 600C detects input 1050X corresponding to selection of review element 1048. In response to detecting input 1050X, device 600C displays user interface 1082 for designating the account identified in request 1070 as a permitted contact for the interactive application (e.g., for adding the account identified in request 1070 to the contacts of the user of device 600B for the interactive application), as shown in FIG. 10X. User interface 1082 includes information associated with request 1070 (e.g., including the information added by the user of device 600B in FIGS. 10T-10U). For example, user interface 1082 includes information 1054, which includes a name (e.g., Abby Smith), phone number (e.g., +1 (555) 234-5678), and username of the interactive application (e.g., @ABBY_VIBES). User interface 1052 includes add contact option 1084. In FIG. 10X, device 600C detects input 1050Y corresponding to selection of add contact option 1084, device 600C designates the account associated with request 1070 as a permitted contact in the interactive application for device 600B (e.g., device 600C approves the request and adds and/or saves @ABBY_VIBES as a permitted contact of the interactive application).

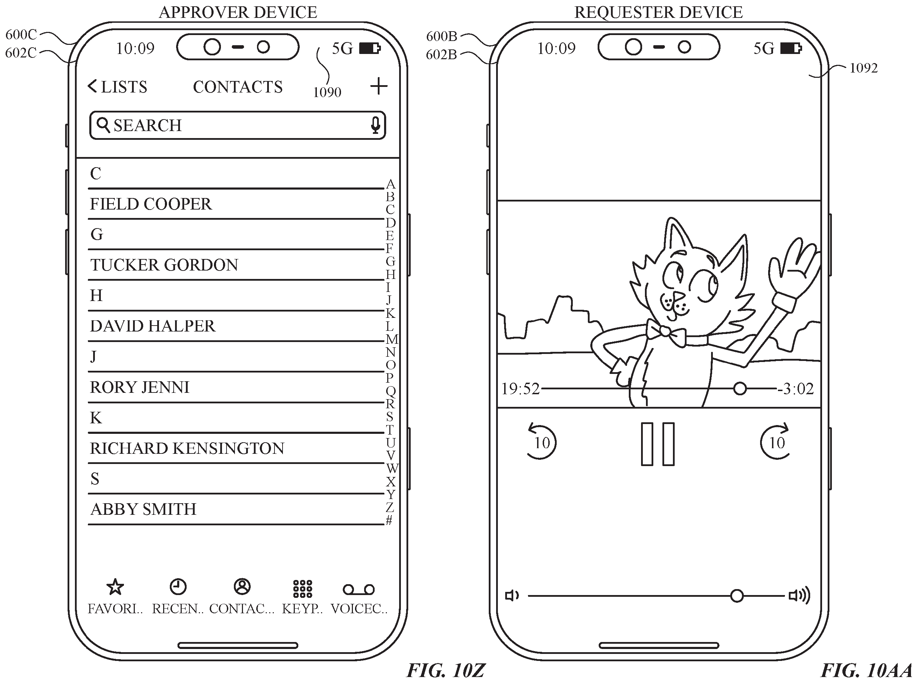

FIGS. 10Y-10Z illustrate a communication settings user interface, in accordance with some embodiments. FIG. 10Y illustrates communication settings user interface 1086 displayed on device 600C. Communication settings user interface 1086 includes settings for controlling the communication limits on device 600B, including, e.g., the contacts that device 600B is permitted to communicate with. In FIG. 10Y, device 600C detects input 1050AF corresponding to selection of contacts option 1088. In response to detecting input 1050AF, device 600C displays contacts user interface 1090 shown in FIG. 10Z. Contacts user interface 1090 includes a list of contacts with which device 600B is permitted to communicate. In response to one or more inputs (e.g., tap gestures and/or other inputs) directed to contacts user interface 1090 corresponding to a request to edit the list of contacts, device 600C adds, removes, and/or edits information associated with one or more contacts included in contacts user interface 1090.

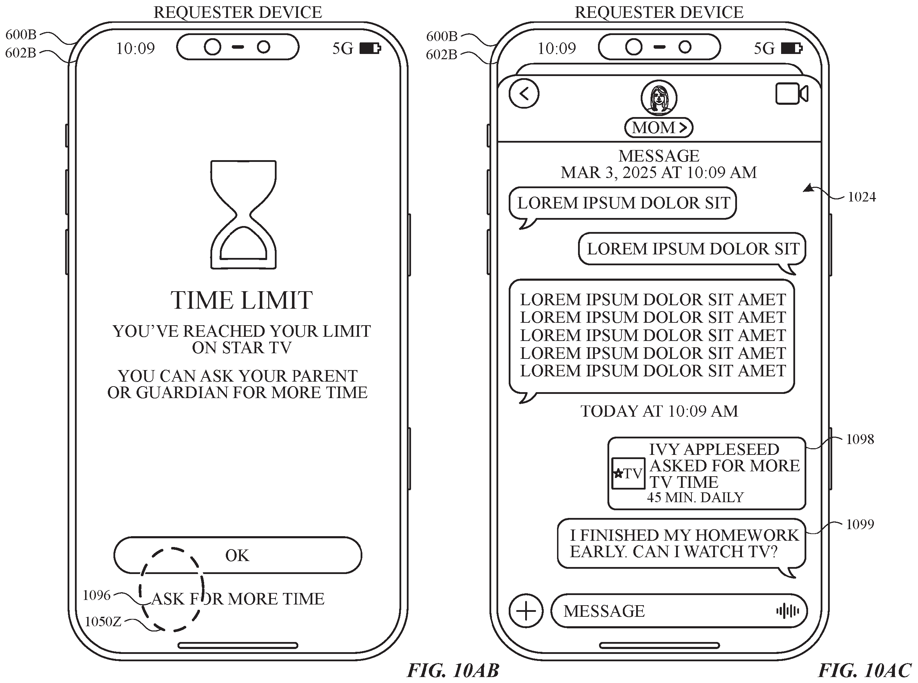

FIGS. 10AA-10AF illustrate techniques for managing application usage, in accordance with some embodiments. FIG. 10AA illustrates device 600B operating in a restricted mode of operation in which the usage of one or more applications is restricted in accordance with settings controlled by device 600C. For example, in FIG. 10AA, device 600B displays user interface 1092 of an application (e.g., a multimedia application) that has a time limit restriction on the amount of time that the application can be used on device 600B (e.g., the amount of time the application is allowed to be used on device 600B is restricted according to settings controlled by device 600C). In response to a determination that the time limit for the application in FIG. 10AA has been reached, device 600B displays user interface 1094 shown in FIG. 10AB. User interface 1094 includes an indication that the time limit has been reach and that additional time (e.g., an exception to the time limit) can be requested. User interface 1094 includes request element 1096 (e.g., labeled "Ask for more time"). Device 600B detects input 1050Z corresponding to selection of request element 1096. In response to detecting input 1050Z, device 600B initiates a process for requesting additional time to use the application in FIG. 10AA. In some embodiments, in response to detecting input 1050Z, device 600B displays a new message interface that includes a request for more time, an ability to edit the request and/or include a customized message, and an ability to send the request and, optionally, a customized message to an approver device, such as, e.g., device 600C (e.g., analogous to new message user interface 1022 in FIG. 10F and FIG. 10R). In some embodiments, in response to detecting input 1050Z, device 600B automatically send a request for more time to device 600C.

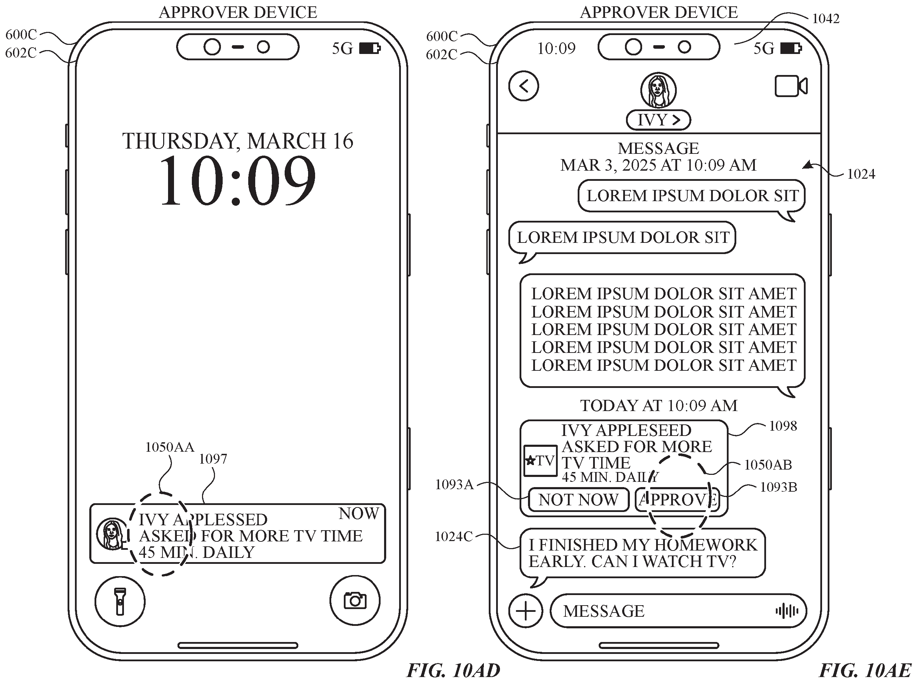

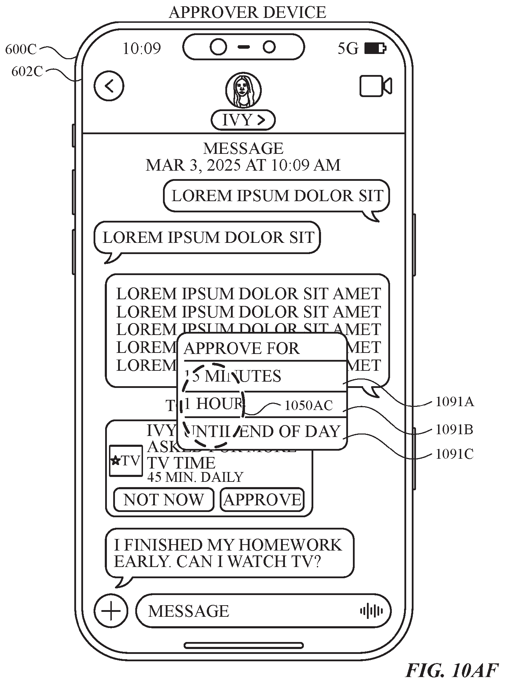

FIG. 10AC illustrates device 600B displaying message conversation 1024 between device 600B and device 600C after sending the request for additional time to use the application in FIG. 10AA. For example, message conversation 1024 in FIG. 10AC includes request 1098 for more time and customized message 1099. After receiving request 1098 from device 600B, device 600C displays notification 1097 as shown in FIG. 10AD. Notification 1097 includes an indication of the sender of the request (e.g., Ivy Appleseed), the content of the request (e.g., "Asked for more TV time"), and a current time limit (e.g., 45 minutes per day). In FIG. 10AD, device 600C detects input 1050AA corresponding to selection of notification 1097. In response to detecting input 1050AA, device 600C displays message conversation user interface 1042, including message conversation 1024 between the user of device 600C (e.g., the approver and/or parent) and the user of device 600B (e.g., the requester and/or child), as shown in FIG. 10AE. Message conversation 1024 in FIG. 10AE includes request 1098 and message 1024C from the user of device 600B. Device 600C displays cancel element 1093A and approve element 1093B with request 1070 (e.g., in message conversation 1024). In some embodiments, in response to detecting an input corresponding to selection of cancel element 1093A, device 600C deletes and/or declines request 1098 and/or removes request 1098 from message conversation 1024. In FIG. 10AE, device 600C detects input 1050AB corresponding to selection of approve element 1093B. In FIG. 10AF, in response to detecting input 1050AB, device 600C displays options corresponding to different amounts of time that can be selected to allow device 600B to use the application in FIG. 10AA for a corresponding additional amount of time. For example, in FIG. 10AF, device 600C displays option 1091A corresponding to 15 minutes, option 1091B corresponding to one hour, and option 1091C corresponding to the rest of the day (e.g., a calendar day). In FIG. 10AF, device 600C detects input 1050AC corresponding to option 1091B. In response to detecting input 1050AC, device 600C approves the amount of time (e.g., one hour) corresponding to option 1091B and device 600B is enabled to use the application in FIG. 10AA one more hour.

FIG. 11 is a flow diagram illustrating a method managing communication requests using a computer system in accordance with some embodiments. Method 1100 is performed at a computer system (e.g., 600B, a smart phone, a smart watch, a tablet computer, a laptop computer, a desktop computer, a wearable device, and/or a head-mounted device) that is in communication with (e.g., includes and/or is connected to) one or more display generation components (e.g., 112, 602B, one or more displays, one or more touch-screen displays, one or more monitors, a holographic display system, a transparent display, and/or a head-mounted display system) and one or more input devices (e.g., 112, 116, 602B, a touch-sensitive surface (e.g., a touch-sensitive display); a mouse; a keyboard; a remote control; a visual input device; an audio input device (e.g., a microphone); a biometric sensor (e.g., a fingerprint sensor, a face identification sensor, a gaze tracking sensor, and/or an iris identification sensor); a camera (e.g., an infrared camera, depth camera, visible light camera, and/or gaze tracking camera); a movement input sensor (e.g., an accelerometer and/or a gyroscope); and/or a mechanical input device (e.g., a depressible input mechanism, a button, a rotatable input mechanism, a crown, and/or a dial)). Some operations in method 1100 are, optionally, combined, the orders of some operations are, optionally, changed, and some operations are, optionally, omitted.

As described below, method 1100 provides an intuitive way for managing communication requests. The method reduces the cognitive burden on a user for managing communication requests, thereby creating a more efficient human-machine interface. For battery-operated computing devices, enabling a user to manage communication requests faster and more efficiently conserves power and increases the time between battery charges.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Performing an operation when a set of conditions has been met without requiring further user input (such as by displaying a communication item with a request element to initiate a process for sending a request to approve communication with an entity associated with the communication item if the communication item does not correspond to a permitted contact) enhances the operability of the device by reducing unnecessary inputs and/or steps to navigate through different user interfaces or sets of controls, reducing energy usage by the device. Restricting access to potentially sensitive information and/or compartmentalizing the information to specific devices and processes (such as by operating a computer system in a restricted mode of operation that limits a communication functionality and/or displaying a communication item without a preview of content of a communication associated with the communication item if the communication item does not correspond to a permitted contact) improves privacy and security by limiting the manner in which that potentially sensitive information can be accessed.

While the computer system is in a restricted mode of operation (e.g., a parental control mode) that limits a communication functionality of the computer system, the computer system detects (1102), via the one or more input devices, an input (e.g., 850B, 1050A, an air gesture, a gaze, a voice command, a touch input, a button press, and/or a movement of the computer system) corresponding to a request to display a respective user interface (e.g., 1000, 1006, and/or 1064) that includes a communication item (e.g., 1002A, 1002B, 1002C, 1006, and/or 1066). In some embodiments, the respective user interface is a user interface of a communication application, such as a phone application, email application, and/or a messaging application, and/or a user interface of an application (e.g., a saved contacts application) for storing, viewing, and/or editing entries that contain a name, phone number, email address, social media profile, and/or other information of an entity. In some embodiments, the respective user interface includes a user interface of a game application and/or a social media application that includes a communication functionality (e.g., the ability to message, call, and/or otherwise communicate with another player, participant, user, and/or account). In some embodiments, an entity includes a caller, a sender of a message, a sender of an email, a person, a business, an organization, and/or an account (e.g., a social media account and/or application account). In some embodiments, a communication item is a graphical user interface element that corresponds to a phone call (e.g., a recent call, a missed call, an incoming call, an outgoing call, an answered call, a video call, a conference call, a group call), a voicemail, a text message, a message conversation, a group message conversation, an email, and/or an email thread.

In response to detecting the input corresponding to the request to display the respective user interface, the computer system displays (1104), via the one or more display generation components, the respective user interface (e.g., 1000 in FIG. 10A, 1006 in FIG. 10B, and/or 1064 in FIG. 10P), including: in accordance with a determination that the communication item (e.g., 1002A, 1002B, 1006, and/or 1066) does not correspond to a permitted contact (e.g., the communication item corresponds to an entity that is not in a list of permitted contacts and/or an entity that is not designated as an entity with which the computer system is permitted to communicate), the computer system displays (1106) (e.g., concurrently displaying), via the one or more display generation components, the communication item (e.g., 1002A, 1002B, 1006, and/or 1066) and a request element (e.g., 1004B1, 1004B2, 1012, a "request approval" option, a selectable graphical element, button, selectable icon, and/or affordance). In some embodiments, displaying the respective user interface includes: in accordance with a determination that the communication item (e.g., 1002C) corresponds to a permitted contact (e.g., the communication item corresponds to a saved contact, an entity that is in a list of permitted contacts, and/or an entity that is designated as an entity with which the computer system is permitted to communicate), displaying, via the one or more display generation components, the communication item (e.g., 1002C) without displaying the request element (e.g., 1004B1).

While displaying the request element, the computer system detects (1108), via the one or more input devices, an input (e.g., 1050B, 1050E, an air gesture, a gaze, a voice command, a touch input, a button press, and/or a movement of the computer system) corresponding to selection of (e.g., directed to a location of) the request element. In response to detecting the input corresponding to selection of the request element, the computer system initiates (1110) a process (e.g., the process described with reference to FIGS. 10A-10H and/or FIGS. 10P-10V) for sending (e.g., to an external device and/or account (such as a device and/or account of a parent) via a text message and/or email) a request (e.g., 1026, 1024A, 1070, 1074, a text message, email, and/or other type of communication) to approve communication with an entity (e.g., a sender and/or caller) associated with the communication item. In some embodiments, in response to detecting the input corresponding to selection of the request element, the computer system sends (or causes to be sent) the request to approve communication with the entity associated with the communication item to an approval entity (e.g., an account and/or device of an entity, such as a parent, that is authorized to control communication limits for the computer system and/or an account associated with the computer system). In some embodiments, the request is received and/or displayed at an external device associated with the approval entity. In some embodiments, the request includes a selectable approve element, and in response to detecting (e.g., at an external device associated with the approval entity) an input corresponding to selection of the approve element, a process for designating the entity associated with the communication item as a permitted contact is initiated (e.g., at the device associated with the approval entity). In some embodiments, the process for designating the entity associated with the communication item as a permitted contact includes displaying a set of one or more user interfaces, displaying one or more selectable elements, detecting inputs selecting the one or more selectable elements, and/or designating the entity associated with the communication item as a permitted contact (e.g., in response to detecting the inputs selecting the one or more selectable elements).

In some embodiments, displaying the respective user interface includes, in accordance with a determination that the communication item does not correspond to a permitted contact, displaying the communication item (e.g., 1002A as shown in FIG. 10A or 1006 in FIG. 10B) without displaying a preview of content of a communication (e.g., a message) associated with the communication item (e.g., the computer system hides, obscures, and/or forgoes displaying a preview of messages and/or other communications from entities that are not permitted contacts).

In some embodiments, the respective user interface includes a second communication item (e.g., 1002B); and displaying the respective user interface includes, in accordance with a determination that the second communication item does not correspond to a permitted contact, displaying (e.g., concurrently displaying), via the one or more display generation components, the second communication item and a second request element (e.g., 1004B2, a "request approval" option, an "ask to approve" option, a selectable graphical element, button, selectable icon, and/or affordance) that when selected initiates a process (e.g., the process described with reference to FIGS. 10A-10H) for sending a request to approve communication with an entity associated with the second communication item. For example, in response to detecting an input corresponding to selection of the second request element, the computer system initiates a process for sending a request to approve communication with an entity associated with the second communication item.

In some embodiments, the process for sending the request to approve communication with an entity associated with the communication item includes sending a message (e.g., 1024A, 1074, a text message, and/or other type of message) with the request (e.g., 1026 and/or 1070). For example, the process for sending the request to approve communication with an entity associated with the communication item includes detecting a sequence of one or more inputs, and in response to detecting the sequence of one or more inputs, composing a message and sending the message with the request to approve communication with an entity associated with the communication item. In some embodiments, the request (e.g., 1026 and/or 1070) includes information (e.g., a phone number, account name, email address, and/or handle) that identifies the entity associated with the communication item with which communication is being requested (e.g., request 1026 and request 1070 include the name "Abby Smith"). In some embodiments, the request includes information (e.g., a name, color, image, and/or animation) that identifies an application associated with the entity with which communication is being requested (e.g., request 1070 includes application name "BLOCK GAME").

In some embodiments, displaying the respective user interface includes: in accordance with a determination that the communication item does not correspond to a permitted contact, displaying, via the one or more display generation components, a preview element (e.g., 1008, a selectable graphical element, button, selectable icon, and/or affordance); while displaying the preview element, detecting, via the one or more input devices, an input (e.g., 1050C, an air gesture, a gaze, a voice command, a touch input, a button press, and/or a movement of the computer system) corresponding to selection of (e.g., directed to a location of) the preview element; and in response to detecting the input corresponding to selection of the preview element, initiating a process for displaying (e.g., in the respective user interface) a preview of content (e.g., text and/or an image) of the communication item (e.g., the process described with reference to FIGS. 10B-10D). In some embodiments, the computer system displays a preview of the content of the communication item in response to detecting the input corresponding to selection of the preview element. In some embodiments, the process for displaying the preview of the content of the communication item includes providing (e.g., displaying) a prompt to provide authentication information (e.g., to enter a passcode and/or password and/or to perform biometric authentication, such as facial identification and/or fingerprint identification) and/or detecting input corresponding to entry of the authentication information. In some embodiments, in response to detecting the input corresponding to entry of the authentication information: in accordance with a determination that the authentication information satisfies authentication criteria, the computer system provides (e.g., displays and/or outputs) the preview of the content of the communication item; and in accordance with a determination that the authentication information does not satisfy the authentication criteria, the computer system forgoes providing a preview of the content of the communication item.

In some embodiments, after the request is received at an external device (e.g., 600C and/or the parent device), an approve element (e.g., 1048 and/or 1058) is displayed (e.g., at the parent device); and in response to selection of the approve element (e.g., via input 105N and/or input 10500), the entity associated with the communication item is designated as a permitted contact (e.g., a contact entry for the entity is added to the account associated with the computer system). For example, after the entity associated with the communication item is designated as a permitted contact, the computer system can display communications from the entity and/or send communications to the entity while operating in the restricted mode of operation. In some embodiments, account information (e.g., a username and/or application) is associated with the contact entry for the entity associated with the communication item in response to one or more inputs at the computer system and/or the external device (e.g., the parent and/or the child can include account information in the saved contact entry for the entity associated with the communication item).

In some embodiments, in accordance with a determination that the entity associated with the request corresponds to a contact entry associated with an approval entity (e.g., the entity is in the parent's contact list), an indication (e.g., 1056, text, an image, a color, a style, and/or an animation) is displayed (e.g., in the request) that the request corresponds to a contact entry associated with the approval entity (e.g., the indication displays a name, number, and/or account associated with the contact entry). In some embodiments, in accordance with a determination that the entity associated with the request does not correspond to a contact entry associated with an external device at which the request is received, the indication (e.g., text, an image, a color, a style, and/or an animation) is not displayed (e.g., the external device does not display the indication that the request corresponds to a contact entry associated with the external device). In some embodiments, in accordance with a determination that entity information (e.g., a potential name) associated with the entity associated with the request is identified (e.g., in a message, email, and/or calendar event), the entity information (e.g., 1056) is displayed (e.g., in and/or concurrently with the request). In some embodiments, in accordance with a determination that entity information associated with the entity associated with the request is not identified, the entity information is not displayed.

In some embodiments, after the entity associated with the communication item is designated as a permitted contact with respect to an application associated with the communication item (e.g., as described with reference to FIG. 10M), wherein the application associated with the communication item is a first application (e.g., a messaging application) of a first type of application (e.g., a first-party application): the computer system receives a request to communicate, via a second application (e.g., a phone application) that is different from the first application, with (e.g., to receive a communication from and/or send a communication to) the entity associated with the communication item; and in response to receiving the request to communicate with the entity associated with the communication item, in accordance with a determination that the second application is the first type of application (e.g., another first-party application), the computer system permits the request to communicate with the entity (e.g., to receive a communication from, display a communication from, and/or send a communication to the entity). In some embodiments, in response to receiving the request to communicate with the entity associated with the communication item: in accordance with a determination that the second application is not the first type of application (e.g., the request to communication with the entity corresponds to a third-party application), the computer system does not permit the request to communicate with the entity.

In some embodiments, after the entity associated with the communication item is designated as a permitted contact with respect to an application associated with the communication item (e.g., as described with reference to FIG. 10X), wherein the application associated with the communication item is a first application (e.g., the application in FIG. 10P, a game application, a social media application, and/or a messaging application) of a second type of application (e.g., a third-party application): the computer system receives a request to communicate (e.g., message 1018A), via a second application (e.g., another a game application, a social media application, and/or messaging application) that is different from the first application, with (e.g., to receive a communication from and/or send a communication to) the entity associated with the communication item; and in response to receiving the request to communicate with the entity associated with the communication item, in accordance with a determination that the first application is the second application (e.g., the first application and the second application are the same application), the computer system permits the request to communicate with the entity (e.g., to receive a communication from, display a communication from, and/or send a communication to the entity). In some embodiments, in response to receiving the request to communicate with the entity associated with the communication item: in accordance with a determination that the first application is the second type of application (e.g., a third-party application) and is different from the second application, the computer system does not permit the request to communicate with the entity (e.g., communication via third-party applications is approved on an application-by-application basis). In some embodiments, different applications of the second type have separate (e.g., independent) lists of permitted contacts. In some embodiments, the communication item corresponds to a request (e.g., 1066, a friend request, and/or an invitation) to associate with a user account (e.g., a social media account and/or an account of a game).

Note that details of the processes described above with respect to method 1100 (e.g., FIG. 11) are also applicable in an analogous manner to the methods described above. For example, methods 700 and/or 900 optionally include one or more of the characteristics of the various methods described above with reference to method 1100. For example, the computer systems in methods 700 and 900 can operate according to the restricted mode of operation described in method 1100 and send requests according to the techniques of method 1100. For brevity, these details are not repeated below.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve managing communications with an electronic device. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to manage communications with an electronic device. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of managing communication with an electronic device, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, communication using an electronic device can be managed based on non-personal information data or a bare minimum amount of personal information, such as the content being requested by the device associated with a user, other non-personal information available to the computer system, or publicly available information.

Exemplary embodiments of the present disclosure are set out in the following items:
1. A method, comprising:
   at a computer system that is in communication with one or more display generation components and one or more input devices:
   receiving a call;
   while the call is incoming:
      in accordance with a determination that the call is associated with a first type of caller, displaying, via the one or more display generation components, an incoming call user interface, including displaying a first reply element that when selected initiates a process for providing an audio message to the caller in the call without answering the call; and
      in accordance with a determination that the call is associated with a second type of caller that is different from the first type of caller, displaying, via the one or more display generation components, a call screening notification, wherein the call screening notification is displayed while a digital call assistant is active for the call;
   while displaying the call screening notification, detecting, via the one or more input devices, an input corresponding to selection of the call screening notification; and
   in response to detecting the input corresponding to selection of the call screening notification, displaying, via the one or more display generation components, a second reply element that when selected initiates a process for providing an audio message to the caller in the call without answering the call.
2. The method of item 1, wherein:
   displaying the incoming call user interface includes displaying, via the one or more display generation components, an accept call element that when selected connects the computer system to the call; and
   displaying the call screening notification includes displaying the call screening notification without the accept call element.
3. The method of any of items 1-2, further comprising:
   in response to detecting the input corresponding to selection of the call screening notification, displaying, via the one or more display generation components, a call screening user interface that includes information about the digital call assistant.
4. The method of item 3, wherein displaying the call screening user interface includes displaying an accept call element that when selected connects the computer system to the call.
5. The method of any of items 3-4, wherein displaying the call screening user interface includes displaying screening status information that is based on a status of the digital call assistant.
6. The method of any of items 3-5, further comprising:
   while displaying the second reply element, detecting, via the one or more input devices, an input corresponding to selection of the second reply element; and
   in response to detecting the input corresponding to selection of the second reply element, initiating the process for providing an audio message to the caller in the call without answering the call.
7. The method of any of items 3-6, wherein displaying the call screening user interface includes displaying a description of an audio message provided in the call to the caller by the digital call assistant.
8. The method of any of items 3-7, wherein displaying the call screening user interface includes displaying a description of audio from the caller.
9. The method of any of items 1-8, further comprising:
   while displaying the call screening notification, detecting, via the one or more input devices, a change in a status of the digital call assistant; and
   in response to detecting the change in the status of the digital call assistant, updating display of the call screening notification based on the change in status of the digital call assistant.
10. The method of any of items 1-9, further comprising:
   while the call is incoming, in accordance with a determination that the call is associated with the second type of caller, forgoing output of a ringtone.
11. The method of item 10, further comprising:
   while the call is incoming and after forgoing output of a ringtone:
   in accordance with a determination that a set of call screening criteria is met, outputting, via one or more output devices that are in communication with the computer system, a ringtone.
12. The method of any of items 1-11, further comprising:
   while displaying the incoming call user interface, including displaying the first reply element, detecting, via the one or more input devices, an input corresponding to selection of the first reply element; and
   in response to detecting the input corresponding to selection of the first reply element, initiating the process for providing an audio message to the caller in the call without answering the call.
13. The method of item 12, wherein the process for providing an audio message to the caller in the call without answering the call includes:
   detecting, via the one or more input devices, a set of one or more inputs corresponding to a request to generate and send a message; and
   in response to detecting the set of one or more inputs corresponding to the request to generate and send the message, providing, without answering the call, an audio message in the call based on the request to generate and send the message.
14. The method of any of items 1-13, further comprising:
   after receiving a respective call associated with the second type of caller for which the digital call assistant was active, displaying, via the one or more display generation components, a representation of the respective call in a list of representations of calls.
15. The method of item 14, further comprising:
   while displaying the representation of the respective call, displaying, via the one or more display generation components, a selectable element;
   detecting, via the one or more input devices, an input corresponding to selection of the selectable element; and
   in response to detecting the input corresponding to selection of the selectable element, initiating a process for designating a caller associated with the respective call as the first type of caller.
16. A non-transitory computer-readable storage medium storing one or more programs configured to be executed by one or more processors of a computer system that is in communication with one or more display generation components and one or more input devices, the one or more programs including instructions for performing the method of any of items 1-15.
17. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 1-15.
18. A computer system that is configured to communicate with one or more display generation components and one or more input devices, comprising: means for performing the method of any of items 1-15.
19. A computer program product, comprising one or more programs configured to be executed by one or more processors of a computer system that is in communication with one or more display generation components and one or more input devices, the one or more programs including instructions for performing the method of any of items 1-15.
20. A non-transitory computer-readable storage medium storing one or more programs configured to be executed by one or more processors of a computer system that is in communication with one or more display generation components and one or more input devices, the one or more programs including instructions for:
   receiving a call;
   while the call is incoming:
      in accordance with a determination that the call is associated with a first type of caller, displaying, via the one or more display generation components, an incoming call user interface, including displaying a first reply element that when selected initiates a process for providing an audio message to the caller in the call without answering the call; and
      in accordance with a determination that the call is associated with a second type of caller that is different from the first type of caller, displaying, via the one or more display generation components, a call screening notification, wherein the call screening notification is displayed while a digital call assistant is active for the call;
   while displaying the call screening notification, detecting, via the one or more input devices, an input corresponding to selection of the call screening notification; and
   in response to detecting the input corresponding to selection of the call screening notification, displaying, via the one or more display generation components, a second reply element that when selected initiates a process for providing an audio message to the caller in the call without answering the call.
21. A computer system configured to communicate with one or more display generation components and one or more input devices, comprising:
   one or more processors; and
   memory storing one or more programs configured to be executed by the one or more processors, the one or more programs including instructions for:
      receiving a call;
      while the call is incoming:
         in accordance with a determination that the call is associated with a first type of caller, displaying, via the one or more display generation components, an incoming call user interface, including displaying a first reply element that when selected initiates a process for providing an audio message to the caller in the call without answering the call; and
         in accordance with a determination that the call is associated with a second type of caller that is different from the first type of caller, displaying, via the one or more display generation components, a call screening notification, wherein the call screening notification is displayed while a digital call assistant is active for the call;
      while displaying the call screening notification, detecting, via the one or more input devices, an input corresponding to selection of the call screening notification; and
      in response to detecting the input corresponding to selection of the call screening notification, displaying, via the one or more display generation components, a second reply element that when selected initiates a process for providing an audio message to the caller in the call without answering the call.
22. A computer system configured to communicate with one or more display generation components and one or more input devices, comprising:
   means for receiving a call;
   means for, while the call is incoming:
      in accordance with a determination that the call is associated with a first type of caller, displaying, via the one or more display generation components, an incoming call user interface, including displaying a first reply element that when selected initiates a process for providing an audio message to the caller in the call without answering the call; and
      in accordance with a determination that the call is associated with a second type of caller that is different from the first type of caller, displaying, via the one or more display generation components, a call screening notification, wherein the call screening notification is displayed while a digital call assistant is active for the call;
   means for, while displaying the call screening notification, detecting, via the one or more input devices, an input corresponding to selection of the call screening notification; and
   means for, in response to detecting the input corresponding to selection of the call screening notification, displaying, via the one or more display generation components, a second reply element that when selected initiates a process for providing an audio message to the caller in the call without answering the call.
23. A computer program product, comprising one or more programs configured to be executed by one or more processors of a computer system that is in communication with one or more display generation components and one or more input devices, the one or more programs including instructions for:
   receiving a call;
   while the call is incoming:
      in accordance with a determination that the call is associated with a first type of caller, displaying, via the one or more display generation components, an incoming call user interface, including displaying a first reply element that when selected initiates a process for providing an audio message to the caller in the call without answering the call; and
      in accordance with a determination that the call is associated with a second type of caller that is different from the first type of caller, displaying, via the one or more display generation components, a call screening notification, wherein the call screening notification is displayed while a digital call assistant is active for the call;
   while displaying the call screening notification, detecting, via the one or more input devices, an input corresponding to selection of the call screening notification; and
   in response to detecting the input corresponding to selection of the call screening notification, displaying, via the one or more display generation components, a second reply element that when selected initiates a process for providing an audio message to the caller in the call without answering the call.
24. A method, comprising:
   at a computer system that is in communication with one or more display generation components and one or more input devices:
   detecting, via the one or more input devices, an input corresponding to a request to display a user interface for displaying communication items associated with a first type of entity; and
   in response to detecting the input corresponding to the request to display the user interface for displaying communication items associated with the first type of entity, displaying, via the one or more display generation components, the user interface for displaying communication items associated with the first type of entity, including:
   in accordance with a determination that a set of one or more entity criteria is met, displaying, via the one or more display generation components, a first communication item and a first graphical element that when selected initiates a process for designating an entity associated with the first communication item as a known entity; and
   in accordance with a determination that the set of one or more entity criteria is not met, displaying, via the one or more display generation components, the user interface for displaying communication items associated with the first type of entity without displaying the first communication item.
25. The method of item 24, wherein the process for designating an entity associated with the first communication item as a known entity includes:
   detecting, via the one or more input devices, an input corresponding to selection of the first graphical element;
   in response to detecting the input corresponding to selection of the first graphical element, displaying, via the one or more display generation components, a description element;
   detecting, via the one or more input devices, a set of one or more inputs that includes selection of the description element; and
   in response to detecting the set of one or more inputs that includes selection of the description element, assigning a description to the entity associated with the first communication item and designating the entity associated with the first communication item as a known entity.
26. The method of item 25, further comprising:
   in response to detecting the set of one or more inputs that includes selection of the description element, forgoing creating a contact entry for the entity associated with the first communication item.
27. The method of any of items 24-26, further comprising:
   after designating the entity associated with the first communication item as a known entity, displaying, via the one or more display generation components, the user interface for displaying communication items associated with the first type of entity without the first communication item.
28. The method of any of items 24-27, wherein the user interface for displaying communication items associated with the first type of entity is a user interface of a first application, the method further comprising:
   receiving, via a second application that is different from the first application, a communication from the entity associated with the first communication item; and
   after designating the entity associated with the first communication item as a known entity:
      detecting, via the one or more input devices, an input corresponding to a request to display a user interface of the second application, wherein the user interface of the second application is for displaying communication items associated with the first type of entity; and
   in response to detecting the input corresponding to the request to display the user interface of the second application, displaying, via the one or more display generation components, the user interface of the second application without displaying a communication item associated with the entity.
29. The method of any of items 24-28, further comprising:
   detecting, via the one or more input devices, an input corresponding to a request to display a user interface for displaying communication items;
   in response to detecting the input corresponding to the request to display the user interface for displaying communication items, displaying, via the one or more display generation components, the user interface for displaying communication items, including:
      in accordance with a determination that a set of one or more filtering criteria is met, displaying, via the one or more display generation components, a prompt to enable an unknown entity filter; and
   detecting, via the one or more input devices, an input corresponding to acceptance of the prompt; and
   in response to detecting the input corresponding to acceptance of the prompt, initiating a process for enabling the unknown entity filter.
30. The method of any of items 24-29, wherein the set of one or more entity criteria is not met in accordance with a determination that the first communication item is associated with an unknown entity that satisfies an exception condition.
31. The method of any of items 24-30, further comprising:
   while displaying a messaging user interface that includes a message conversation between a user associated with the computer system and a first participant that is different from the user associated with the computer system:
   in accordance with a determination that the set of one or more entity criteria is met, displaying, via the one or more display generation components, a second graphical element that when selected initiates a process for designating the first participant as a known entity; and
   in accordance with a determination that the set of one or more entity criteria is not met, displaying, via the one or more display generation components, the messaging user interface without displaying the second graphical element.
32. The method of item 31, further comprising:
   while displaying the messaging user interface:
   detecting, via the one or more input devices, a sequence of one or more inputs corresponding to a request to send a message in the message conversation to the first participant, wherein displaying the second graphical element in accordance with the determination that the set of one or more entity criteria is met is performed in response to detecting the sequence of one or more inputs corresponding to the request to send the message in the message conversation to the first participant.
33. The method of any of items 24-32, further comprising:
   while displaying, via the one or more display generation components, a message conversation that includes a user associated with the computer system, a first participant, and a second participant:
   receiving a message, in the message conversation, from the first participant; and
   in response to receiving the message from the first participant:
      displaying, via the one or more display generation components and in the message conversation, the message from the first participant; and
      in accordance with a determination that the first participant is an unknown entity, displaying, via the one or more display generation components and in the message conversation, a create-contact element that when selected initiates a process for creating a contact entry for the first participant.
34. The method of any of items 24-33, further comprising:
   while displaying, via the one or more display generation components, a message conversation between a user associated with the computer system and a first participant, wherein the message conversation includes a first message from the first participant that includes content of a first type:
   in accordance with a determination that the first participant is an unknown entity, displaying, via the one or more display generation components, a representation of the first message without displaying at least a portion of the content of the first type; and
   in accordance with a determination that the first participant is a known entity, displaying, via the one or more display generation components, the representation of the first message including displaying the portion of the content of the first type.
35. The method of any of items 24-34, further comprising:
   while displaying a communication item associated with a respective unknown entity:
   in accordance with a determination that the communication item associated with the respective unknown entity satisfies a set of one or more spam criteria, displaying, via the one or more display generation components:
   a delete element that when selected initiates a process for deleting the communication item associated with the respective unknown entity; and
   a not spam element that when selected initiates a process for designating the communication item associated with the respective unknown entity as not spam.
36. A non-transitory computer-readable storage medium storing one or more programs configured to be executed by one or more processors of a computer system that is in communication with one or more display generation components and one or more input devices, the one or more programs including instructions for performing the method of any of items 24-35.
37. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 24-35.
38. A computer system that is configured to communicate with one or more display generation components and one or more input devices, comprising:
   means for performing the method of any of items 24-35.
39. A computer program product, comprising one or more programs configured to be executed by one or more processors of a computer system that is in communication with one or more display generation components and one or more input devices, the one or more programs including instructions for performing the method of any of items 24-35.
40. A non-transitory computer-readable storage medium storing one or more programs configured to be executed by one or more processors of a computer system that is in communication with one or more display generation components and one or more input devices, the one or more programs including instructions for:
   detecting, via the one or more input devices, an input corresponding to a request to display a user interface for displaying communication items associated with a first type of entity; and
   in response to detecting the input corresponding to the request to display the user interface for displaying communication items associated with the first type of entity, displaying, via the one or more display generation components, the user interface for displaying communication items associated with the first type of entity, including:
      in accordance with a determination that a set of one or more entity criteria is met, displaying, via the one or more display generation components, a first communication item and a first graphical element that when selected initiates a process for designating an entity associated with the first communication item as a known entity; and
      in accordance with a determination that the set of one or more entity criteria is not met, displaying, via the one or more display generation components, the user interface for displaying communication items associated with the first type of entity without displaying the first communication item.
41. A computer system configured to communicate with one or more display generation components and one or more input devices, comprising:
   one or more processors; and
   memory storing one or more programs configured to be executed by the one or more processors, the one or more programs including instructions for:
      detecting, via the one or more input devices, an input corresponding to a request to display a user interface for displaying communication items associated with a first type of entity; and
      in response to detecting the input corresponding to the request to display the user interface for displaying communication items associated with the first type of entity, displaying, via the one or more display generation components, the user interface for displaying communication items associated with the first type of entity, including:
         in accordance with a determination that a set of one or more entity criteria is met, displaying, via the one or more display generation components, a first communication item and a first graphical element that when selected initiates a process for designating an entity associated with the first communication item as a known entity; and
         in accordance with a determination that the set of one or more entity criteria is not met, displaying, via the one or more display generation components, the user interface for displaying communication items associated with the first type of entity without displaying the first communication item.
42. A computer system configured to communicate with one or more display generation components and one or more input devices, comprising:
   means for, via the one or more input devices, an input corresponding to a request to display a user interface for displaying communication items associated with a first type of entity; and
   means for, in response to detecting the input corresponding to the request to display the user interface for displaying communication items associated with the first type of entity, displaying, via the one or more display generation components, the user interface for displaying communication items associated with the first type of entity, including:
      in accordance with a determination that a set of one or more entity criteria is met, displaying, via the one or more display generation components, a first communication item and a first graphical element that when selected initiates a process for designating an entity associated with the first communication item as a known entity; and
      in accordance with a determination that the set of one or more entity criteria is not met, displaying, via the one or more display generation components, the user interface for displaying communication items associated with the first type of entity without displaying the first communication item.
43. A computer program product, comprising one or more programs configured to be executed by one or more processors of a computer system that is in communication with one or more display generation components and one or more input devices, the one or more programs including instructions for:
   detecting, via the one or more input devices, an input corresponding to a request to display a user interface for displaying communication items associated with a first type of entity; and
   in response to detecting the input corresponding to the request to display the user interface for displaying communication items associated with the first type of entity, displaying, via the one or more display generation components, the user interface for displaying communication items associated with the first type of entity, including:
      in accordance with a determination that a set of one or more entity criteria is met, displaying, via the one or more display generation components, a first communication item and a first graphical element that when selected initiates a process for designating an entity associated with the first communication item as a known entity; and
      in accordance with a determination that the set of one or more entity criteria is not met, displaying, via the one or more display generation components, the user interface for displaying communication items associated with the first type of entity without displaying the first communication item.
44. A method, comprising:
   at a computer system that is in communication with one or more display generation components and one or more input devices:
   while the computer system is in a restricted mode of operation that limits a communication functionality of the computer system, detecting, via the one or more input devices, an input corresponding to a request to display a respective user interface that includes a communication item;
   in response to detecting the input corresponding to the request to display the respective user interface, displaying, via the one or more display generation components, the respective user interface, including:
      in accordance with a determination that the communication item does not correspond to a permitted contact, displaying, via the one or more display generation components, the communication item and a request element;
   while displaying the request element, detecting, via the one or more input devices, an input corresponding to selection of the request element; and
   in response to detecting the input corresponding to selection of the request element, initiating a process for sending a request to approve communication with an entity associated with the communication item.
45. The method of item 44, wherein displaying the respective user interface includes:
   in accordance with a determination that the communication item does not correspond to a permitted contact, displaying the communication item without displaying a preview of content of a communication associated with the communication item.
46. The method of any of items 44-45, wherein:
   the respective user interface includes a second communication item; and
   displaying the respective user interface includes:
      in accordance with a determination that the second communication item does not correspond to a permitted contact, displaying, via the one or more display generation components, the second communication item and a second request element that when selected initiates a process for sending a request to approve communication with an entity associated with the second communication item.
47. The method of any of items 44-46, wherein the process for sending the request to approve communication with an entity associated with the communication item includes sending a message with the request.
48. The method of any of items 44-47, wherein the request includes information that identifies the entity associated with the communication item with which communication is being requested.
49. The method of any of items 44-48, wherein the request includes information that identifies an application associated with the entity with which communication is being requested.
50. The method of any of items 44-49, wherein displaying the respective user interface includes:
   in accordance with a determination that the communication item does not correspond to a permitted contact, displaying, via the one or more display generation components, a preview element;
   while displaying the preview element, detecting, via the one or more input devices, an input corresponding to selection of the preview element; and
   in response to detecting the input corresponding to selection of the preview element, initiating a process for displaying a preview of content of the communication item.
51. The method of any of items 44-50, wherein:
   after the request is received at an external device, an approve element is displayed; and
   in response to selection of the approve element, the entity associated with the communication item is designated as a permitted contact.
52. The method of any of items 44-51, wherein:
   in accordance with a determination that the entity associated with the request corresponds to a contact entry associated with an approval entity, an indication is displayed that the request corresponds to a contact entry associated with the approval entity.
53. The method of any of items 44-52, wherein:
   in accordance with a determination that entity information associated with the entity associated with the request is identified, the entity information is displayed.
54. The method of any of items 44-53, further comprising:
   after the entity associated with the communication item is designated as a permitted contact with respect to an application associated with the communication item, wherein the application associated with the communication item is a first application of a first type of application:
   receiving a request to communicate, via a second application that is different from the first application, with the entity associated with the communication item; and
   in response to receiving the request to communicate with the entity associated with the communication item:
      in accordance with a determination that the second application is the first type of application, permitting the request to communicate with the entity.
55. The method of any of items 44-54, further comprising:
   after the entity associated with the communication item is designated as a permitted contact with respect to an application associated with the communication item, wherein the application associated with the communication item is a first application of a second type of application:
   receiving a request to communicate, via a second application that is different from the first application, with the entity associated with the communication item; and
   in response to receiving the request to communicate with the entity associated with the communication item:
      in accordance with a determination that the first application is the second application, permitting the request to communicate with the entity.
56. The method of any of items 44-55, wherein the communication item corresponds to a request to associate with a user account.
57. A non-transitory computer-readable storage medium storing one or more programs configured to be executed by one or more processors of a computer system that is in communication with one or more display generation components and one or more input devices, the one or more programs including instructions for performing the method of any of items 44-56.
58. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 44-56.
59. A computer system that is configured to communicate with one or more display generation components and one or more input devices, comprising:
   means for performing the method of any of items 44-56.
60. A computer program product, comprising one or more programs configured to be executed by one or more processors of a computer system that is in communication with one or more display generation components and one or more input devices, the one or more programs including instructions for performing the method of any of items 44-56.
61. A non-transitory computer-readable storage medium storing one or more programs configured to be executed by one or more processors of a computer system that is in communication with one or more display generation components and one or more input devices, the one or more programs including instructions for:
   while the computer system is in a restricted mode of operation that limits a communication functionality of the computer system, detecting, via the one or more input devices, an input corresponding to a request to display a respective user interface that includes a communication item;
   in response to detecting the input corresponding to the request to display the respective user interface, displaying, via the one or more display generation components, the respective user interface, including:
      in accordance with a determination that the communication item does not correspond to a permitted contact, displaying, via the one or more display generation components, the communication item and a request element;
   while displaying the request element, detecting, via the one or more input devices, an input corresponding to selection of the request element; and
   in response to detecting the input corresponding to selection of the request element, initiating a process for sending a request to approve communication with an entity associated with the communication item.
62. A computer system configured to communicate with one or more display generation components and one or more input devices, comprising:
   one or more processors; and
   memory storing one or more programs configured to be executed by the one or more processors, the one or more programs including instructions for:
      while the computer system is in a restricted mode of operation that limits a communication functionality of the computer system, detecting, via the one or more input devices, an input corresponding to a request to display a respective user interface that includes a communication item;
      in response to detecting the input corresponding to the request to display the respective user interface, displaying, via the one or more display generation components, the respective user interface, including:
         in accordance with a determination that the communication item does not correspond to a permitted contact, displaying, via the one or more display generation components, the communication item and a request element;
      while displaying the request element, detecting, via the one or more input devices, an input corresponding to selection of the request element; and
      in response to detecting the input corresponding to selection of the request element, initiating a process for sending a request to approve communication with an entity associated with the communication item.
63. A computer system configured to communicate with one or more display generation components and one or more input devices, comprising:
   means for, while the computer system is in a restricted mode of operation that limits a communication functionality of the computer system, detecting, via the one or more input devices, an input corresponding to a request to display a respective user interface that includes a communication item;
   means for, in response to detecting the input corresponding to the request to display the respective user interface, displaying, via the one or more display generation components, the respective user interface, including:
      in accordance with a determination that the communication item does not correspond to a permitted contact, displaying, via the one or more display generation components, the communication item and a request element;
   means for, while displaying the request element, detecting, via the one or more input devices, an input corresponding to selection of the request element; and
   means for, in response to detecting the input corresponding to selection of the request element, initiating a process for sending a request to approve communication with an entity associated with the communication item.
64. A computer program product, comprising one or more programs configured to be executed by one or more processors of a computer system that is in communication with one or more display generation components and one or more input devices, the one or more programs including instructions for:
   while the computer system is in a restricted mode of operation that limits a communication functionality of the computer system, detecting, via the one or more input devices, an input corresponding to a request to display a respective user interface that includes a communication item;
   in response to detecting the input corresponding to the request to display the respective user interface, displaying, via the one or more display generation components, the respective user interface, including:
      in accordance with a determination that the communication item does not correspond to a permitted contact, displaying, via the one or more display generation components, the communication item and a request element;
   while displaying the request element, detecting, via the one or more input devices, an input corresponding to selection of the request element; and
   in response to detecting the input corresponding to selection of the request element, initiating a process for sending a request to approve communication with an entity associated with the communication item.

## Claims

1. A method, comprising:
at a computer system that is in communication with one or more display generation components and one or more input devices:
receiving a call;
while the call is incoming:
in accordance with a determination that the call is associated with a first type of caller, displaying, via the one or more display generation components, an incoming call user interface, including displaying a first reply element that when selected initiates a process for providing an audio message to the caller in the call without answering the call; and
in accordance with a determination that the call is associated with a second type of caller that is different from the first type of caller, displaying, via the one or more display generation components, a call screening notification, wherein the call screening notification is displayed while a digital call assistant is active for the call;
while displaying the call screening notification, detecting, via the one or more input devices, an input corresponding to selection of the call screening notification; and
in response to detecting the input corresponding to selection of the call screening notification, displaying, via the one or more display generation components, a second reply element that when selected initiates a process for providing an audio message to the caller in the call without answering the call.

2. The method of claim 1, wherein:
displaying the incoming call user interface includes displaying, via the one or more display generation components, an accept call element that when selected connects the computer system to the call; and
displaying the call screening notification includes displaying the call screening notification without the accept call element.

3. The method of any of claims 1-2, further comprising:
in response to detecting the input corresponding to selection of the call screening notification, displaying, via the one or more display generation components, a call screening user interface that includes information about the digital call assistant.

4. The method of claim 3, wherein displaying the call screening user interface includes displaying screening status information that is based on a status of the digital call assistant.

5. The method of any of claims 3-4, further comprising:
while displaying the second reply element, detecting, via the one or more input devices, an input corresponding to selection of the second reply element; and
in response to detecting the input corresponding to selection of the second reply element, initiating the process for providing an audio message to the caller in the call without answering the call.

6. The method of any of claims 3-5, wherein displaying the call screening user interface includes displaying a description of an audio message provided in the call to the caller by the digital call assistant.

7. The method of any of claims 3-6, wherein displaying the call screening user interface includes displaying a description of audio from the caller.

8. The method of any of claims 1-7, further comprising:
while displaying the call screening notification, detecting, via the one or more input devices, a change in a status of the digital call assistant; and
in response to detecting the change in the status of the digital call assistant, updating display of the call screening notification based on the change in status of the digital call assistant.

9. The method of any of claims 1-8, further comprising:
while the call is incoming, in accordance with a determination that the call is associated with the second type of caller, forgoing output of a ringtone.

10. The method of claim 9, further comprising:
while the call is incoming and after forgoing output of a ringtone:
in accordance with a determination that a set of call screening criteria is met, outputting, via one or more output devices that are in communication with the computer system, a ringtone.

11. The method of any of claims 1-10, further comprising:
while displaying the incoming call user interface, including displaying the first reply element, detecting, via the one or more input devices, an input corresponding to selection of the first reply element; and
in response to detecting the input corresponding to selection of the first reply element, initiating the process for providing an audio message to the caller in the call without answering the call.

12. The method of claim 11, wherein the process for providing an audio message to the caller in the call without answering the call includes:
detecting, via the one or more input devices, a set of one or more inputs corresponding to a request to generate and send a message; and
in response to detecting the set of one or more inputs corresponding to the request to generate and send the message, providing, without answering the call, an audio message in the call based on the request to generate and send the message.

13. The method of any of claims 1-12, further comprising:
after receiving a respective call associated with the second type of caller for which the digital call assistant was active, displaying, via the one or more display generation components, a representation of the respective call in a list of representations of calls.

14. A computer-readable storage medium storing one or more programs configured to be executed by one or more processors of a computer system that is in communication with one or more display generation components and one or more input devices, the one or more programs including instructions for performing the method of any of claims 1-13.

15. A computer system that is configured to communicate with one or more display generation components and one or more input devices, the computer system comprising:
one or more processors; and
memory storing one or more programs configured to be executed by the one or more processors, the one or more programs including instructions for performing the method of any of claims 1-13.
